# EUROPEAN PATENT APPLICATION

(11) **EP 4 607 922 A1**
(43) Date of publication of application: **27.08.2025**
(21) Application number: 23884244.7
(22) Date of filing: 29.06.2023
(51) Int. Cl.: H04N 19/176

(54) **IMAGE CODING METHOD AND APPARATUS, AND IMAGE DECODING METHOD AND APPARATUS**

(30) Priority: 31.10.2022 CN 202211349108
(71) Applicant: Huawei Technologies Co., Ltd., Shenzhen, Guangdong 518129 (CN)
(72) Inventor: SONG, Yi, Shenzhen, Guangdong 518129 (CN); DI, Peiyun, Shenzhen, Guangdong 518129 (CN); CHEN, Jingping, Shenzhen, Guangdong 518129 (CN); YANG, Haitao, Shenzhen, Guangdong 518129 (CN); ZHANG, Yixuan, Shenzhen, Guangdong 518129 (CN)
(74) Representative: Goddar, Heinz J.
(86) International application number: PCT/CN2023/103637
(87) International publication number: WO 2024/093305

(57) **Abstract**

This application provides a picture encoding and decoding method and apparatus. The picture encoding method provided in this application includes: obtaining a to-be-processed picture block, where a dimension of the picture block is 2×2, and a chroma sampling rate of the picture block is higher than that of YUV4:2:0; obtaining a base layer picture block and an enhancement layer picture block based on the picture block, where a chroma sampling rate of the base layer picture block is lower than the chroma sampling rate of the picture block, and a pixel included in a first chroma component of the enhancement layer picture block does not overlap a pixel included in a first chroma component of the base layer picture block; performing encoding based on the base layer picture block to obtain a base layer bitstream; and performing encoding based on the enhancement layer picture block to obtain an enhancement layer bitstream. According to this application, a base layer can ensure normal display of a picture. In addition, a pixel of a chroma component of the base layer picture block does not overlap a pixel of a chroma component of the enhancement layer picture block, so that an amount of to-be-encoded data can be reduced, encoding efficiency can be improved, and a bitstream can be reduced.

## Description

This application claims priority to Chinese Patent Application No. 202211349108.2, filed with the China National Intellectual Property Administration on October 31, 2022 and entitled "PICTURE ENCODING AND DECODING METHOD AND APPARATUS", which is incorporated herein by reference in its entirety.

### TECHNICAL FIELD

This application relates to video encoding and decoding technologies, and in particular, to a picture encoding and decoding method and apparatus.

### BACKGROUND

Usually, a sampling rate of YUV4:2:0 is used for most pictures input to an encoder for encoding. A standard video codec based on YUV4:2:0 is widely used in various products, for example, a video application (application, APP), a mobile phone (chip), and a television (chip). A high-sampling-rate chroma component YUV usually is a chroma component sampling rate higher than that of YUV4:2:0, for example, YUV4:4:4 or YUV4:2:2.

Therefore, it is a common requirement to encode a high-sampling-rate chroma component YUV picture by using an existing standard video codec based on YUV4:2:0. In a related technology, a YUV 4:4:4 picture is downsampled to a YUV 4:2:0 picture, and the YUV 4:2:0 picture and all chroma components are encoded.

However, in an existing method, a large amount of data is encoded and decoded, resulting in high encoding and decoding complexity, high power consumption, a low speed, and occupation of a large amount of transmission bandwidth.

### SUMMARY

This application provides a picture encoding and decoding method and apparatus. Therefore, a base layer can ensure normal display of a picture. In addition, a pixel of a chroma component of a base layer picture block does not overlap a pixel of a chroma component of an enhancement layer picture block, so that an amount of to-be-encoded data can be reduced, encoding efficiency can be improved, and a bitstream can be reduced.

According to a first aspect, this application provides a picture encoding method, including: obtaining a to-be-processed picture block, where a dimension of the picture block is 2×2, and a chroma sampling rate of the picture block is higher than that of YUV4:2:0; obtaining a base layer picture block and an enhancement layer picture block based on the picture block, where a chroma sampling rate of the base layer picture block is lower than the chroma sampling rate of the picture block, and a pixel included in a first chroma component of the enhancement layer picture block does not overlap a pixel included in a first chroma component of the base layer picture block; performing encoding based on the base layer picture block to obtain a base layer bitstream; and performing encoding based on the enhancement layer picture block to obtain an enhancement layer bitstream.

In this embodiment of this application, the base layer picture block in a YUV4:2:0 format and the enhancement layer UV picture block are obtained based on the picture block with a high sampling rate, and base layer encoding and enhancement layer encoding are respectively performed on the base layer picture block and the enhancement layer UV picture block, so that the base layer bitstream can ensure normal display of a picture, and a combination of the base layer bitstream and the enhancement layer bitstream can adapt to network fluctuation, thereby improving transmission efficiency. In addition, a pixel of a chroma component of the base layer picture block does not overlap a pixel of a chroma component of the enhancement layer picture block, so that an amount of to-be-encoded data can be reduced, encoding efficiency can be improved, and a bitstream can be reduced.

The entire frame of picture may be any picture frame in a picture sequence included in a video being processed by an encoder. The picture frame is not split, and a dimension of the picture frame is a dimension of a complete picture frame. In the H.265 standard, before video encoding is performed, an original picture frame is split into a plurality of coding tree units (coding tree units, CTUs). The CTU is a largest coding unit for video encoding, and may be split into CUs of different dimensions in a quad-tree manner. The CTU, as the largest coding unit, is also referred to as an LCU. Alternatively, the picture block may be an entire frame of picture. Alternatively, the picture block may be a region of interest (region of interest, ROI) in an entire frame of picture, that is, a picture region that needs to be processed and that is specified in the picture.

In this embodiment of this application, the to-be-processed picture block may be a picture block with a dimension of 2×2. In other words, after the picture block in the foregoing video coding technology is further split, a plurality of picture blocks with a dimension of 2×2 may be obtained. In this embodiment of this application, any 2×2 picture block may be used as the to-be-processed picture block, to perform chroma component processing.

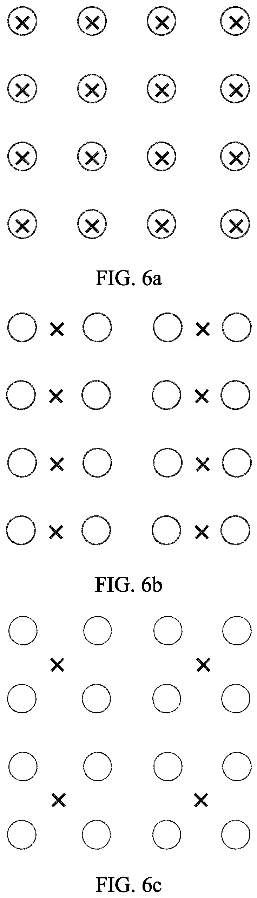

In addition, the chroma sampling rate of the to-be-processed picture block in this embodiment of this application is higher than that of YUV4:2:0. For example, a sampling format of the picture block is YUV4:4:4 (refer to FIG. 6a) or YUV4:2:2 (refer to FIG. 6b). To be specific, the to-be-processed picture block includes a luma component, a first chroma component, and a second chroma component. The luma component includes four pixels, and the first chroma component and the second chroma component each include four or two pixels. It should be noted that the to-be-processed picture block in this embodiment of this application may alternatively be in another sampling format, for example, YCbCr. This is not specifically limited.

For ease of description, in this specification, an upper left pixel, an upper right pixel, a lower left pixel, and a lower right pixel of a picture block are sequentially numbered 0, 1, 2, and 3. However, it should be understood that the numbers are merely used as an example, and do not constitute a limitation on locations of the pixels.

The chroma sampling rate of the base layer picture block is lower than the chroma sampling rate of the picture block. For example, a sampling format of the base layer picture block is YUV4:2:0 (refer to FIG. 6c) or YUV4:2:2 (refer to FIG. 6b). To be specific, the base layer picture block includes a luma component, a first chroma component, and a second chroma component, and sampling rates of the three components are different. The luma component includes four pixels, and the first chroma component and the second chroma component each include one or two pixels.

The pixel included in the first chroma component of the enhancement layer picture block does not overlap the pixel included in the first chroma component of the base layer picture block, and a pixel included in a second chroma component of the enhancement layer picture block does not overlap a pixel included in a second chroma component of the base layer picture block. The foregoing no overlapping may be understood as that, in the first chroma component of the to-be-processed picture block, the pixel in the first chroma component of the base layer picture block and the pixel in the first chroma component of the enhancement layer picture block are located at different locations; and a sum of resolution of the first chroma component of the base layer picture block and resolution of the first chroma component of the enhancement layer picture block does not exceed resolution of the first chroma component of the to-be-processed picture block. In other words, the pixel in the first chroma component of the base layer picture block and the pixel in the first chroma component of the enhancement layer picture block are respectively obtained from pixels at different locations in the first chroma component of the to-be-processed picture block, or are respectively obtained by performing weighting on pixels at different locations in the first chroma component of the to-be-processed picture block. For example, a location of the pixel in the first chroma component of the base layer picture block is a location of the pixel 0; and a location of the pixel in the first chroma component of the enhancement layer picture block is a location of the pixel 3. Therefore, in this embodiment of this application, the pixel included in the first chroma component of the enhancement layer picture block does not overlap the pixel included in the first chroma component of the base layer picture block.

In addition, the sum of the resolution of the first chroma component of the base layer picture block and the resolution of the first chroma component of the enhancement layer picture block does not exceed the resolution of the first chroma component of the to-be-processed picture block. For example, the resolution of the first chroma component of the to-be-processed picture block is 2×2. If the resolution of the first chroma component of the base layer picture block is 2×1, the resolution of the first chroma component of the enhancement layer picture block may be 2×1 or 1×1. If the resolution of the first chroma component of the base layer picture block is 1×1, the resolution of the first chroma component of the enhancement layer picture block may be 3×1, 2×1, or 1×1. In this way, the sum of the resolution of the first chroma component of the base layer picture block and the resolution of the first chroma component of the enhancement layer picture block is 2×2 at most, and does not exceed the resolution of the first chroma component of the to-be-processed picture block. This can reduce an amount of to-be-encoded data, improve encoding efficiency, and reduce a bitstream.

For ease of description, the following uses the first chroma component as an example to describe a processing process of a chroma component of the picture block. It may be understood that, for a processing process of the second chroma component, refer to this. The first chroma component is a component U, and the second chroma component is a component V; or the first chroma component is a component V, and the second chroma component is a component U.

In this embodiment of this application, the base layer picture block and the enhancement layer picture block may be obtained by using the following several methods.

Method 1: Downsample the chroma component of the picture block to obtain a first picture block, where a sampling format of the first picture block is YUV4:2:0, and a first pixel in a first chroma component of the first picture block is obtained from a second pixel in four pixels included in the first chroma component of the picture block; and split the chroma component of the picture block to obtain a first UV picture block, where the first UV picture block is one of a UV33 picture block, a UV22 picture block, and a UV11 picture block. In this case, the base layer picture block includes the first picture block, and the enhancement layer picture block includes the first UV picture block.

In a possible implementation, the second pixel is a pixel at a preset location. For example, the second pixel may be the pixel 0 or the pixel 3 in the four pixels included in the first chroma component of the picture block.

In this case, a chroma value of the first pixel is a chroma value of the second pixel, that is, the chroma value of the second pixel is directly assigned to the first pixel. Alternatively, a chroma value of the first pixel is an average value of chroma values of the four pixels, that is, the average value of the chroma values of the four pixels included in the first chroma component of the picture block is calculated, and the average value is assigned to the first pixel.

The chroma component of the picture block is split to obtain a first UV picture block. The first UV picture block may be one of a UV33 picture block, a UV22 picture block, and a UV11 picture block. Therefore, there may be the following several cases:
Case 1: When the first UV picture block is the UV33 picture block, the first UV picture block may be split to obtain a second UV picture block and a third UV picture block. The second UV picture block is a UV11 picture block, and the third UV picture block is a UV22 picture block. In this case, the enhancement layer picture block includes the second UV picture block as a picture block of a first-layer enhancement layer and the third UV picture block as a picture block of a second-layer enhancement layer.
Case 2: When the first UV picture block is the UV33 picture block, the first UV picture block may be split to obtain a second UV picture block and a third UV picture block. The second UV picture block is a UV11 picture block, and the third UV picture block is a UV22 picture block. The third UV picture block is split to obtain a fourth UV picture block and a fifth UV picture block. Both the fourth UV picture block and the fifth UV picture block are UV11 picture blocks. In this case, the enhancement layer picture block includes the second UV picture block as a picture block of a first-layer enhancement layer, the fourth UV picture block as a picture block of a second-layer enhancement layer, and the fifth UV picture block as a picture block of a third-layer enhancement layer.
Case 3: When the first UV picture block is the UV22 picture block, the first UV picture block is split to obtain a sixth UV picture block and a seventh UV picture block. In this case, the enhancement layer picture block includes the sixth UV picture block as a picture block of a first-layer enhancement layer and the seventh UV picture block as a picture block of a second-layer enhancement layer.

Method 2: Downsample the chroma component of the picture block to obtain a second picture block, where a sampling format of the second picture block is YUV4:2:2, and a third pixel and a fourth pixel in a first chroma component of the second picture block are obtained from a fifth pixel and a sixth pixel in the four pixels included in the first chroma component of the picture block; and split a chroma component of the second picture block to obtain a third picture block and an eighth UV picture block, where a sampling format of the third picture block is YUV4:2:0, and the eighth UV picture block is a UV11 picture block. In this case, the base layer picture block includes the third picture block, and the enhancement layer picture block includes the eighth UV picture block.

In a possible implementation, the fifth pixel and the sixth pixel are two pixels at preset locations in different rows. For example, the fifth pixel and the sixth pixel may be the pixel 0 and the pixel 3, or the pixel 1 and the pixel 2, or the pixel 0 and the pixel 2 in the four pixels included in the first chroma component of the picture block.

In a possible implementation, the fifth pixel and the sixth pixel are two pixels with a largest chroma value difference in the four pixels. For example, chroma value differences between every two of the four pixels included in the first chroma component of the picture block are calculated to obtain absolute values of six differences, a largest value in the absolute values of the six differences is determined, and two pixels with the largest value are determined as the fifth pixel and the sixth pixel.

Method 3: Splice a luma component of the picture block with each of the UV11 picture blocks obtained in Method 1 and Method 2, to obtain picture blocks in the YUV4:2:0 format, and then perform encoding by using the picture block as an enhancement layer. The following several cases may be included:
Case 1: Splice the luma component of the picture block with each of the second UV picture block, the fourth UV picture block, and the fifth UV picture block to obtain a fourth picture block, a fifth picture block, and a sixth picture block, where sampling formats of the fourth picture block, the fifth picture block, and the sixth picture block are all YUV4:2:0. In this case, the enhancement layer picture block includes the fourth picture block as the picture block of the first-layer enhancement layer, the fifth picture block as the picture block of the second-layer enhancement layer, and the sixth picture block as the picture block of the third-layer enhancement layer.
Case 2: Splice the luma component of the picture block with each of the sixth UV picture block and the seventh UV picture block to obtain a seventh picture block and an eighth picture block, where sampling formats of the seventh picture block and the eighth picture block are both YUV4:2:0. In this case, the enhancement layer picture block includes the seventh picture block as the picture block of the first-layer enhancement layer and the eighth picture block as the picture block of the second-layer enhancement layer.
Case 3: Splice the luma component of the picture block with the eighth UV picture block to obtain a ninth picture block, where a sampling format of the ninth picture block is YUV4:2:0. In this case, the enhancement layer picture block includes the ninth picture block.

In this way, an encoder side may encode both the base layer picture block and the enhancement layer picture block via a YUV4:2:0 encoder, to improve encoding efficiency. In addition, a luma component in the picture block may be subtracted for residual calculated in an encoding process, to reduce an amount of encoded data.

Method 4: Downsample the chroma component of the picture block to obtain the base layer picture block, where the sampling format of the base layer picture block is YUV4:2:2; and split the chroma component of the picture block to obtain the enhancement layer picture block, where the enhancement layer picture block is either a UV22 picture block or a UV11 picture block.

A base layer encoder performs an encoding operation on the input base layer picture block to obtain a base layer compressed bitstream, a base layer reconstructed block, and base layer encoding information. The base layer encoding information includes information such as a block split manner of the base layer picture block, and an encoding mode and a motion vector of each picture block. In this embodiment of this application, the base layer picture block may be encoded in the foregoing plurality of/picture encoding manners. This is not specifically limited.

The base layer encoder may obtain a base layer prediction block, calculate a difference between a corresponding pixel in the base layer picture block and a corresponding pixel in the base layer prediction block to obtain a base layer residual, split the base layer residual, perform transform and quantization, and perform entropy encoding on encoding control information, prediction information, motion information, and the like of the base layer together, to obtain the base layer bitstream. In addition, the base layer encoder may further perform inverse quantization and inverse transform on a quantized quantization coefficient to obtain a base layer reconstructed residual, and then sum up a corresponding pixel in the base layer prediction block and a corresponding pixel the base layer reconstructed residual, to obtain the base layer reconstructed block.

In this embodiment of this application, the encoder side may obtain the base layer reconstructed block and/or the base layer encoding information that correspond/corresponds to the base layer picture block, predicts the enhancement layer picture block based on the base layer reconstructed block and/or the base layer encoding information to obtain an enhancement layer residual, and performs encoding based on the enhancement layer residual to obtain the enhancement layer bitstream.

In a possible implementation, in this embodiment of this application, phase sampling information may be obtained, where the phase sampling information includes information indicating a location of the fifth pixel and a location of the sixth pixel; and then the phase sampling information is encoded.

In the foregoing embodiment, after the location of the fifth pixel and the sixth pixel are determined, a decoder side may be notified of the locations of the two pixels based on the phase sampling information. The phase sampling information may include an identifier of a phase sampling mode, for example, a mode 0 (representing that the location of the fifth pixel and the location of the sixth pixel are in the pixels 0 and 3), a mode 1 (representing that the location of the fifth pixel and the location of the sixth pixel are in the pixels 0 and 1), and a mode 2 (representing that the location of the fifth pixel and the location of the sixth pixel are in the pixels 1 and 2). The phase sampling information may alternatively include pixel codes that correspond to the location of the fifth pixel and the sixth pixel, for example, the pixels 0 and 3, or the pixels 1 and 2. An implementation of the phase sampling information is not specifically limited in embodiments of this application.

In this embodiment of this application, the phase sampling information may be encoded, written into a bitstream, and transmitted to the decoder side. Alternatively, the phase sampling information may be written into a file and transmitted to the decoder side. In addition, the phase sampling information may be transmitted to the decoder side in another manner. This is not specifically limited.

According to a second aspect, this application provides a picture decoding method, including: obtaining a base layer bitstream and an enhancement layer bitstream; parsing the base layer bitstream to obtain a base layer reconstructed block, where a dimension of the base layer reconstructed block is 2×2, and a chroma sampling rate of the base layer reconstructed block is higher than or equal to that of YUV4:2:0; parsing the enhancement layer bitstream to obtain an enhancement layer reconstructed block, where a pixel included in a first chroma component of the enhancement layer reconstructed block does not overlap a pixel included in a first chroma component of the base layer reconstructed block, and the pixel included in the first chroma component of the enhancement layer reconstructed block does not overlap the pixel included in the first chroma component of the base layer reconstructed block; and obtaining a target reconstructed block based on the base layer reconstructed block and the enhancement layer reconstructed block, where a chroma sampling rate of the target reconstructed block is higher than the chroma sampling rate of the base layer picture block.

The dimension of the base layer reconstructed block is 2×2, and the chroma sampling rate of the base layer reconstructed block is higher than or equal to that of YUV4:2:0. For example, a sampling format of the base layer reconstructed block is YUV4:2:2 (refer to FIG. 6b)/YUV4:2:0 (refer to FIG. 6c). To be specific, the base layer reconstructed block includes a luma component, the first chroma component, and a second chroma component, and sampling rates of the three components are different. The luma component includes four pixels, and the first chroma component and the second chroma component each include two or one pixel.

In this embodiment of this application, the base layer bitstream may be decoded by using a standard video decoding technology, or the base layer bitstream may be decoded by using another existing or future decoding technology. This is not specifically limited.

A decoder side may perform decoding by using a decoder corresponding to an encoder used by an encoder side. Therefore, the sampling format of the base layer reconstructed block obtained by decoding the base layer bitstream is YUV4:2:2/YUV4:2:0. As shown on the encoder side, chroma values of the pixels of the first chroma component and the second chroma component of the base layer reconstructed block may be obtained through filtering. In this way, the base layer reconstructed block may achieve subjective effect and encoding compression efficiency that are similar to those of a common YUV4:2:2/YUV4:2:0 picture block, and display effect of a picture can still be ensured even if the decoder side does not receive the enhancement layer bitstream.

The pixel included in the first chroma component of the enhancement layer reconstructed block does not overlap the pixel included in the first chroma component of the base layer reconstructed block.

Optionally, decoding guidance and reference may be performed with reference to decoding information of a base layer and the base layer reconstructed block during decoding of the enhancement layer bitstream. For example, a chroma component of the base layer reconstructed block may be used as a prediction reference, and a block split mode of the chroma component of the base layer reconstructed block may be used to guide block splitting.

Optionally, the enhancement layer bitstream may be decoded without reference to the decoding information of the base layer reconstructed block and the base layer reconstructed block.

In this embodiment of this application, an existing standard decoder or a non-standard decoder may be used for a decoding manner of the enhancement layer bitstream. This is not limited herein.

The chroma sampling rate of the target reconstructed block is higher than the chroma sampling rate of the base layer picture block, for example, is that of YUV4:2:2 or YUV4:4:4. The following uses the target reconstructed block in a YUV4:4:4 sampling format as an example for description.

In this embodiment of this application, the target reconstructed block may be obtained by using the following several methods.

Method 1: Splice the chroma component of the base layer reconstructed block with the enhancement layer reconstructed block to obtain the target reconstructed block, where a first pixel in a first chroma component of the target reconstructed block is obtained based on a second pixel in the first chroma component of the base layer reconstructed block, and the sampling format of the base layer reconstructed block is YUV4:2:0.

In a possible implementation, a location of the first pixel is preset. In this case, a chroma value of the first pixel is a chroma value of the second pixel; or a chroma value of the first pixel is obtained by performing inverse average calculation based on a chroma value of the second pixel.

Method 2: Splice the chroma component of the base layer reconstructed block with the enhancement layer reconstructed block to obtain a first reconstructed block, where a sampling format of the first reconstructed block is YUV4:2:2; and upsample a chroma component of the first reconstructed block to obtain the target reconstructed block, where a third pixel and a fourth pixel in a first chroma component of the target reconstructed block are obtained based on a fifth pixel and a sixth pixel in a first chroma component of the first reconstructed block, and the sampling format of the base layer reconstructed block is YUV4:2:0.

In a possible implementation, the third pixel and the fourth pixel are two pixels at preset locations in different rows.

In a possible implementation, decoding is performed to obtain phase sampling information, where the phase sampling information includes information indicating a location of the third pixel and a location of the fourth pixel; and the third pixel and the fourth pixel are determined based on the phase sampling information.

Method 3: Obtain a chroma component of the enhancement layer reconstructed block; and splice the chroma component of the base layer reconstructed block with the chroma component of the enhancement layer reconstructed block to obtain the target reconstructed block, where a seventh pixel in a first chroma component of the target reconstructed block is obtained based on an eighth pixel in the first chroma component of the base layer reconstructed block, and the sampling format of the base layer reconstructed block is YUV4:2:0.

Method 4: Obtain a chroma component of the enhancement layer reconstructed block; splice the chroma component of the base layer reconstructed block with the chroma component of the enhancement layer reconstructed block to obtain a second reconstructed block, where a sampling format of the second reconstructed block is YUV4:2:2; and upsample a chroma component of the second reconstructed block to obtain the target reconstructed block, where a ninth pixel and a tenth pixel in a first chroma component of the target reconstructed block are obtained based on an eleventh pixel and a twelfth pixel in a first chroma component of the first reconstructed block, and the sampling format of the base layer reconstructed block is YUV4:2:0.

Method 5: Splice the chroma component of the base layer reconstructed block with the enhancement layer reconstructed block to obtain the target reconstructed block, where the sampling format of the base layer reconstructed block is YUV4:2:2, and the enhancement layer picture block is either a UV22 reconstructed block or a UV11 reconstructed block.

According to a third aspect, this application provides an encoding apparatus, including: an obtaining module, configured to obtain a to-be-processed picture block, where a dimension of the picture block is 2×2, and a chroma sampling rate of the picture block is higher than that of YUV4:2:0; a processing module, configured to obtain a base layer picture block and an enhancement layer picture block based on the picture block, where a chroma sampling rate of the base layer picture block is lower than the chroma sampling rate of the picture block, and a pixel included in a first chroma component of the enhancement layer picture block does not overlap a pixel included in a first chroma component of the base layer picture block; a base layer encoding module, configured to perform encoding based on the base layer picture block to obtain a base layer bitstream; and an enhancement layer encoding module, configured to perform encoding based on the enhancement layer picture block to obtain an enhancement layer bitstream.

In a possible implementation, the processing module is specifically configured to: downsample a chroma component of the picture block to obtain a first picture block, where a sampling format of the first picture block is YUV4:2:0, and a first pixel in a first chroma component of the first picture block is obtained from a second pixel in four pixels included in a first chroma component of the picture block; and split the chroma component of the picture block to obtain a first UV picture block, where the first UV picture block is one of a UV33 picture block, a UV22 picture block, and a UV11 picture block; and
in this case, the base layer picture block includes the first picture block, and the enhancement layer picture block includes the first UV picture block.

In a possible implementation, the second pixel is a pixel at a preset location; and a chroma value of the first pixel is a chroma value of the second pixel; or a chroma value of the first pixel is an average value of chroma values of the four pixels.

In a possible implementation, the processing module is further configured to: when the first UV picture block is the UV33 picture block, split the first UV picture block to obtain a second UV picture block and a third UV picture block, where the second UV picture block is a UV11 picture block, and the third UV picture block is a UV22 picture block; and
in this case, the enhancement layer picture block includes the second UV picture block as a picture block of a first-layer enhancement layer and the third UV picture block as a picture block of a second-layer enhancement layer.

In a possible implementation, the processing module is further configured to split the third UV picture block to obtain a fourth UV picture block and a fifth UV picture block, where both the fourth UV picture block and the fifth UV picture block are UV11 picture blocks; and
in this case, the enhancement layer picture block includes the second UV picture block as the picture block of the first-layer enhancement layer, the fourth UV picture block as the picture block of the second-layer enhancement layer, and the fifth UV picture block as a picture block of a third-layer enhancement layer.

In a possible implementation, the processing module is further configured to: when the first UV picture block is the UV22 picture block, split the first UV picture block to obtain a sixth UV picture block and a seventh UV picture block, where
in this case, the enhancement layer picture block includes the sixth UV picture block as a picture block of a first-layer enhancement layer and the seventh UV picture block as a picture block of a second-layer enhancement layer.

In a possible implementation, the processing module is specifically configured to: downsample a chroma component of the picture block to obtain a second picture block, where a sampling format of the second picture block is YUV4:2:2, and a third pixel and a fourth pixel in a first chroma component of the second picture block are obtained from a fifth pixel and a sixth pixel in four pixels included in a first chroma component of the picture block; and split a chroma component of the second picture block to obtain a third picture block and an eighth UV picture block, where a sampling format of the third picture block is YUV4:2:0, and the eighth UV picture block is a UV11 picture block; and
in this case, the base layer picture block includes the third picture block, and the enhancement layer picture block includes the eighth UV picture block.

In a possible implementation, the fifth pixel and the sixth pixel are two pixels at preset locations in different rows; or the fifth pixel and the sixth pixel are two pixels with a largest chroma value difference in the four pixels.

In a possible implementation, a chroma value of the third pixel is a chroma value of the fifth pixel; or a chroma value of the third pixel is a weighted average value of chroma values of two pixels in a same row as the fifth pixel; or a chroma value of the third pixel is a weighted average value of a chroma value of the fifth pixel and a chroma value of the sixth pixel; and a chroma value of the fourth pixel is the chroma value of the sixth pixel; or a chroma value of the fourth pixel is a weighted average value of chroma values of two pixels in a same row as the sixth pixel.

In a possible implementation, the processing module is further configured to splice a luma component of the picture block with each of the second UV picture block, the fourth UV picture block, and the fifth UV picture block to obtain a fourth picture block, a fifth picture block, and a sixth picture block, where sampling formats of the fourth picture block, the fifth picture block, and the sixth picture block are all YUV4:2:0; and
in this case, the enhancement layer picture block includes the fourth picture block as the picture block of the first-layer enhancement layer, the fifth picture block as the picture block of the second-layer enhancement layer, and the sixth picture block as the picture block of the third-layer enhancement layer.

In a possible implementation, the processing module is further configured to splice a luma component of the picture block with each of the sixth UV picture block and the seventh UV picture block to obtain a seventh picture block and an eighth picture block, where sampling formats of the seventh picture block and the eighth picture block are both YUV4:2:0; and
in this case, the enhancement layer picture block includes the seventh picture block as the picture block of the first-layer enhancement layer and the eighth picture block as the picture block of the second-layer enhancement layer.

In a possible implementation, the processing module is further configured to splice a luma component of the picture block with the eighth UV picture block to obtain a ninth picture block, where a sampling format of the ninth picture block is YUV4:2:0; and
in this case, the enhancement layer picture block includes the ninth picture block.

In a possible implementation, a sampling format of the base layer picture block is YUV4:2:2, and the enhancement layer picture block is either a UV22 picture block or a UV11 picture block.

In a possible implementation, the enhancement layer encoding module is specifically configured to: obtain a base layer reconstructed block and/or base layer encoding information that correspond/corresponds to the base layer picture block; predict the enhancement layer picture block based on the base layer reconstructed block and/or the base layer encoding information to obtain an enhancement layer residual; and perform encoding based on the enhancement layer residual to obtain the enhancement layer bitstream.

In a possible implementation, the base layer encoding module is further configured to: obtain phase sampling information, where the phase sampling information includes information indicating a location of the fifth pixel and a location of the sixth pixel; and encode the phase sampling information.

In a possible implementation, a pixel included in a second chroma component of the enhancement layer picture block does not overlap a pixel included in a second chroma component of the base layer picture block.

In a possible implementation, the first chroma component is a component U, and the second chroma component is a component V; or the first chroma component is a component V, and the second chroma component is a component U.

According to a fourth aspect, this application provides a decoding apparatus, including: an obtaining module, configured to obtain a base layer bitstream and an enhancement layer bitstream; a base layer decoding module, configured to parse the base layer bitstream to obtain a base layer reconstructed block, where a dimension of the base layer reconstructed block is 2×2, and a chroma sampling rate of the base layer reconstructed block is higher than or equal to that of YUV4:2:0; an enhancement layer decoding module, configured to parse the enhancement layer bitstream to obtain an enhancement layer reconstructed block, where a pixel included in a first chroma component of the enhancement layer reconstructed block does not overlap a pixel included in a first chroma component of the base layer reconstructed block, and the pixel included in the first chroma component of the enhancement layer reconstructed block does not overlap the pixel included in the first chroma component of the base layer reconstructed block; and a processing module, configured to obtain a target reconstructed block based on the base layer reconstructed block and the enhancement layer reconstructed block, where a chroma sampling rate of the target reconstructed block is higher than the chroma sampling rate of the base layer picture block.

In a possible implementation, the processing module is specifically configured to splice a chroma component of the base layer reconstructed block with the enhancement layer reconstructed block to obtain the target reconstructed block, where a first pixel in a first chroma component of the target reconstructed block is obtained based on a second pixel in the first chroma component of the base layer reconstructed block, and a sampling format of the base layer reconstructed block is YUV4:2:0.

In a possible implementation, a location of the first pixel is preset; and a chroma value of the first pixel is a chroma value of the second pixel; or a chroma value of the first pixel is obtained by performing inverse average calculation based on a chroma value of the second pixel.

In a possible implementation, the enhancement layer reconstructed block is a UV33 reconstructed block; or the enhancement layer reconstructed block includes a UV11 reconstructed block as a reconstructed block of a first enhancement layer and a UV22 reconstructed block as a reconstructed block of a second enhancement layer; or the enhancement layer reconstructed block includes a UV11 reconstructed block as a reconstructed block of a first enhancement layer, a UV11 reconstructed block as a reconstructed block of a second enhancement layer, and a UV11 reconstructed block as a reconstructed block of a third enhancement layer.

In a possible implementation, the processing module is specifically configured to: splice a chroma component of the base layer reconstructed block with the enhancement layer reconstructed block to obtain a first reconstructed block, where a sampling format of the first reconstructed block is YUV4:2:2, and a sampling format of the base layer reconstructed block is YUV4:2:0; and upsample a chroma component of the first reconstructed block to obtain the target reconstructed block, where a third pixel and a fourth pixel in a first chroma component of the target reconstructed block are obtained based on a fifth pixel and a sixth pixel in a first chroma component of the first reconstructed block.

In a possible implementation, the third pixel and the fourth pixel are two pixels at preset locations in different rows.

In a possible implementation, the base layer decoding module is further configured to perform decoding to obtain phase sampling information, where the phase sampling information includes information indicating a location of the third pixel and a location of the fourth pixel; and the processing module is further configured to determine the third pixel and the fourth pixel based on the phase sampling information.

In a possible implementation, a chroma value of the third pixel is a chroma value of the fifth pixel; or a chroma value of the third pixel is a deweighted average value of a chroma value of the fifth pixel and a chroma value of another pixel in a same row as the fifth pixel; or a chroma value of the third pixel is a deweighted average value of a chroma value of the fifth pixel and a chroma value of the sixth pixel; and a chroma value of the fourth pixel is the chroma value of the sixth pixel; or a chroma value of the fourth pixel is a deweighted average value of the chroma value of the sixth pixel and a chroma value of another pixel in a same row as the sixth pixel.

In a possible implementation, the processing module is specifically configured to obtain a chroma component of the enhancement layer reconstructed block; and splice a chroma component of the base layer reconstructed block with the chroma component of the enhancement layer reconstructed block to obtain the target reconstructed block, where a seventh pixel in a first chroma component of the target reconstructed block is obtained based on an eighth pixel in the first chroma component of the base layer reconstructed block, and a sampling format of the base layer reconstructed block is YUV4:2:0.

In a possible implementation, the processing module is specifically configured to: obtain a chroma component of the enhancement layer reconstructed block; and splice a chroma component of the base layer reconstructed block with the chroma component of the enhancement layer reconstructed block to obtain a second reconstructed block, where a sampling format of the second reconstructed block is YUV4:2:2, and a sampling format of the base layer reconstructed block is YUV4:2:0; and upsample a chroma component of the second reconstructed block to obtain the target reconstructed block, where a ninth pixel and a tenth pixel in a first chroma component of the target reconstructed block are obtained based on an eleventh pixel and a twelfth pixel in a first chroma component of the first reconstructed block.

In a possible implementation, a sampling format of the base layer reconstructed block is YUV4:2:2, and the enhancement layer picture block is either a UV22 reconstructed block or a UV11 reconstructed block.

In a possible implementation, a pixel included in a second chroma component of the enhancement layer picture block does not overlap a pixel included in a second chroma component of the base layer picture block.

In a possible implementation, the first chroma component is a component U, and the second chroma component is a component V; or the first chroma component is a component V, and the second chroma component is a component U.

According to a fifth aspect, this application provides an encoder, including: one or more processors; and a non-transitory computer-readable storage medium coupled to the processor and storing a program executed by the processor. When the program is executed by the processor, the encoder is enabled to perform the method according to any one of the first aspect.

According to a sixth aspect, this application provides a decoder, including: one or more processors; and a non-transitory computer-readable storage medium coupled to the processor and storing a program executed by the processor. When the program is executed by the processor, the decoder is enabled to perform the method according to any one of the second aspect.

According to a seventh aspect, this application provides a non-transitory computer-readable storage medium, including program code. The program code is executed by a computer device, to perform the method according to any one of the first aspect and the second aspect.

According to an eighth aspect, this application provides a non-transitory storage medium, including a bitstream coded by using the method according to any one of the first aspect and second aspect.

According to a ninth aspect, this application provides a coding system, including an encoder and a decoder. The encoder may be the encoder according to the fifth aspect, and the decoder may be the decoder according to the sixth aspect.

### BRIEF DESCRIPTION OF DRAWINGS

FIG. 1A is an example block diagram of a coding system 10 according to an embodiment of this application;
FIG. 1B is an example block diagram of a video coding system 40 according to an embodiment of this application;
FIG. 2 is an example block diagram of a video encoder 20 according to an embodiment of this application;
FIG. 3 is an example block diagram of a video decoder 30 according to an embodiment of this application;
FIG. 4 is an example block diagram of a video coding device 400 according to an embodiment of this application;
FIG. 5 is a diagram of an example of a level of scalable video coding according to this application;
FIG. 6a to FIG. 6c are diagrams of common sampling formats of pictures in YUV formats;
FIG. 7a and FIG. 7b are diagrams of phases;
FIG. 8A and FIG. 8B are an example block diagram of a picture encoding and decoding architecture according to an embodiment of this application;
FIG. 9 is a flowchart of a process 900 of a picture encoding method according to this application;
FIG. 10 is an example flowchart of a picture decoding method according to this application;
FIG. 11a is a diagram of an encoding framework;
FIG. 11b is a diagram of a decoding framework;
FIG. 12a is a diagram of an encoding framework;
FIG. 12b is a diagram of a decoding framework;
FIG. 13a is a diagram of an encoding framework;
FIG. 13b is a diagram of a decoding framework;
FIG. 14 is a diagram of adaptive chroma phase point sampling;
FIG. 15a is a diagram of an encoding framework;
FIG. 15b is a diagram of a decoding framework;
FIG. 16a is a diagram of an encoding framework;
FIG. 16b is a diagram of a decoding framework;
FIG. 17a shows a temporal domain structure of video chroma scalable coding based on a YUV4:4:4 picture in Embodiment 1;
FIG. 17b shows a temporal domain structure of video chroma scalable coding based on a YUV4:4:4 picture in Embodiment 2 and Embodiment 3;
FIG. 17c shows a temporal domain structure of video chroma scalable coding based on a YUV4:4:4 picture in Embodiment 4;
FIG. 17d shows a temporal domain structure of video chroma scalable coding based on a YUV4:4:4 picture in Embodiment 5 (UV11 pictures of three layers);
FIG. 17e shows a temporal domain structure of video chroma scalable coding based on a YUV4:4:4 picture in Embodiment 5 (UV11 pictures of two layers);
FIG. 18 is a diagram of a structure of an encoding apparatus 1800 according to an embodiment of this application; and
FIG. 19 is a diagram of a structure of a decoding apparatus 1900 according to an embodiment of this application.

### DESCRIPTION OF EMBODIMENTS

To make objectives, technical solutions, and advantages of this application clearer, the following clearly and completely describes the technical solutions in this application with reference to accompanying drawings in this application. It is clear that the described embodiments are merely a part rather than all of embodiments of this application. All other embodiments obtained by a person of ordinary skill in the art based on embodiments of this application without creative efforts shall fall within the protection scope of this application.

In the specification, embodiments, claims, and accompanying drawings of this application, terms such as "first" and "second" are merely intended for distinguishing and description, and shall not be understood as indicating or implying relative importance, or indicating or implying a sequence. In addition, terms "include", "have", and any variant thereof are intended to cover non-exclusive inclusion, for example, include a series of steps or units. A method, system, product, or device is not necessarily limited to those steps or units expressly listed, but may include another step or unit not expressly listed or inherent to such a process, method, product, or device.

It should be understood that, in this application, "at least one" means one or more, and "a plurality of" means two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally represents an "or" relationship between associated objects. "At least one of the following items (pieces)" or a similar expression thereof indicates any combination of these items, including a single item (piece) or any combination of a plurality of items (pieces). For example, at least one of a, b, or c may represent a, b, c, "a and b", "a and c", "b and c", or "a, b, and c", where a, b, and c may be singular or plural.

Video coding typically refers to processing of a sequence of pictures, where the sequence of pictures forms a video or a video sequence. In the field of video coding, terms "picture (picture)", "frame (frame)", and "image (image)" may be used as synonyms. Video coding (or coding in general) includes two parts: video encoding and video decoding. Video encoding is performed on a source side, and typically includes processing (for example, by compression) an original video picture to reduce an amount of data required for representing the video picture (for more efficient storage and/or transmission). Video decoding is performed on a destination side, and typically includes inverse processing in comparison with processing of an encoder to reconstruct the video picture. "Coding" of a video picture (or a picture in general) in embodiments should be understood as "encoding" or "decoding" of a video picture or a video sequence. A combination of an encoding part and a decoding part is also referred to as encoding and decoding (encoding and decoding, CODEC).

In a case of lossless video coding, an original video picture can be reconstructed. In other words, a reconstructed video picture has same quality as the original video picture (assuming that no transmission loss or other data loss occurs during storage or transmission). In a case of lossy video coding, further compression is performed through quantization and the like, to reduce an amount of data required for representing a video picture, and the video picture cannot be completely reconstructed on a decoder side. In other words, quality of a reconstructed video picture is lower or poorer than that of the original video picture.

Several video coding standards are used for "lossy hybrid video encoding and decoding" (that is, spatial prediction and temporal prediction in pixel domain are combined with 2D transform coding for applying quantization in transform domain). Each picture of a video sequence is typically partitioned into a set of non-overlapping blocks, and coding is typically performed at a block level. To be specific, at an encoder, a video is usually processed, that is, encoded, at a block (video block) level. For example, a prediction block is generated through spatial (intra) prediction and temporal (inter) prediction, the prediction block is subtracted from a current block (block being processed or to be processed) to obtain a residual block, and the residual block is transformed in the transform domain and quantized to reduce an amount of data that is to be transmitted (compressed). At a decoder side, an inverse processing part relative to the encoder is applied to an encoded block or a compressed block to reconstruct the current block for representation. Furthermore, the encoder needs to duplicate processing steps of the decoder such that the encoder and the decoder generate same predictions (for example, intra prediction and inter prediction) and/or reconstruct pixels for processing, namely, encoding a subsequent block.

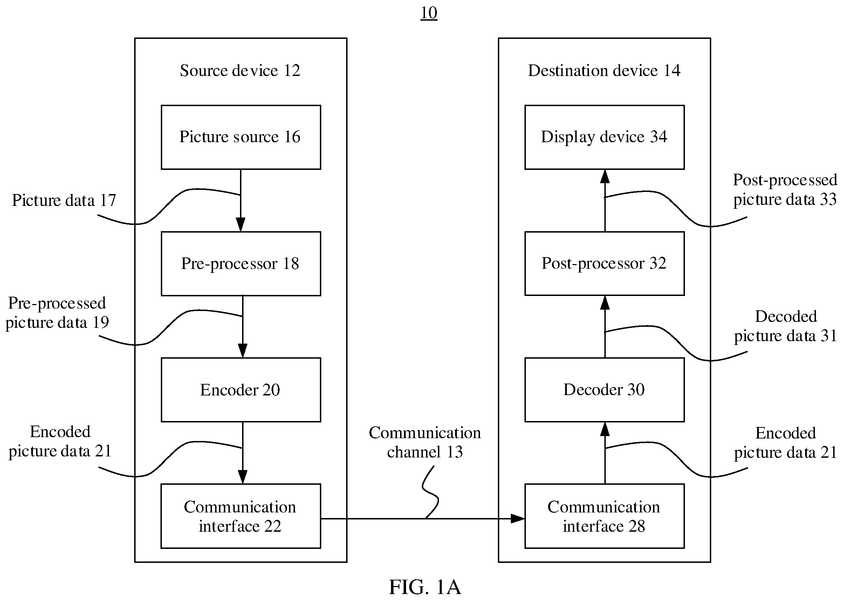

In the following embodiment of a coding system 10, an encoder 20 and a decoder 30 are described with reference to FIG. 1A to FIG. 3.

FIG. 1A is an example block diagram of the coding system 10 according to an embodiment of this application, for example, a video coding system 10 (or the coding system 10 for short) that can use a technology in this application. A video encoder 20 (or the encoder 20 for short) and a video decoder 30 (or the decoder 30 for short) of the video coding system 10 represent devices that may be configured to perform techniques in accordance with various examples described in this application.

As shown in FIG. 1A, the coding system 10 includes a source device 12. The source device 12 is configured to provide encoded picture data 21, for example, an encoded picture for a destination device 14 for decoding the encoded picture data 21.

The source device 12 includes the encoder 20, and may additionally, that is, optionally, include a picture source 16, a pre-processor (or pre-processing unit) 18, for example, a picture pre-processor, and a communication interface (or communication unit) 22.

The picture source 16 may include or be any type of picture capturing device for capturing a real-world picture and the like, and/or any type of a picture generating device, for example, a computer-graphics processing unit for generating a computer animated picture, or any type of device for obtaining and/or providing a real-world picture, a computer generated picture (for example, a screen content, a virtual reality (virtual reality, VR) picture), and/or any combination thereof (for example, an augmented reality (augmented reality, AR) picture). The picture source may be any type of memory or storage storing any of the foregoing pictures.

For distinguishing of processing performed by the pre-processor (or the pre-processing unit) 18, a picture (or picture data) 17 may also be referred to as an original picture (or original picture data) 17.

The pre-processor 18 is configured to: receive the original picture data 17 and perform pre-processing on the original picture data 17, to obtain a pre-processed picture (or pre-processed picture data) 19. Pre-processing performed by the pre-processor 18 may, for example, include trimming, color format conversion (for example, conversion from RGB to YCbCr), color correction, or de-noising. It may be understood that the pre-processing unit 18 may be optional component.

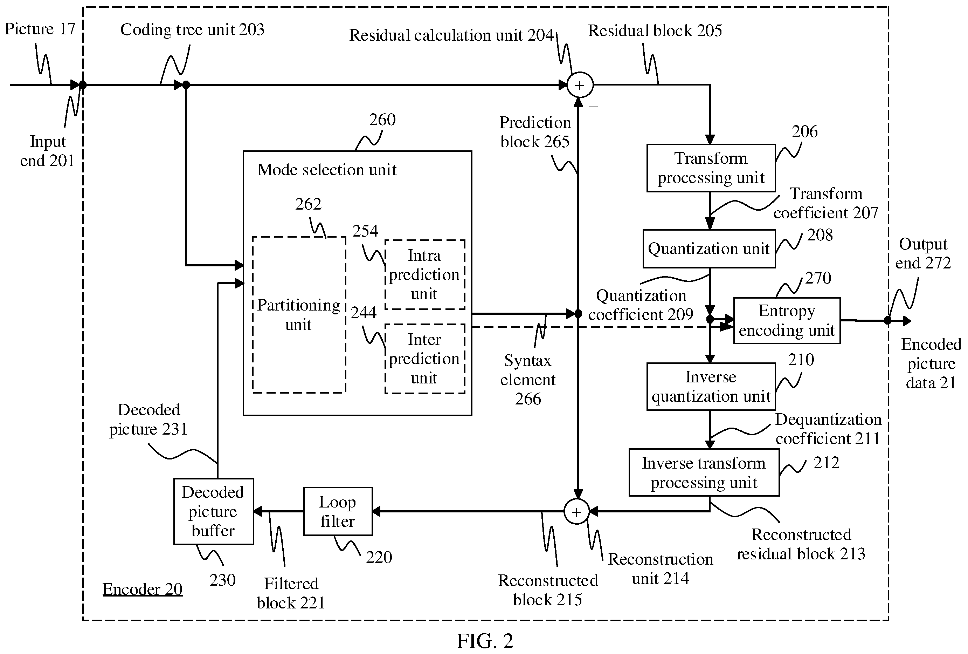

The video encoder (or encoder) 20 is configured to: receive the pre-processed picture data 19 and provide the encoded picture data 21 (further descriptions are described below based on FIG. 2 and the like).

The communication interface 22 of the source device 12 may be configured to: receive the encoded picture data 21 and transmit the encoded picture data 21 (or any further processed version thereof) over a communication channel 13 to another device, for example, the destination device 14 or any other device, for storage or direct reconstruction.

The destination device 14 includes the decoder 30, and may additionally, that is, optionally, include a communication interface (or communication unit) 28, a post-processor (or post-processing unit) 32, and a display device 34.

The communication interface 28 of the destination device 14 is configured to: receive the encoded picture data 21 (or any further processed version thereof) directly from the source device 12 or from any other source device like a storage device, for example, an encoded picture data storage device, and provide the encoded picture data 21 to the decoder 30.

The communication interface 22 and the communication interface 28 may be configured to transmit or receive the encoded picture data (or encoded data) 21 via a direct communication link between the source device 12 and the destination device 14, for example, a direct wired or wireless connection, or via any kind of network, for example, a wired or wireless network or any combination thereof, or any kind of private and public network, or any kind of combination thereof.

The communication interface 22 may be, for example, configured to package the encoded picture data 21 into an appropriate format, for example, a packet, and/or process the encoded picture data using any kind of transmission encoding or processing for transmission over a communication link or communication network.

The communication interface 28, forming the counterpart of the communication interface 22, may be, for example, configured to receive the transmitted data and process the transmitted data using any kind of corresponding transmission decoding or processing and/or de-packaging to obtain the encoded picture data 21.

Both the communication interface 22 and the communication interface 28 may be configured as unidirectional communication interfaces as indicated by the arrow for the communication channel 13 in FIG. 1A pointing from the source device 12 to the destination device 14, or bi-directional communication interfaces, and may be configured, for example, to send and receive messages, for example, to set up a connection, to acknowledge and exchange any other information related to the communication link and/or data transmission, for example, encoded picture data transmission.

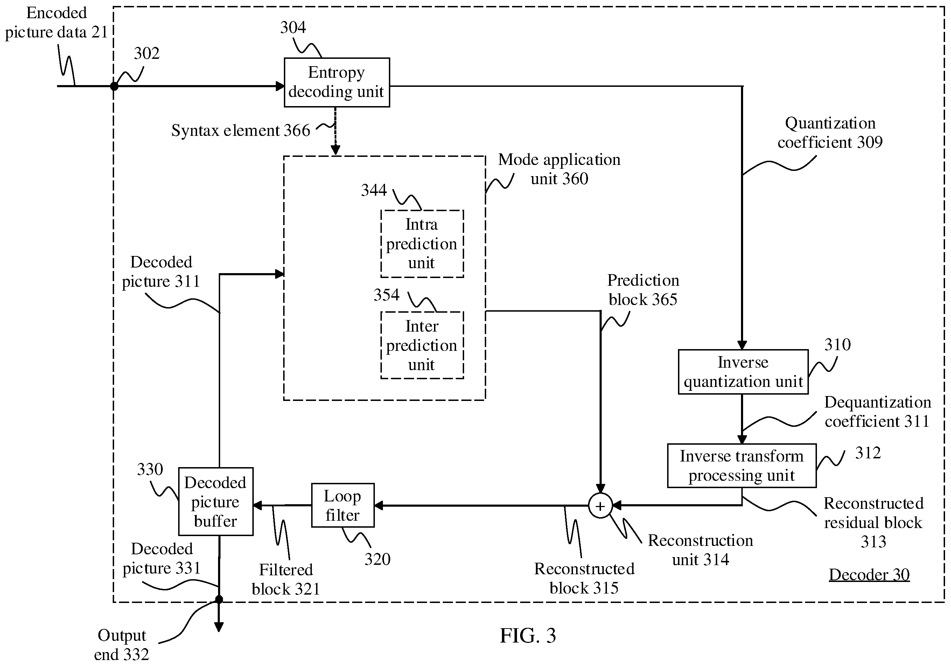

The video decoder (or decoder) 30 is configured to: receive the encoded picture data 21 and provide decoded picture data (or decoded picture data) 31 (further descriptions will be described below based on FIG. 3 and the like).

The post-processor 32 is configured to post-process the decoded picture data 31 (also referred to as reconstructed picture data), for example, the decoded picture, to obtain post-processed picture data 33, for example, a post-processed picture. The post-processing performed by the post-processing unit 32 may include, for example, color format conversion (for example, conversion from YCbCr to RGB), color correction, trimming, or re-sampling, or any other processing, for example, for preparing the decoded picture data 31 for display, for example, by the display device 34.

The display device 34 is configured to receive the post-processed picture data 33 for displaying the picture, for example, to a user or viewer. The display device 34 may be or include any type of display for representing the reconstructed picture, for example, an integrated or external display or monitor. For example, the display may include a liquid crystal display (liquid crystal display, LCD), an organic light emitting diode (organic light emitting diode, OLED) display, a plasma display, a projector, a micro LED display, a liquid crystal on silicon (liquid crystal on silicon, LCoS) display, a digital light processor (digital light processor, DLP), or any type of other display.

Although FIG. 1A shows that the source device 12 and the destination device 14 are independent devices. However, the device embodiment may also include both the source device 12 and the destination device 14 or include functions of both the source device 12 and the destination device 14, that is, include both the source device 12 or a corresponding function and the destination device 14 or a corresponding function. In these embodiments, the source device 12 or the corresponding function and the destination device 14 or the corresponding function may be implemented by using same hardware and/or software or by using separate hardware and/or software or any combination thereof.

As will be apparent for a skilled person based on the description, existence and (exact) division into different units or functions in the source device 12 and/or the destination device 14 shown in FIG. 1A may vary depending on an actual device and application.

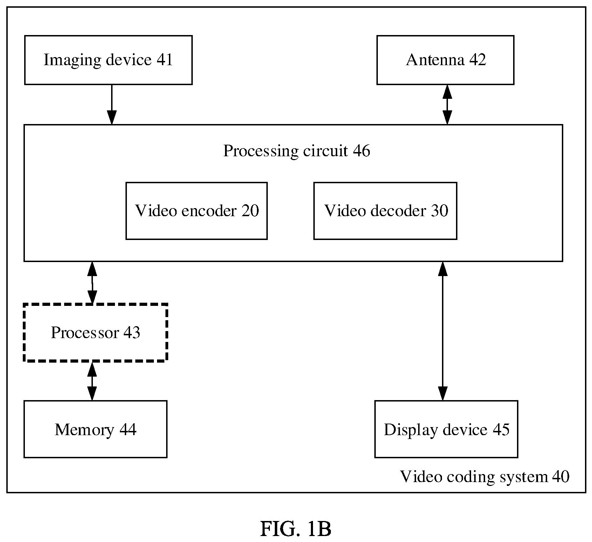

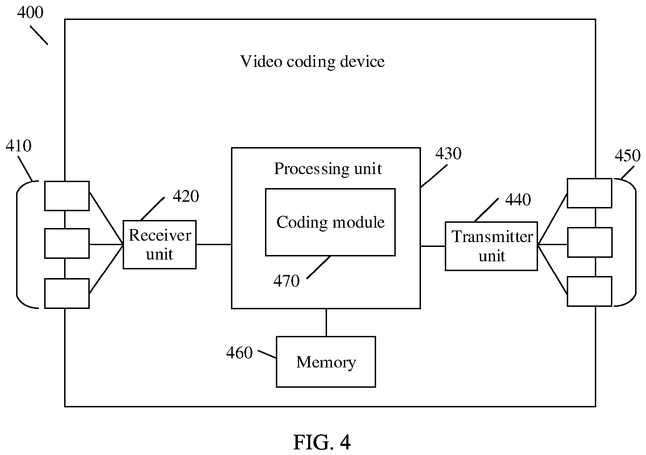

The encoder 20 (for example, the video encoder 20) or the decoder 30 (for example, the video decoder 30) or both the encoder 20 and the decoder 30 may be implemented by a processing circuit as shown in FIG. 1B, for example, one or more microprocessors, digital signal processors (digital signal processors, DSPs), application-specific integrated circuits (application-specific integrated circuits, ASICs), field-programmable gate arrays (field-programmable gate arrays, FPGAs), discrete logic, hardware, dedicated processors for video coding, or any combination thereof. The encoder 20 may be implemented via a processing circuit 46 to embody various modules as discussed with respect to the encoder 20 in FIG. 2 and/or any other encoder system or subsystem described in this specification. The decoder 30 may be implemented via the processing circuit 46 to embody various modules as discussed with respect to the decoder 30 in FIG. 3 and/or any other decoder system or subsystem described in this specification. The processing circuit 46 may be configured to perform various operations discussed below. As shown in FIG. 4, if a part of techniques are implemented in software, a device may store instructions of the software in a suitable computer-readable storage medium, and execute the instructions in hardware using one or more processors, to perform the techniques of the present invention. Either of the video encoder 20 and the video decoder 30 may be integrated as part of a combined encoder/decoder (encoder/decoder, CODEC) in a single device, for example, as shown in FIG. 1B.

The source device 12 and the destination device 14 may include any of a wide range of devices, including any type of handheld or stationary devices, for example, notebook or laptop computers, mobile phones, smart phones, tablets or tablet computers, cameras, desktop computers, set-top boxes, televisions, display devices, digital media players, video gaming consoles, video streaming devices (such as content services servers or content delivery servers), broadcast receiver devices, broadcast transmitter devices, or the like, and may use no or any type of operating system. In some cases, the source device 12 and the destination device 14 may be equipped with components for wireless communication. Therefore, the source device 12 and the destination device 14 may be wireless communication devices.

In some cases, the video coding system 10 shown in FIG. 1A is merely an example. The techniques of this application may apply to video coding settings (for example, video encoding or video decoding) that do not necessarily include any data communication between an encoding device and a decoding device. In other examples, data is retrieved from a local memory, sent over a network, or the like. A video encoding device may encode data and store encoded data into a memory, and/or a video decoding device may retrieve the data from the memory and decode the data. In some examples, encoding and decoding are performed by devices that do not communicate with each other, but simply encode data into a memory and/or retrieve data from the memory and decode the data.

FIG. 1B is an example block diagram of a video coding system 40 according to an embodiment of this application. As shown in FIG. 1B, the video coding system 40 may include an imaging device 41, a video encoder 20, a video decoder 30 (and/or a video encoder/decoder implemented by the processing circuit 46), an antenna 42, one or more processors 43, one or more memories 44, and/or a display device 45.

As shown in FIG. 1B, the imaging device 41, the antenna 42, the processing circuit 46, the video encoder 20, the video decoder 30, the processor 43, the memory 44, and/or the display device 45 can communicate with each other. The video coding system 40 may include only the video encoder 20 or only the video decoder 30 in different examples.

In some examples, the antenna 42 may be configured to transmit or receive an encoded bitstream of video data. Further, in some examples, the display device 45 may be configured to present video data. The processing circuit 46 may include application-specific integrated circuit (application-specific integrated circuit, ASIC) logic, a graphics processing unit, a general-purpose processor, or the like. The video coding system 40 may also include the optional processor 43. The optional processor 43 may similarly include application-specific integrated circuit (application-specific integrated circuit, ASIC) logic, a graphics processing unit, a general-purpose processor, or the like. In addition, the memory 44 may be a memory of any type, for example, a volatile memory (for example, a static random access memory (static random access memory, SRAM) or a dynamic random access memory (dynamic random access memory, DRAM)) or a non-volatile memory (for example, a flash memory). In a non-limitative example, the memory 44 may be implemented by a cache memory. In other examples, the processing circuit 46 may include a memory (for example, a cache) for implementing a picture buffer.

In some examples, the video encoder 20 implemented by using a logic circuit may include a picture buffer (which is implemented by, for example, the processing circuit 46 or the memory 44) and a graphics processing unit (which is implemented by, for example, the processing circuit 46). The graphics processing unit may be communicatively coupled to the picture buffer. The graphics processing unit may be included in the video encoder 20 implemented by the processing circuit 46, to embody various modules discussed with reference to FIG. 2 and/or any other encoder system or subsystem described in this specification. The logic circuit may be configured to perform various operations discussed in this specification.

In some examples, the video decoder 30 may be implemented by the processing circuit 46 in a similar manner, to implement various modules discussed with reference to the video decoder 30 in FIG. 3 and/or any other decoder system or subsystem described in this specification. In some examples, the video decoder 30 implemented by using a logic circuit may include a picture buffer (which is implemented by the processing circuit 46 or the memory 44) and a graphics processing unit (which is implemented by, for example, the processing circuit 46). The graphics processing unit may be communicatively coupled to the picture buffer. The graphics processing unit may be included in the video decoder 30 implemented by the processing circuit 46, to embody various modules discussed with reference to FIG. 3 and/or any other decoder system or subsystem described in this specification.

In some examples, the antenna 42 may be configured to receive an encoded bitstream of video data. As discussed, the encoded bitstream may include data, an indicator, an index value, mode selection data, or the like related to video frame encoding described in this specification, for example, data related to encoding partitioning (for example, a transform coefficient or a quantization transform coefficient, an optional indicator (as discussed), and/or data defining the encoding partitioning). The video coding system 40 may further include the video decoder 30 that is coupled to the antenna 42 and that is configured to decode the encoded bitstream. The display device 45 is configured to present a video frame.

It should be understood that, in this embodiment of this application, for the example described with reference to the video encoder 20, the video decoder 30 may be configured to perform a reverse process. With regard to a signaling syntax element, the video decoder 30 may be configured to receive and parse such a syntax element and correspondingly decode related video data. In some examples, the video encoder 20 may perform entropy encoding on the syntax element to obtain an encoded video bitstream. In such examples, the video decoder 30 may parse such syntax element and correspondingly decode the related video data.

For ease of description, embodiments of the present invention are described with reference to versatile video coding (versatile video coding, VVC) reference software or high-efficiency video coding (high-efficiency video coding, HEVC) developed by the joint collaboration team on video coding (joint collaboration team on video coding, JCT-VC) constituted by the ITU-T video coding experts group (video coding experts group, VCEG) and the ISO/IEC motion picture experts group (motion picture experts group, MPEG). A person of ordinary skill in the art understands that embodiments of the present invention are not limited to the HEVC or the VVC.

### Encoder and encoding method

FIG. 2 is an example block diagram of the video encoder 20 according to an embodiment of this application. As shown in FIG. 2, the video encoder 20 includes an input end (or input interface) 201, a residual calculation unit 204, a transform processing unit 206, a quantization unit 208, an inverse quantization unit 210, an inverse transform processing unit 212, a reconstruction unit 214, a loop filter 220, a decoded picture buffer (decoded picture buffer, DPB) 230, a mode selection unit 260, an entropy encoding unit 270, and an output end (or output interface) 272. The mode selection unit 260 may include an inter prediction unit 244, an intra prediction unit 254, and a partitioning unit 262. The inter prediction unit 244 may include a motion estimation unit and a motion compensation unit (which are not shown). The video encoder 20 shown in FIG. 2 may also be referred to as a hybrid video encoder or a video encoder based on a hybrid video codec.

The residual calculation unit 204, the transform processing unit 206, the quantization unit 208, and the mode selection unit 260 form a forward signal path of the encoder 20, whereas the inverse quantization unit 210, the inverse transform processing unit 212, the reconstruction unit 214, a buffer 216, the loop filter 220, the decoded picture buffer (decoded picture buffer, DPB) 230, the inter prediction unit 244, and the intra prediction unit 254 form a backward signal path of the encoder, where the backward signal path of the encoder 20 corresponds to a signal path of a decoder (refer to the decoder 30 in FIG. 3). The inverse quantization unit 210, the inverse transform processing unit 212, the reconstruction unit 214, the loop filter 220, the decoded picture buffer 230, the inter prediction unit 244, and the intra prediction unit 254 further form a "built-in decoder" of the video encoder 20.

### Picture and picture partitioning (picture and block)

The encoder 20 may be configured to receive, for example, via the input end 201, a picture (or picture data) 17, for example, a picture in a sequence of pictures forming a video or video sequence. The received picture or picture data may also be a pre-processed picture (or pre-processed picture data) 19. For ease of simplicity, the picture 17 is used in the following descriptions. The picture 17 may also be referred to as a current picture or to-be-encoded picture (in particular in video coding to distinguish the current picture from other pictures, for example, previously encoded and/or decoded pictures of a same video sequence, namely, a video sequence that also includes the current picture).

A (digital) picture is or may be considered as a two-dimensional array or matrix including pixels with intensity values. A sample in the array may also be referred to as a pixel (pixel or pel) (short for a picture element). Quantities of pixels of the array or the picture in horizontal and vertical directions (or axes) determine a dimension and/or resolution of the picture. For representation of color, three color components are usually used, to be specific, the picture may be represented as or include three pixel arrays. In an RBG format or color space, a picture includes a corresponding red, green and blue pixel array. However, in video coding, each pixel is usually represented in a luma/chroma format or color space, for example, YCbCr, which includes a luma component indicated by Y (sometimes represented by L) and two chroma components represented by Cb and Cr. The luminance (luma) component Y represents luma or gray level intensity (for example, both are the same in a gray-scale picture), while the two chrominance (chrominance, chroma for short) components Cb and Cr represent chroma or color information components. Accordingly, a picture in a YCbCr format includes a luma pixel array of luma pixel values (Y), and two chroma pixel arrays of chroma values (Cb and Cr). A picture in an RGB format may be converted or transformed into a picture in a YCbCr format, and vice versa. The process is also referred to as color transform or conversion. If a picture is monochrome, the picture may include only a luma pixel array. Accordingly, a picture may be, for example, a luma pixel array in a monochrome format or a luma pixel array and two corresponding chroma pixel arrays in a 4:2:0, 4:2:2, and 4:4:4 color format.

In an embodiment, the embodiment of the video encoder 20 may include a picture partitioning unit (not shown in FIG. 2), configured to partition the picture 17 into a plurality of (typically non-overlapping) picture blocks 203. These blocks may also be referred to as root blocks, macro blocks (H.264/AVC), coding tree blocks (Coding Tree Blocks, CTBs), or coding tree units (Coding Tree Units, CTUs) in the H.265/HEVC and VVC standards. The partitioning unit may be configured to use a same block dimension for all pictures of a video sequence and a corresponding grid defining the block dimension, or to change a block dimension between pictures or picture subsets or groups of pictures, and partition each picture into corresponding blocks.

In further embodiments, the video encoder may be configured to receive directly a block 203 of the picture 17, for example, one, several or all blocks forming the picture 17. The picture block 203 may also be referred to as a current picture block or a to-be-encoded picture block.

Like the picture 17, the picture block 203 is also or may be considered as a two-dimensional array or matrix including pixels with intensity values (pixel values), although of a smaller dimension than the picture 17. In other words, the block 203 may include one pixel array (for example, a luma array in case of a monochrome picture 17, or a luma or chroma array in case of a color picture) or three pixel arrays (for example, one luma array and two chroma arrays in case of a color picture 17) or any other quantity and/or type of arrays depending on a color format applied. Quantities of pixels of the block 203 in the horizontal and vertical directions (or axes) define the dimension of the block 203. Accordingly, a block may be an array of M×N (M columns×N rows) pixels, an array of M×N transform coefficients, or the like.

In an embodiment, the video encoder 20 shown in FIG. 2 may be configured to encode the picture 17 block by block, for example, encode and predict each block 203.

In an embodiment, the video encoder 20 shown in FIG. 2 may be further configured to partition and/or encode the picture by using slices (also referred to as video slices), where the picture may be partitioned or encoded by using one or more slices (typically non-overlapping). Each slice may include one or more blocks (for example, coding tree units CTUs) or one or more groups of blocks (for example, tiles (tiles) in the H.265/HEVC/VVC standard and bricks (bricks) in the VVC standard).

In an embodiment, the video encoder 20 shown in FIG. 2 may be further configured to partition and/or encode the picture by using slices/tile groups (also referred to as video tile groups) and/or tiles (also referred to as video tiles). The picture may be partitioned or encoded by using one or more slices/tile groups (typically non-overlapping), and each slice/tile group may include, for example, one or more blocks (for example, CTUs) or one or more tiles. Each tile may be of a rectangular shape or another shape, and may include one or more complete or fractional blocks (for example, CTUs).

### Residual calculation

The residual calculation unit 204 is configured to calculate a residual block 205 based on the picture block 203 and a prediction block 265 (further details about the prediction block 265 are provided later), for example, by subtracting pixel values of the prediction block 265 from pixel values of the picture block 203 sample by sample (pixel by pixel), to obtain the residual block 205 in pixel domain.

### Transform

The transform processing unit 206 is configured to apply a transform, for example, a discrete cosine transform (discrete cosine transform, DCT) or discrete sine transform (discrete sine transform, DST), on the pixel values of the residual block 205 to obtain transform coefficients 207 in transform domain. The transform coefficients 207 may also be referred to as transform residual coefficients and represent the residual block 205 in transform domain.

The transform processing unit 206 may be configured to apply integer approximations of DCT/DST, such as transforms specified in the H.265/HEVC. Compared with an orthogonal DCT transform, such integer approximations are usually scaled based on a factor. To preserve a norm of a residual block which is processed by using forward and inverse transforms, an additional scale factor is applied as a part of the transform process. The scale factor is usually selected based on some constraints, for example, the scale factor is a power of two for a shift operation, a bit depth of the transform coefficient, or a tradeoff between accuracy and implementation costs. For example, a specific scale factor is specified for the inverse transform by the inverse transform processing unit 212 at the encoder 20 side (and a corresponding inverse transform by, for example, an inverse transform processing unit 312 at the decoder 30 side), and correspondingly, a corresponding scale factor may be specified for the forward transform by the transform processing unit 206 at the encoder 20 side.

In an embodiment, the video encoder 20 (correspondingly, the transform processing unit 206) may be configured to output a transform parameter like one or more transform types, for example, directly output the transform parameter or output the transform parameter after the transform parameter is encoded or compressed by the entropy encoding unit 270, so that, for example, the video decoder 30 may receive and use the transform parameter for decoding.

### Quantization

The quantization unit 208 is configured to quantize the transform coefficients 207 to obtain quantization transform coefficients 209, for example, by applying scalar quantization or vector quantization. The quantization transform coefficients 209 may also be referred to as quantization residual coefficients 209.

The quantization process may reduce a bit depth related to some or all of the transform coefficients 207. For example, an n-bit transform coefficient may be rounded down to an m-bit transform coefficient during quantization, where n is greater than m. A quantization degree may be modified by adjusting a quantization parameter (quantization parameter, QP). For example, for the scalar quantization, different scales may be used to implement finer or coarser quantization. A smaller quantization step corresponds to finer quantization, and a larger quantization step corresponds to coarser quantization. An appropriate quantization step may be indicated by a quantization parameter (quantization parameter, QP). For example, the quantization parameter may be an index to a predefined set of appropriate quantization steps. For example, a smaller quantization parameter may correspond to finer quantization (a smaller quantization step) and a larger quantization parameter may correspond to coarser quantization (a larger quantization step), or vice versa. The quantization may include division by a quantization step and a corresponding and/or inverse dequantization, for example, by the inverse quantization unit 210, may include multiplication by the quantization step. In embodiments according to some standards such as HEVC, a quantization parameter may be used to determine the quantization step. Generally, the quantization step may be calculated based on a quantization parameter and through a fixed point approximation of an equation including division. Additional scale factors may be introduced for quantization and dequantization to restore the norm of the residual block, where the norm of the residual block may be modified because of a scale used in the fixed point approximation of the equation for the quantization step and the quantization parameter. In an example implementation, a scale of the inverse transform may be combined with a scale of the dequantization. Alternatively, customized quantization tables may be used and signaled from the encoder to the decoder, for example, in a bitstream. The quantization is a lossy operation, where a larger quantization step indicates a larger loss.

In an embodiment, the video encoder 20 (correspondingly, the quantization unit 208) may be configured to output a quantization parameter (quantization parameter, QP), for example, directly output the quantization parameter or output the quantization parameter after the quantization parameter is encoded or compressed by the entropy encoding unit 270, so that, for example, the video decoder 30 may receive and use the quantization parameter for decoding.

### Inverse quantization

The inverse quantization unit 210 is configured to apply the inverse quantization of the quantization unit 208 on the quantization coefficients to obtain dequantization coefficients 211, for example, by applying an inverse scheme of the quantization scheme applied by the quantization unit 208 based on or using the same quantization step as the quantization unit 208. The dequantization coefficients 211 may also be referred to as dequantization residual coefficients 211 and correspond to the transform coefficients 207. However, the dequantization coefficients 211 are typically not identical to the transform coefficients due to the loss by quantization.

### Inverse transform

The inverse transform processing unit 212 is configured to apply the inverse transform of the transform applied by the transform processing unit 206, for example, an inverse discrete cosine transform (discrete cosine transform, DCT) or inverse discrete sine transform (discrete sine transform, DST), to obtain a reconstructed residual block 213 (or corresponding dequantization coefficients 213) in pixel domain. The reconstructed residual block 213 may also be referred to as a transform block 213.

### Reconstruction

The reconstruction unit 214 (for example, an adder 214) is configured to add the transform block 213 (namely, the reconstructed residual block 213) to the prediction block 265 to obtain a reconstructed block 215 in the pixel domain, for example, by adding the pixel values of the reconstructed residual block 213 and the pixel values of the prediction block 265.

### Filtering

A loop filter unit 220 (also referred to as the "loop filter" 220 for short) is configured to filter the reconstructed block 215 to obtain a filtered block 221, or usually configured to filter a reconstructed pixel to obtain a filtered pixel value. For example, the loop filter unit is configured to perform smooth pixel conversion or improve video quality. The loop filter unit 220 may include one or more loop filters such as a de-blocking filter, a sample-adaptive offset (sample-adaptive offset, SAO) filter, or one or more other filters such as an adaptive loop filter (adaptive loop filter, ALF), a noise suppression filter (noise suppression filter, NSF), or any combination thereof. For example, the loop filter unit 220 may include a de-blocking filter, a SAO filter, and an ALF filter. An order of a filtering process may be the de-blocking filter, the SAO filter, and the ALF filter. For another example, a process called luma mapping with chroma scaling (luma mapping with chroma scaling, LMCS) (namely, an adaptive in-loop reshaper) is added. This process is performed before de-blocking. For another example, a de-blocking filter process may be also applied to internal sub-block edges, for example, affine sub-blocks edges, ATMVP sub-blocks edges, sub-block transform (sub-block transform, SBT) edges, and intra sub-partition (intra sub-partition, ISP) edges. Although the loop filter unit 220 is shown in FIG. 2 as being a loop filter, in other configurations, the loop filter unit 220 may be implemented as a post-loop filter. The filtered block 221 may also be referred to as a filtered reconstructed block 221.

In an embodiment, the video encoder 20 (correspondingly, the loop filter unit 220) may be configured to output loop filter parameters (such as a SAO filter parameter, an ALF filter parameter, or an LMCS parameter), for example, directly output the loop filter parameters or output the loop filter parameters after entropy encoding is performed on the loop filter parameters by the entropy encoding unit 270, so that, for example, the decoder 30 may receive and use a same loop filter parameter or different loop filter parameters for decoding.

### Decoded picture buffer

The decoded picture buffer (decoded picture buffer, DPB) 230 may be a reference picture memory that stores reference picture data for use by the video encoder 20 during video data encoding. The DPB 230 may be formed by any of a variety of memory devices, such as a dynamic random access memory (dynamic random access memory, DRAM), including a synchronous DRAM (synchronous DRAM, SDRAM), a magnetoresistive RAM (magnetoresistive RAM, MRAM), a resistive RAM (resistive RAM, RRAM), or another type of memory device. The decoded picture buffer 230 may be configured to store one or more filtered blocks 221. The decoded picture buffer 230 may be further configured to store other previously filtered blocks, for example, previously reconstructed and filtered blocks 221, of a same current picture or of different pictures such as previously reconstructed blocks, and may provide complete previously reconstructed, for example, decoded pictures (and corresponding reference blocks and pixels) and/or a partially reconstructed current picture (and a corresponding reference block and pixel), for example, for inter prediction. The decoded picture buffer 230 may be further configured to store one or more unfiltered reconstructed blocks 215, or generally store unfiltered reconstructed pixels, for example, a reconstructed block 215 not filtered by the loop filter unit 220, or a reconstructed block or a reconstructed pixel on which no any other processing is performed.

### Mode selection (partitioning and prediction)

The mode selection unit 260 includes the partitioning unit 262, the inter prediction unit 244, and the intra prediction unit 254, and is configured to receive or obtain original picture data, for example, the original block 203 (the current block 203 of the current picture 17), and reconstructed block data, for example, filtered and/or unfiltered reconstructed pixels or reconstructed blocks of the same (current) picture and/or from one or more previously decoded pictures, for example, from the decoded picture buffer 230 or other buffers (for example, a column buffer, not shown in the figure). The reconstructed block data is used as reference picture data for prediction, for example, inter prediction or intra prediction, to obtain the prediction block 265 or a prediction value 265.

The mode selection unit 260 may be configured to determine or select a partitioning for a prediction mode (for example, an intra or inter prediction mode) of a current block (including non-partitioning) and generate a corresponding prediction block 265, which is used for calculation of the residual block 205 and for the reconstruction of the reconstructed block 215.

In an embodiment, the mode selection unit 260 may be configured to select the partitioning and the prediction mode (for example, from those supported by or available for the mode selection unit 260), which provides best matching or a minimum residual (the minimum residual refers to better compression for transmission or storage), or minimum signaling overheads (the minimum signaling overheads refer to better compression for transmission or storage), or a minimum residual and minimum signaling overheads are considered or balanced in the prediction mode. The mode selection unit 260 may be configured to determine the partitioning and prediction mode based on rate distortion optimization (rate distortion Optimization, RDO), that is, select the prediction mode that provides a minimum rate distortion optimization. The terms "best", "lowest", "optimal" and the like in this specification do not necessarily mean "best", "lowest", "optimal" in general, but may also refer to situations in which termination or selection criteria are met. For example, values that exceed or fall below a threshold or other restrictions may result in "suboptimal selections" but reduce complexity and processing time.

In other words, the partitioning unit 262 may be configured to partition a picture of a video sequence into a sequence of coding tree units (coding tree units, CTUs), and the CTU 203 may be further partitioned into smaller block partitions or sub-blocks (which form the blocks again), for example, iteratively using quad-tree partitioning (quad-tree partitioning, QT), binary-tree partitioning (binary-tree partitioning, BT), triple-tree partitioning (triple-tree partitioning, TT), or any combination thereof, and to perform, for example, prediction for each of the block partitions or sub-blocks, where mode selection includes selection of a tree structure of the partitioned block 203 and a prediction mode applied to each of the block partitions or sub-blocks.

The following describes in detail partitioning (for example, performed by the partitioning unit 262) and prediction (for example, performed by the inter prediction unit 244 and the intra prediction unit 254) that are performed by the video encoder 20.

### Partitioning

The partitioning unit 262 may partition (or split) a coding tree unit 203 into smaller partitions, for example, square or rectangular small blocks. For a picture that has three pixel arrays, a CTU includes a block of N×N luma pixels together with two corresponding blocks of chroma pixels.

In the H.265/HEVC video coding standard, a frame of picture is partitioned into non-overlapping CTUs. A CTU dimension may be set to 64×64 (the CTU dimension may alternatively be set to another value, for example, in JVET reference software JEM, the CTU dimension is increased to 128×128 or 256×256). A 64×64 CTU includes a rectangular pixel array with 64 columns and 64 pixels per column, and each pixel includes a luma component or/and a chroma component.

In the H.265, a QT-based CTU splitting method is used, a CTU is used as a root node (root) of the QT, and the CTU is recursively split into several leaf nodes (leaf nodes) in a QT split manner. One node corresponds to one picture region. If a node is not split, the node is referred to as a leaf node, and a picture region corresponding to the node is a CU. If the node is further split, the picture region corresponding to the node may be split into four regions of a same dimension (a length and a width of each region are half of a length and a width of the split region), each region corresponds to one node, and whether these nodes are further split needs to be separately determined. Whether a node is to be split is indicated by a split flag split_cut_flag that is in a bitstream and that corresponds to the node. A node A is split into four nodes Bi once, where i=0 to 3, Bi is referred to as a child node of A, and A is referred to as a parent node of Bi. A QT depth (qtDepth) of a root node is 0, and the QT depth of the node is a value obtained by adding 1 to 4×QT depth of the parent node of the node.

In the H.265/HEVC standard, for a picture in a YUV4:2:0 format, a CTU includes one luma block and two chroma blocks. The luma block and the chroma block may be split in a same manner, and a coding tree is referred to as a luma-chroma joint coding tree. In the VVC, if a current frame is an I frame, when a CTU is a node of a preset dimension (for example, 64×64) in an intra coded frame (I frame), a luma block included in the node is split, by a luma coding tree, into a group of coding units that include only luma blocks, and a chroma block included in the node is split, by a chroma coding tree, into a group of coding units that include only chroma blocks. Luma coding tree splitting and chroma coding tree splitting are independent of each other. Coding trees independently used for the luma block and chroma block are referred to as separate trees (separate trees). In the H.265, a CU includes a luma pixel and a chroma pixel. In standards such as the H.266 and the AVS3, in addition to a CU that includes both a luma pixel and a chroma pixel, there are also a luma CU that includes only a luma pixel and a chroma CU that includes only a chroma pixel.

As described above, the video encoder 20 is configured to determine or select a best or optimal prediction mode from a (pre-determined) prediction mode set. The prediction mode set may include, for example, an intra prediction mode and/or an inter prediction mode.

### Intra prediction

An intra prediction mode set may include 35 different intra prediction modes, for example, non-directional modes such as a DC (or average) mode and a planar mode, or directional modes such as those defined in the HEVC, or may include 67 different intra prediction modes, for example, non-directional modes such as a DC (or average) mode and a planar mode, or directional modes such as those defined in the VVC. For example, several conventional angular intra prediction modes are adaptively replaced with wide-angle intra prediction modes for non-square blocks as defined in the VVC. For another example, to avoid division operations for DC prediction, only a longer side is used to compute an average for the non-square blocks. In addition, results of intra prediction of the planar mode may be further modified by using a position dependent intra prediction combination (position dependent intra prediction combination, PDPC) method.

The intra prediction unit 254 is configured to use reconstructed pixels of neighboring blocks of a same current picture to generate an intra prediction block 265 based on an intra prediction mode in the intra prediction mode set.

The intra prediction unit 254 (or usually the mode selection unit 260) is further configured to output an intra prediction parameter (or usually information indicating a selected intra prediction mode for a block) to be sent to the entropy encoding unit 270 in a form of a syntax element 266, to be included in the encoded picture data 21, so that the video decoder 30 may perform an operation, for example, receive and use a prediction parameter for decoding.

### Inter prediction

In a possible implementation, an inter prediction mode set depends on available reference pictures (namely, previous at least partially decoded pictures, for example, stored in the DBP 230) and other inter prediction parameters, for example, whether the whole reference picture or only a part, for example, a search window area around the area of the current block, of the reference picture is used for searching for a best matching reference block, and/or for example, whether pixel interpolation is applied, for example, half/semi-pel, quarter-pel and/or 1/16 pel interpolation, or not.

In addition to the foregoing prediction modes, a skip mode and/or a direct mode may be further applied.

For example, a merge candidate list of an extended merge prediction mode includes the following five types of candidates in order: spatial MVP from spatial neighboring CUs, temporal MVP from collocated CUs, history-based MVP from a FIFO table, pairwise average MVP, and zero MVs. Bilateral matching-based decoder side motion vector refinement (decoder side motion vector refinement, DMVR) may be used to increase accuracy of the MVs of the merge mode. A merge mode with MVD (merge mode with MVD, MMVD) comes from a merge mode with motion vector differences. An MMVD flag is sent right after a skip flag and a merge flag are sent, to specify whether the MMVD mode is used for a CU. A CU-level adaptive motion vector resolution (adaptive motion vector resolution, AMVR) scheme may be used. AMVR supports encoding of an MVD of the CU at different precision. An MVD of a current CU may be adaptively selected based on a prediction mode of the current CU. When a CU is encoded in the merge mode, a combined inter/intra prediction (combined inter/intra prediction, CIIP) mode may be applied to the current CU. Weighted averaging is performed on inter and intra prediction signals to achieve CIIP prediction. For affine motion compensation prediction, an affine motion field of a block is described by using motion information of a motion vector of two control points (four parameters) or three control points (six parameters). Subblock-based temporal motion vector prediction (subblock-based temporal motion vector prediction, SbTMVP), which is similar to the temporal motion vector prediction (temporal motion vector prediction, TMVP) in HEVC, but predicts a motion vector of a sub-CU in a current CU. A bi-directional optical flow (bi-directional optical flow, BDOF), previously referred to as BIO, is a simpler version that requires much less computation, especially in terms of a quantity of multiplications and a value of a multiplier. In a triangle partition mode, a CU is split evenly into two triangular portions through diagonal splitting and anti-diagonal splitting. In addition, a bi-prediction mode is extended beyond simple averaging to allow weighted averaging of two prediction signals.

The inter prediction unit 244 may include a motion estimation (motion estimation, ME) unit and a motion compensation (motion compensation, MC) unit (both not shown in FIG. 2). The motion estimation unit may be configured to receive or obtain the picture block 203 (the current picture block 203 of the current picture 17) and a decoded picture 231, or at least one or more previously reconstructed blocks, for example, reconstructed blocks of one or more other/different previously decoded pictures 231, for motion estimation. For example, a video sequence may include the current picture and the previously decoded picture 231, or in other words, the current picture and the previously decoded picture 231 may be part of or form a sequence of pictures forming the video sequence.

For example, the encoder 20 may be configured to select a reference block from a plurality of reference blocks of a same picture or different pictures of a plurality of other pictures and provide a reference picture (or a reference picture index) and/or an offset (spatial offset) between a position (x and y coordinates) of the reference block and a position of the current block as inter prediction parameters to the motion estimation unit. This offset is also referred to as a motion vector (motion vector, MV).

The motion compensation unit is configured to obtain, for example, receive, an inter prediction parameter and perform inter prediction based on or using the inter prediction parameter to obtain an inter prediction block 246. Motion compensation performed by the motion compensation unit may include extracting or generating a prediction block based on a motion/block vector determined through motion estimation, and may further include performing interpolation on sub-pixel precision. Interpolation filtering may generate a pixel of another pixel from a pixel of a known pixel, thus potentially increasing a quantity of candidate prediction blocks that may be used to encode a picture block. Upon receiving the motion vector corresponding to the PU of the current picture block, the motion compensation unit may locate a prediction block to which the motion vector points in one of the reference picture lists.

The motion compensation unit may further generate syntax elements related to a block and a video slice for use by the video decoder 30 in decoding picture blocks of the video slice. In addition or as an alternative to slices and corresponding syntax elements, tile groups and/or tiles and corresponding syntax elements may be generated or used.

### Entropy encoding

The entropy encoding unit 270 is configured to apply, for example, an entropy coding algorithm or scheme (for example, a variable length coding (variable length coding, VLC) scheme, a context adaptive VLC (context adaptive VLC, CALVC) scheme, an arithmetic coding scheme, a binarization algorithm, context adaptive binary arithmetic coding (context adaptive binary arithmetic coding, CABAC), syntax-based context-adaptive binary arithmetic coding (syntax-based context-adaptive binary arithmetic coding, SBAC), probability interval partitioning entropy (probability interval partitioning entropy, PIPE) coding or another entropy coding methodology or technique) on the quantization residual coefficients 209, inter prediction parameters, intra prediction parameters, loop filter parameters and/or other syntax elements to obtain encoded picture data 21 which can be output via the output end 272, for example, in the form of an encoded bitstream 21, so that, for example, the video decoder 30 may receive and use the parameters for decoding. The encoded bitstream 21 may be transmitted to the video decoder 30, or stored in a memory for later transmission or retrieval by the video decoder 30.

Another structural variation of the video encoder 20 may be used to encode the video stream. For example, a non-transform-based encoder 20 may quantize a residual signal directly without the transform processing unit 206 for some blocks or frames. In another implementation, the encoder 20 may have the quantization unit 208 and the inverse quantization unit 210 combined into a single unit.

### Decoder and decoding method

FIG. 3 is an example block diagram of the video decoder 30 according to an embodiment of this application. The video decoder 30 is configured to receive, for example, the encoded picture data 21 (for example, the encoded bitstream 21) encoded by the encoder 20, to obtain a decoded picture 331. The encoded picture data or bitstream includes information for decoding the encoded picture data, for example, data that represents picture blocks of an encoded video slice (and/or tile groups or tiles), and related syntax elements.

In the example in FIG. 3, the decoder 30 includes an entropy decoding unit 304, an inverse quantization unit 310, an inverse transform processing unit 312, a reconstruction unit 314 (for example, an adder 314), a loop filter 320, a decoded picture buffer (DBP) 330, a mode application unit 360, an inter prediction unit 344, and an intra prediction unit 354. The inter prediction unit 344 may be or include a motion compensation unit. In some examples, the video decoder 30 may execute a decoding process generally reciprocal to the encoding process described with reference to the video encoder 100 in FIG. 2.

As explained with regard to the encoder 20, the inverse quantization unit 210, the inverse transform processing unit 212, the reconstruction unit 214, the loop filter 220, the decoded picture buffer DPB 230, the inter prediction unit 344, and the intra prediction unit 354 further form a "built-in decoder" of the video encoder 20. Accordingly, the inverse quantization unit 310 may be identical in function to the inverse quantization unit 110, the inverse transform processing unit 312 may be identical in function to the inverse transform processing unit 122, the reconstruction unit 314 may be identical in function to the reconstruction unit 214, the loop filter 320 may be identical in function to the loop filter 220, and the decoded picture buffer 330 may be identical in function to the decoded picture buffer 230. Therefore, the explanations provided for corresponding units and functions of the video encoder 20 are correspondingly applicable to corresponding units and functions of the video decoder 30.

### Entropy decoding

The entropy decoding unit 304 is configured to parse the bitstream 21 (or in general encoded picture data 21) and perform, for example, entropy decoding on the encoded picture data 21 to obtain, for example, quantization coefficients 309 and/or decoded coding parameters (not shown in FIG. 3), for example, any or all of inter prediction parameters (for example, a reference picture index and a motion vector), intra prediction parameters (for example, an intra prediction mode or an index), transform parameters, quantization parameters, loop filter parameters, and/or other syntax elements. The entropy decoding unit 304 may be configured to apply a decoding algorithm or scheme corresponding to the encoding scheme of the entropy encoding unit 270 of the encoder 20. The entropy decoding unit 304 may be further configured to provide the inter prediction parameter, the intra prediction parameter, and/or another syntax element to the mode application unit 360 and another parameter to another unit of the decoder 30. The video decoder 30 may receive the syntax elements at the video slice level and/or the video block level. In addition or as an alternative to slices and corresponding syntax elements, tile groups and/or tiles and corresponding syntax elements may be received or used.

### Inverse quantization

The inverse quantization unit 310 may be configured to receive a quantization parameter (quantization parameter, QP) (or generally, information related to the inverse quantization) and a quantization coefficient from the encoded picture data 21 (for example, parsed and/or decoded by the entropy decoding unit 304) and to apply an inverse quantization on the decoded quantization coefficient 309 based on the quantization parameter to obtain a dequantization coefficient 311 that may also be referred to as a transform coefficient 311. The inverse quantization process may include use of a quantization parameter calculated by the video encoder 20 for each video block in a video slice to determine a degree of quantization and, likewise, a degree of inverse quantization that needs to be applied.

### Inverse transform

The inverse transform processing unit 312 may be configured to receive the dequantization coefficients 311, also referred to as the transform coefficients 311, and apply a transform to the dequantization coefficients 311 to obtain a reconstructed residual block 213 in pixel domain. The reconstructed residual block 213 may also be referred to as a transform block 313. The transform may be an inverse transform, for example, an inverse DCT, an inverse DST, an inverse integer transform, or a conceptually similar inverse transform process. The inverse transform processing unit 312 may be further configured to receive transform parameters or corresponding information from the encoded picture data 21 (for example, by parsing and/or decoding, for example, by the entropy decoding unit 304) to determine the transform to be applied to the dequantization coefficients 311.

### Reconstruction

The reconstruction unit 314 (for example, an adder 314) is configured to add the reconstructed residual block 313 to the prediction block 365 to obtain a reconstructed block 315 in the pixel domain, for example, by adding the pixel values of the reconstructed residual block 313 and the pixel values of the prediction block 365.

### Filtering

The loop filter unit 320 (either in a coding loop or after the coding loop) is configured to filter the reconstructed block 315 to obtain a filtered block 321, to perform smooth pixel conversion or improve video quality. The loop filter unit 320 may include one or more loop filters such as a de-blocking filter, a sample-adaptive offset (sample-adaptive offset, SAO) filter, or one or more other filters such as an adaptive loop filter (adaptive loop filter, ALF), a noise suppression filter (noise suppression filter, NSF), or any combination thereof. For example, the loop filter unit 220 may include a de-blocking filter, a SAO filter, and an ALF filter. An order of a filtering process may be the de-blocking filter, the SAO filter, and the ALF filter. For another example, a process called luma mapping with chroma scaling (luma mapping with chroma scaling, LMCS) (namely, an adaptive in-loop reshaper) is added. This process is performed before de-blocking. For another example, a de-blocking filter process may be also applied to internal sub-block edges, for example, affine sub-blocks edges, ATMVP sub-blocks edges, sub-block transform (sub-block transform, SBT) edges, and intra sub-partition (intra sub-partition, ISP) edges. Although the loop filter unit 320 is shown in FIG. 3 as being a loop filter, in other configurations, the loop filter unit 320 may be implemented as a post-loop filter.

### Decoded picture buffer

A decoded video block 321 of a picture is then stored in the decoded picture buffer 330 that stores a decoded picture 331 as a reference picture, where the reference picture is used for subsequent motion compensation for other pictures and/or for output respectively display.

The decoder 30 is configured to output the decoded picture 311, for example, via an output end 312, for presentation or viewing to a user.

### Prediction

The inter prediction unit 344 may be identical in function to the inter prediction unit 244 (in particular to the motion compensation unit), and the intra prediction unit 354 may be identical in function to the inter prediction unit 254. The inter prediction unit 344 and the intra prediction unit 354 perform splitting or partitioning decisions and prediction based on the partitioning and/or prediction parameter or respective information received from the encoded picture data 21 (for example, parsed and/or decoded by the entropy decoding unit 304). The mode application unit 360 may be configured to perform prediction (intra or inter prediction) on each block based on a reconstructed block, a block, or a corresponding pixel (filtered or unfiltered), to obtain the prediction block 365.

When the video slice is coded as an intra coded (intra coded, I) slice, the intra prediction unit 354 of the mode application unit 360 is configured to generate the prediction block 365 for a picture block of the current video slice based on an indicated intra prediction mode and data from previously decoded blocks of the current picture. When the video picture is coded as an inter coded (for example, B, or P) slice, the inter prediction unit 344 (for example, the motion compensation unit) of the mode application unit 360 is configured to produce the prediction block 365 for a video block of the current video slice based on the motion vectors and other syntax elements received from the entropy decoding unit 304. For inter prediction, the prediction blocks may be generated from one reference picture in one reference picture list. The video decoder 30 may construct reference frame lists: a list 0 and a list 1, by using a default construction technology based on reference pictures stored in the DPB 330. The same or similar process may be applied for or by embodiments using tile groups (for example, video tile groups) and/or tiles (for example, video tiles) in addition or alternatively to slices (for example, video slices), for example, a video may be encoded using I, P or B tile groups and/or tiles.

The mode application unit 360 is configured to determine prediction information for a video block of the current video slice by parsing the motion vectors and other syntax elements, and use the prediction information to produce the prediction blocks for the current video block being decoded. For example, the mode application unit 360 uses some of the received syntax elements to determine a prediction mode (for example, intra or inter prediction) used to encode the video blocks of the video slice, an inter prediction slice type (for example, a B slice, a P slice, or a GPB slice), construction information for one or more of the reference picture lists for the slice, motion vectors for each inter coded video block of the slice, an inter prediction status for each inter coded video block of the slice, and other information to decode the video blocks in the current video slice. The same or similar process may be applied for or by embodiments using tile groups (for example, video tile groups) and/or tiles (for example, video tiles) in addition or alternatively to slices (for example, video slices), for example, a video may be encoded using I, P or B tile groups and/or tiles.

In an embodiment, the video encoder 30 shown in FIG. 3 may be further configured to partition and/or decode the picture by using slices (also referred to as video slices), where the picture may be partitioned or decoded using one or more slices (typically non-overlapping). Each slice may include one or more blocks (for example, CTUs) or one or more groups of blocks (for example, tiles in the H.265/HEVC/VVC standard and bricks in the VVC standard).

In an embodiment, the video decoder 30 shown in FIG. 3 may be further configured to partition and/or decode the picture by using slices/tile groups (also referred to as video tile groups) and/or tiles (also referred to as video tiles). The picture may be partitioned or decoded using one or more slices/tile groups (typically non-overlapping), and each slice/tile group may include, for example, one or more blocks (for example, CTUs) or one or more tiles. Each tile may be of a rectangular shape or another shape, and may include one or more complete or fractional blocks (for example, CTUs).

Other variations of the video decoder 30 may be used to decode the encoded picture data 21. For example, the decoder 30 may generate an output video stream without the loop filter unit 320. For example, a non-transform-based decoder 30 may inversely quantize the residual signal directly without the inverse transform processing unit 312 for some blocks or frames. In another implementation, the video decoder 30 may have the inverse quantization unit 310 and the inverse transform processing unit 312 combined into a single unit.

It should be understood that, in the encoder 20 and the decoder 30, a processing result of a current step may be further processed and then output to a next step. For example, after interpolation filtering, motion vector derivation, or loop filtering, a further operation, for example, a clip (clip) or shift (shift) operation, may be performed on a processing result of the interpolation filtering, motion vector derivation, or loop filtering.

It should be noted that further operations may be performed on derived motion vectors of the current block (including but not limit to control point motion vectors in an affine mode, sub-block motion vectors in affine, planar, and ATMVP modes, temporal motion vectors, and so on). For example, the value of motion vector is constrained to a predefined range according to its representing bit. If the representation bit of the motion vector is bitDepth, a range is from - 2^(bitDepth-1) to 2^(bitDepth-1)-1, where the "^" represents exponentiation. For example, if the bitDepth is set to 16, the range is -32768 to 32767; and if the bitDepth is set to 18, the range is - 131072 to 131071. For example, the value of the derived motion vector (for example, the MVs of four 4×4 sub-blocks within one 8×8 block) is constrained such that the max difference between integer parts of the four 4×4 sub-block MVs is no more than N pixels, such as no more than one pixel. Two methods for constraining the motion vector based on the bitDepth are provided herein.

Although video encoding and decoding are mainly described in the foregoing embodiments, it should be noted that the embodiments of the coding system 10, the encoder 20, and the decoder 30 and other embodiments described in this specification may also be used for still picture processing or encoding and decoding, that is, processing or encoding and decoding of a single picture independent of any preceding or consecutive pictures in video encoding and decoding. In general, if picture processing is limited to a single picture 17, the inter prediction unit 244 (encoder) and the inter prediction unit 344 (decoder) may not be available. All other functions (also referred to as tools or technologies) of the video encoder 20 and the video decoder 30 may equally be used for still picture processing, for example, residual calculation 204/304, transform 206, quantization 208, inverse quantization 210/310, (inverse) transform 212/312, partitioning 262/362, intra prediction 254/354 and/or loop filtering 220/320, entropy encoding 270, and entropy decoding 304.

FIG. 4 is an example block diagram of a video coding device 400 according to an embodiment of this application. The video coding device 400 is suitable for implementing the disclosed embodiments as described in this specification. In an embodiment, the video coding device 400 may be a decoder such as the video decoder 30 in FIG. 1A or an encoder such as the video encoder 20 in FIG. 1A.

The video coding device 400 includes: ingress ports 410 (or input ports 410) and a receiver unit (receiver unit, Rx) 420 that are configured to receive data; a processor, logic unit, or central processing unit (central processing unit, CPU) 430 for processing data; a transmitter unit (transmitter unit, Tx) 440 and egress ports 450 (or output ports 450) that are configured to transmit data; and a memory 460 for storing data. The video coding device 400 may also include optical-to-electrical (optical-to-electrical, OE) components and electrical-to-optical (electrical-to-optical, EO) components coupled to the ingress ports 410, the receiver unit 420, the transmitter unit 440, and the egress ports 450 for egress or ingress of optical or electrical signals.

The processing unit 430 is implemented by using hardware and software. The processing unit 430 may be implemented as one or more processor chips, cores (for example, a multi-core processor), FPGAs, ASICs, and DSPs. The processing unit 430 is in communication with the ingress ports 410, the receiver unit 420, the transmitter unit 440, the egress ports 450, and the memory 460. The processing unit 430 includes a coding module 470. The coding module 470 implements the embodiments disclosed above. For example, the coding module 470 implements, processes, prepares, or provides various coding operations. Therefore, the coding module 470 provides a substantial improvement to functions of the video coding device 400 and affects switching of the video coding device 400 to a different state. Alternatively, the coding module 470 is implemented by using instructions stored in the memory 460 and executed by the processing unit 430.

The memory 460 may include one or more disks, tape drives, and solid-state drives and may be used as an over-flow data storage device, to store programs when such programs are selected for execution, and to store instructions and data that are read during program execution. The memory 460 may be volatile and/or non-volatile, and may be a read-only memory (read-only memory, ROM), a random access memory (random access memory, RAM), a ternary content-addressable memory (ternary content-addressable memory, TCAM), and/or a static random access memory (static random-access memory, SRAM).

For ease of understanding, the following first explains and describes some technologies or terms used in embodiments of this application. The technologies or terms are also used as a part of content of the present invention.

### 1. Scalable video coding

Scalable video coding, also known as scalable video coding, is an extended coding standard of current video coding standards (generally, extended-standard scalable video coding (scalable video coding, SVC) of advanced video coding (advanced video coding, AVC) (H.264), or extended-standard scalable high efficiency video coding (scalable high efficiency video coding, SHVC) of high efficiency video coding (high efficiency video coding, HEVC) (H.265)). The scalable video coding is mainly used to resolve the problems of packet loss and delay jitter caused by a real-time change of network bandwidth in real-time video transmission.

In the scalable video coding, a basic structure may be referred to as a level. A scalable video coding technology may obtain bitstreams of levels of different resolution by performing spatial domain scaling (resolution scaling) on an original picture block. Resolution may be a dimension of a picture block in a unit of pixels. Resolution of a low level is low, and resolution of a high level is not lower than that of the low level. Alternatively, bitstreams of levels of different frame rates may be obtained by performing temporal domain scaling (frame rate scaling) on the original picture block. A frame rate may be a quantity of picture frames included in a video per unit time. A frame rate of a low level is low, and a frame rate of a high level is not lower than that of the low level. Alternatively, bitstreams of levels of different coding quality grades may be obtained by performing quality domain scaling on the original picture block. Coding quality may be quality of a video. A picture distortion degree of a low level is high, and a picture distortion degree of a high level is not higher than that of the low level.

Generally, a layer referred to as a base layer is a bottommost layer in the scalable video coding. In spatial domain scaling, a base layer picture block is coded using lowest resolution. In temporal domain scaling, a base layer picture block is coded using a lowest frame rate. In quality domain scaling, a base layer picture block is coded using a highest QP or a lowest bit rate. In other words, the base layer has lowest quality in the scalable video coding. A level referred to as an enhancement layer is a level above the base layer in the scalable video coding, and may be divided into a plurality of enhancement layers from low to high. A lowest-layer enhancement layer codes, based on coding information obtained by the base layer, to obtain a combined bitstream whose coding resolution is higher than that of the base layer, or frame rate is higher than that of the base layer, or bit rate is higher than that of the base layer. A higher-layer enhancement layer may code, based on coding information of a lower-layer enhancement layer, to obtain a picture block with higher quality.

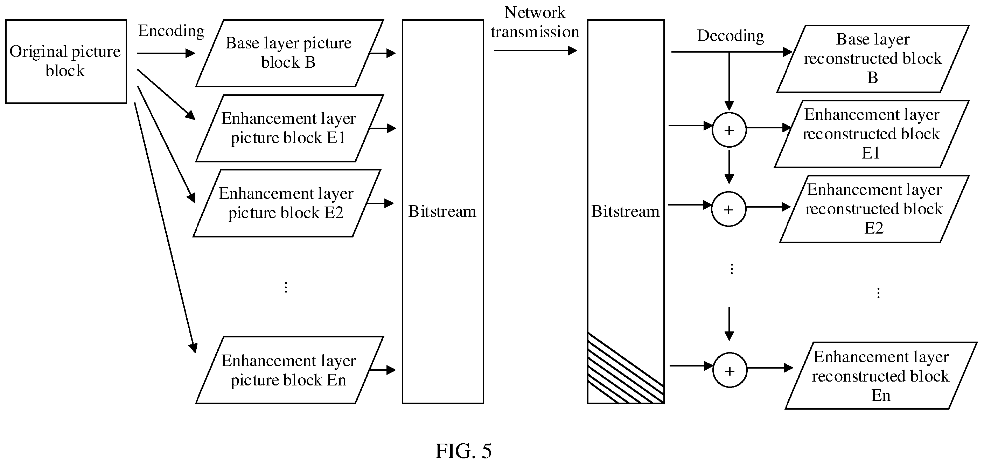

For example, FIG. 5 is a diagram of an example of a level of scalable video coding according to this application. As shown in FIG. 5, after an original picture block is sent to a scalable coder, the original picture block may be layered into a base layer picture block B and an enhancement layer picture block (E1 to En, where n is greater than or equal to 1) according to different coding configurations, and then coding is performed separately to obtain a bitstream including a base layer bitstream and an enhancement layer bitstream. The base layer bitstream is generally a bitstream obtained by using lowest resolution, a lowest frame rate, or a lowest coding quality parameter for a picture block. The enhancement layer bitstream is a bitstream obtained by coding a picture block by using high resolution, a high frame rate, or a high coding quality parameter on the basis of the base layer. As a quantity of enhancement layers increases, a spatial domain level, temporal domain level, or quality level of coding also increases. When an encoder transmits the bitstreams to a decoder, transmission of the base layer bitstream is ensured first. When a network has a margin, the bitstreams at higher layers are transmitted gradually. The decoder first receives and decodes the base layer bitstream, decodes received enhancement layer bitstreams in an ascending order of spatial domain, temporal domain, or quality layer by layer from a lower layer to a higher layer, and then superposes decoded information of a higher layer on a reconstructed block of a lower layer, to obtain a reconstructed block with higher resolution, a higher frame rate, or higher quality.

### 2. YUV

Usually, it refers to a representation mode of a picture in a YCbCr color space color format, including three color channels: Y, U, and V. The channel Y is a luma component channel, representing luma information of the picture. The channels U and V are chroma component channels, representing color information of the picture. There are mainly three sampling modes for a YUV picture: YUV4:4:4, YUV4:2:2, and YUV4:2:0. Sampling rates of components Y, U, and V in YUV4:4:4 are the same, sampling rates of components U and V in YUV4:2:2 are half of that of a component Y, and sampling rates of components U and V in YUV4:2:0 are one quarter of that of a component Y.

The sampling rates of the three components Y, U, and V in YUV4:4:4 are the same. In every two rows of pixels, each time four samples are selected for the luma component (Y), four samples are also selected for the chroma component (UV), as shown in FIG. 6a. In the figure, ○ represents a luma sample, and × represents a sample of a chroma component.

The sampling rates of the components U and V in YUV4:2:2 are half of that of the component Y. In every two rows of pixels, each time four samples are selected for the luma component (Y), two samples are selected for the chroma component (UV). For example, two samples in the first row and two samples in the second row are selected for the chroma component. A location of the chroma sample may be the same as or different from a location of the luma sample, and the chroma sample may be generated by performing interpolation on a chroma sampling pixel at a corresponding location, as shown in FIG. 6b.

The sampling rates of the components U and V in YUV4:2:0 are one quarter of that of the component Y. In every two rows of pixels, each time four samples are selected for the luma component (Y), one sample is selected for the chroma component (UV). For example, two samples in the first row and zero sample in the second row are selected for the chroma component, as shown in FIG. 6c.

### 3. High-sampling-rate chroma component YUV

Usually, it refers to a YUV picture with a chroma sampling rate higher than that of YUV4:2:0, for example, a YUV4:4:4 picture or a YUV4:2:2 picture. In this specification, the high-sampling-rate chroma component YUV may also be referred to as a high-resolution chroma component YUV, namely, a YUV picture with chroma resolution higher than that of YUV4:2:0 when luma resolution is the same.

### 4. Chroma increment signal

Usually, it refers to a signal in which a chroma component of a picture obtained through chroma downsampling is remaining compared with a chroma component of a source picture, and may also be referred to as a chroma differential signal or a UV chroma picture.

### 5. Phase

Any 2×2 picture block included in a YUV4:4:4 picture includes four pixels. Because locations of the four pixels are different, it may be considered that the four pixels correspond to four different phases. Therefore, it may be learned that a 2×2 picture block includes four pixels, and phases of the four pixels are different, and are respectively an upper left phase, an upper right phase, a lower left phase, and a lower right phase.

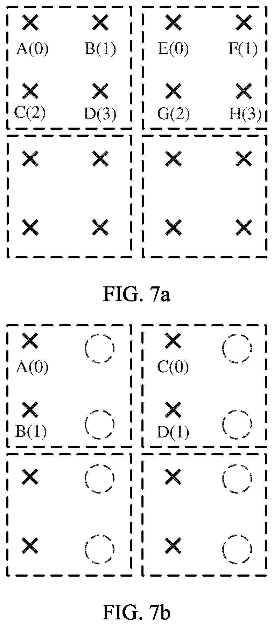

For a luma component and a chroma component in a YUV4:4:4 picture, there may be four luma phases and four chroma phases in a 2×2 picture block. In the YUV4:4:4 picture, a chroma sampling rate is the same as a luma sampling rate. A 2×2 picture block includes four chroma phases 0, 1, 2, and 3 that represent four locations: an upper left location, an upper right location, a lower left location, and a lower right location, respectively. As shown in FIG. 7a, in a 2×2 picture block, four pixels located at A, B, C, and D are respectively located at phases 0, 1, 2, and 3, and in another 2×2 picture block, four pixels located at E, F, G, and H are respectively located at phases 0, 1, 2, and 3. The rest may be deduced by analogy. For ease of description, in this specification, the numbers are used to represent four phases. However, it should be understood that the numbers are merely used as an example, and do not constitute a limitation on the chroma phase.

For a luma component and a chroma component in a YUV4:2:2 picture, there may be four luma phases and two chroma phases in a 2×2 picture block. In the YUV4:2:2 picture, a chroma sampling rate is half of a luma sampling rate. A 2×2 picture block includes two chroma phases 0 and 1 that represent two locations: an upper location and a lower location of the two chroma phases, respectively. As shown in FIG. 7b, in a 2×2 picture block, two pixels located at A and B are respectively located at phases 0 and 1, and in another 2×2 picture block, two pixels located at C and D are respectively located at phases 0 and 1. The rest may be deduced by analogy. For ease of description, in this specification, the numbers are used to represent two chroma phases. However, it should be understood that the numbers are merely used as an example, and do not constitute a limitation on the chroma phase.

### 6. Chroma plane

A plane formed by a component U and a component V in a picture (including an image, a picture frame in a video, and the like) may be referred to as a chroma plane, and is also referred to as a UV44 picture (or a UV44 signal). The component U includes all pixels that are in the picture and that are used to represent the component U, and the component V includes all pixels that are in the picture and that are used to represent the component V.

It can be learned that, if one or more pixels (namely, samples) in four pixels of each of all 2×2 picture blocks included in the UV44 picture are separately taken out, the one or more samples may form a new chroma plane. This manner may be referred to as chroma sampling. If n pixels are selected from four pixels in each of the component U and the component V to form a chroma plane (0≤n≤4), a newly formed chroma plane may be referred to as a UVnn picture (or a UVnn signal). For example, a UV11 picture is a chroma plane formed by selecting one pixel from every four pixels in each of the component U and the component V.

There may be multiple forms of chroma sampling. For example, a pixel is directly selected as a sample, and a pixel value of the pixel is used as a value of the sample; or a pixel is selected as a sample, and a value of the sample is obtained by performing weighting calculation on a pixel value of a surrounding pixel of the pixel.

According to the foregoing chroma sampling mode, a chroma component of a YUV4:2:0 picture may be considered as a UV11 picture, and a chroma component of a YUV4:2:2 picture may be considered as a UV22 picture.

Usually, YUV4:2:0 is used for most pictures input to an encoder for encoding. A standard video codec based on YUV4:2:0 is widely used in various products, for example, a video application (application, APP), a mobile phone (chip), and a television (chip). Therefore, it is a common requirement to encode a high-sampling-rate chroma component YUV picture by using an existing standard video codec based on YUV4:2:0/YUV4:2:2. However, in a related technology, a large amount of data is encoded and decoded, resulting in high encoding and decoding complexity, high power consumption, and a low speed. In addition, encoding and decoding processes of a base layer and an enhancement layer include a redundant chroma signal, resulting in low compression efficiency, an increase in a bit rate, and occupation of a large amount of transmission bandwidth.

To resolve the foregoing technical problems, embodiments of this application provide a picture encoding and decoding method and apparatus. The following describes the technical solutions of this application.

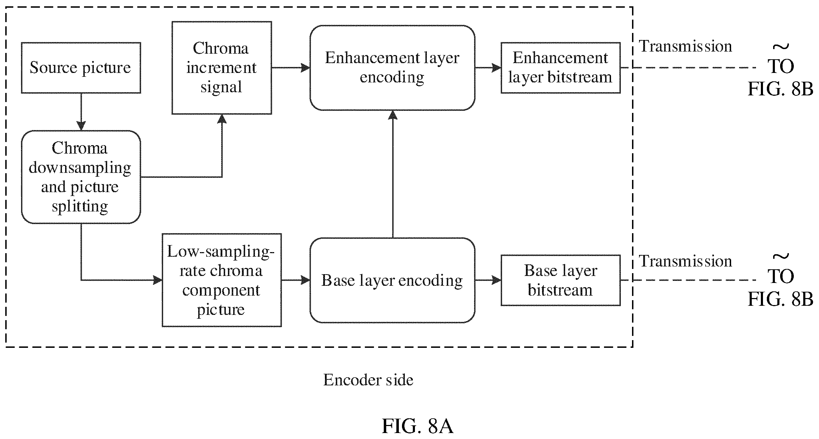

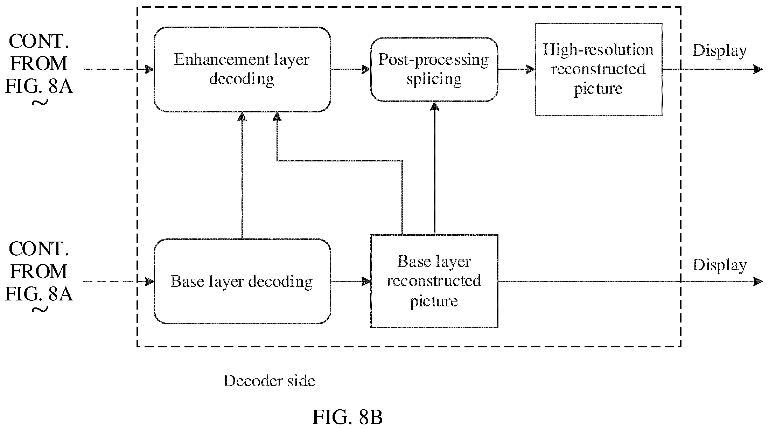

FIG. 8A and FIG. 8B are an example block diagram of a picture encoding and decoding architecture according to an embodiment of this application. As shown in FIG. 8A and FIG. 8B, the architecture includes an encoder side and a decoder side. The encoder side may be implemented by a video encoder 20, and the decoder side may be implemented by a video decoder 30.

On the encoder side, a source picture is a high-sampling-rate chroma component YUV (for example, a YUV4:4:4 picture), and downsampling and/or splitting and point selecting are performed on a chroma component of the source picture, to obtain a low-sampling-rate chroma component picture (for example, a YUV4:2:0 picture) and a chroma increment signal (for example, a UV22 picture or a UV11 picture). The low-sampling-rate chroma component picture may be used as a base layer picture for base layer encoding, to obtain a base layer bitstream. The chroma increment signal may be used as an enhancement layer picture for enhancement layer encoding, to obtain an enhancement layer bitstream. In addition, in an encoding process of an enhancement layer, base layer encoding information and a base layer reconstructed picture may be considered as auxiliary for encoding.

The decoder side performs base layer decoding on the base layer bitstream, to obtain the base layer reconstructed picture (for example, a YUV4:2:0 reconstructed picture), performs enhancement layer decoding on the enhancement layer bitstream, to obtain a reconstructed chroma enhancement signal (for example, a UV22 reconstructed chroma picture or a UV11 reconstructed picture), and then splices the base layer reconstructed picture with the reconstructed chroma enhancement signal to obtain a high-resolution reconstructed picture. On the decoder side, only the base layer reconstructed picture may be displayed, or the high-resolution reconstructed picture may be displayed to improve display effect.

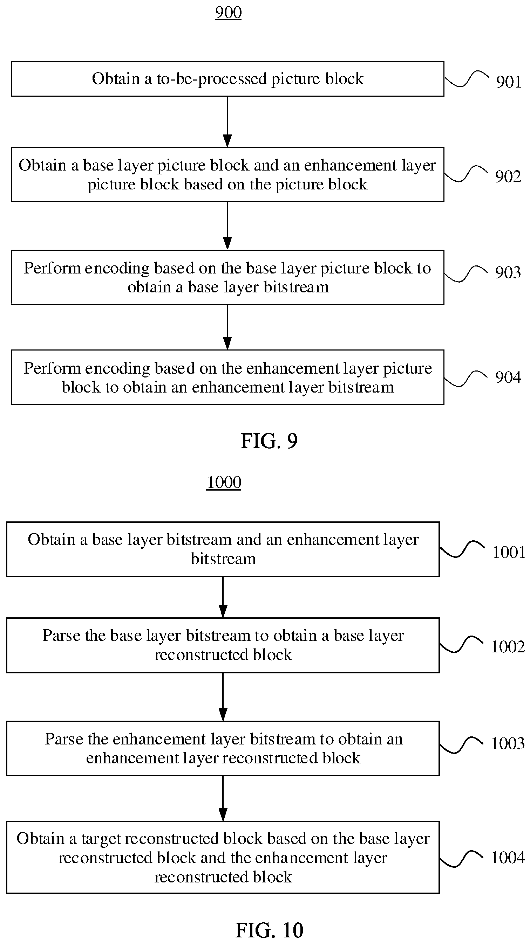

FIG. 9 is a flowchart of a process 900 of a picture encoding method according to this application. The process 900 may be performed by a video encoder 20 (or an encoder). The process 900 is described as a series of steps or operations. It should be understood that the process 900 may be performed in various sequences and/or simultaneously, and is not limited to an execution sequence shown in FIG. 9. The process 900 includes the following steps.

Step 901: Obtain a to-be-processed picture block.

In a related video coding technology, a picture block may be a largest coding unit (largest coding unit, LCU) in an entire frame of picture. The entire frame of picture may be any picture frame in a picture sequence included in a video being processed by an encoder. The picture frame is not split, and a dimension of the picture frame is a dimension of a complete picture frame. In the H.265 standard, before video encoding is performed, an original picture frame is split into a plurality of coding tree units (coding tree units, CTUs). The CTU is a largest coding unit for video encoding, and may be split into CUs of different dimensions in a quad-tree manner. The CTU, as the largest coding unit, is also referred to as an LCU. Alternatively, the picture block may be an entire frame of picture. Alternatively, the picture block may be a region of interest (region of interest, ROI) in an entire frame of picture, that is, a picture region that needs to be processed and that is specified in the picture.

In this embodiment of this application, the to-be-processed picture block may be a picture block with a dimension of 2×2. In other words, after the picture block in the foregoing video coding technology is further split, a plurality of picture blocks with a dimension of 2×2 may be obtained. In this embodiment of this application, any 2×2 picture block may be used as the to-be-processed picture block, to perform chroma component processing.

In addition, a chroma sampling rate of the to-be-processed picture block in this embodiment of this application is higher than that of YUV4:2:0. For example, a sampling format of the picture block is YUV4:4:4 (refer to FIG. 6a) or YUV4:2:2 (refer to FIG. 6b). To be specific, the to-be-processed picture block includes a luma component, a first chroma component, and a second chroma component. The luma component includes four pixels, and the first chroma component and the second chroma component each include four or two pixels. It should be noted that the to-be-processed picture block in this embodiment of this application may alternatively be in another sampling format, for example, YCbCr. This is not specifically limited.

For ease of description, in this specification, an upper left pixel, an upper right pixel, a lower left pixel, and a lower right pixel of a picture block are sequentially numbered 0, 1, 2, and 3. However, it should be understood that the numbers are merely used as an example, and do not constitute a limitation on locations of the pixels.

Step 902: Obtain a base layer picture block and an enhancement layer picture block based on the picture block.

A chroma sampling rate of the base layer picture block is lower than the chroma sampling rate of the picture block. For example, a sampling format of the base layer picture block is YUV4:2:0 (refer to FIG. 6c) or YUV4:2:2 (refer to FIG. 6b). To be specific, the base layer picture block includes a luma component, a first chroma component, and a second chroma component, and sampling rates of the three components are different. The luma component includes four pixels, and the first chroma component and the second chroma component each include one or two pixels.

A pixel included in a first chroma component of the enhancement layer picture block does not overlap a pixel included in the first chroma component of the base layer picture block, and a pixel included in a second chroma component of the enhancement layer picture block does not overlap a pixel included in the second chroma component of the base layer picture block. The foregoing no overlapping may be understood as that, in the first chroma component of the to-be-processed picture block, the pixel in the first chroma component of the base layer picture block and the pixel in the first chroma component of the enhancement layer picture block are located at different locations; and a sum of resolution of the first chroma component of the base layer picture block and resolution of the first chroma component of the enhancement layer picture block does not exceed resolution of the first chroma component of the to-be-processed picture block. In other words, the pixel in the first chroma component of the base layer picture block and the pixel in the first chroma component of the enhancement layer picture block are respectively obtained from pixels at different locations in the first chroma component of the to-be-processed picture block, or are respectively obtained by performing weighting on pixels at different locations in the first chroma component of the to-be-processed picture block. For example, a location of the pixel in the first chroma component of the base layer picture block is a location of the pixel 0; and a location of the pixel in the first chroma component of the enhancement layer picture block is a location of the pixel 3. In addition, the sum of the resolution of the first chroma component of the base layer picture block and the resolution of the first chroma component of the enhancement layer picture block does not exceed the resolution of the first chroma component of the to-be-processed picture block. For example, if the resolution of the first chroma component of the to-be-processed picture block is 2×2, the resolution of the first chroma component of the base layer picture block may be 2×1 or 1×1, and the resolution of the first chroma component of the enhancement layer picture block may be 2×1 or 1×1, or may be 3×1, 2×1, or 1×1. In this way, the sum of the resolution of the first chroma component of the base layer picture block and the resolution of the first chroma component of the enhancement layer picture block is 2×2 at most, and does not exceed the resolution of the first chroma component of the to-be-processed picture block. However, in a related technology, the resolution of the first chroma component of the base layer picture block is 1×1, and the resolution of the first chroma component of the enhancement layer picture block is 2×2. In this way, the sum of the resolution of the first chroma component of the base layer picture block and the resolution of the first chroma component of the enhancement layer picture block exceeds the resolution of the first chroma component of the to-be-processed picture block. Therefore, in this embodiment of this application, the pixel included in the first chroma component of the enhancement layer picture block does not overlap the pixel included in the first chroma component of the base layer picture block.

For ease of description, the following uses the first chroma component as an example to describe a processing process of a chroma component of the picture block. It may be understood that, for a processing process of the second chroma component, refer to this. The first chroma component is a component U, and the second chroma component is a component V; or the first chroma component is a component V, and the second chroma component is a component U.

In this embodiment of this application, the base layer picture block and the enhancement layer picture block may be obtained by using the following several methods.

Method 1: Downsample the chroma component of the picture block to obtain a first picture block, where a sampling format of the first picture block is YUV4:2:0, and a first pixel in a first chroma component of the first picture block is obtained from a second pixel in four pixels included in the first chroma component of the picture block; and split the chroma component of the picture block to obtain a first UV picture block, where the first UV picture block is one of a UV33 picture block, a UV22 picture block, and a UV11 picture block. In this case, the base layer picture block includes the first picture block, and the enhancement layer picture block includes the first UV picture block.

In a possible implementation, the second pixel is a pixel at a preset location. For example, the second pixel may be the pixel 0 or the pixel 3 in the four pixels included in the first chroma component of the picture block.

In this case, a chroma value of the first pixel is a chroma value of the second pixel, that is, the chroma value of the second pixel is directly assigned to the first pixel. Alternatively, a chroma value of the first pixel is an average value of chroma values of the four pixels, that is, the average value of the chroma values of the four pixels included in the first chroma component of the picture block is calculated, and the average value is assigned to the first pixel.

The chroma component of the picture block is split to obtain a first UV picture block. The first UV picture block may be one of a UV33 picture block, a UV22 picture block, and a UV11 picture block. Therefore, there may be the following several cases:
Case 1: When the first UV picture block is the UV33 picture block, the first UV picture block may be split to obtain a second UV picture block and a third UV picture block. The second UV picture block is a UV11 picture block, and the third UV picture block is a UV22 picture block. In this case, the enhancement layer picture block includes the second UV picture block as a picture block of a first-layer enhancement layer and the third UV picture block as a picture block of a second-layer enhancement layer.

An encoder side may further split the first UV picture block (the UV33 picture block), separately select one pixel of a first chroma component and one pixel of a second chroma component of the UV33 picture block to form the UV11 picture block (the second UV picture block), and separately select the remaining two pixels of the first chroma component and the remaining two pixels of the second chroma component of the UV33 picture block to form the UV22 picture block (the third UV picture block). In this way, the picture block may be layered to obtain three layers: a base layer (the first picture block in the YUV4:2:0 format), a first-layer enhancement layer (the second UV picture block (the UV11 picture block)), and a second-layer enhancement layer (the third UV picture block (the UV22 picture block)).

Case 2: When the first UV picture block is the UV33 picture block, the first UV picture block may be split to obtain a second UV picture block and a third UV picture block. The second UV picture block is a UV11 picture block, and the third UV picture block is a UV22 picture block. The third UV picture block is split to obtain a fourth UV picture block and a fifth UV picture block. Both the fourth UV picture block and the fifth UV picture block are UV11 picture blocks. In this case, the enhancement layer picture block includes the second UV picture block as a picture block of a first-layer enhancement layer, the fourth UV picture block as a picture block of a second-layer enhancement layer, and the fifth UV picture block as a picture block of a third-layer enhancement layer.

Based on Case 1, the encoder side may further split the third UV picture block (the UV22 picture block), separately select one pixel of a first chroma component and one pixel of a second chroma component of the UV22 picture block to form the UV11 picture block (the fourth UV picture block), and separately select the remaining one pixel of the first chroma component and the remaining one pixel of the second chroma component of the UV22 picture block to form the UV11 picture block (the fifth UV picture block). In this way, the picture block may be layered to obtain four layers: a base layer (the first picture block in the YUV4:2:0 format), a first-layer enhancement layer (the second UV picture block (the UV11 picture block)), a second-layer enhancement layer (the fourth UV picture block (the UV11 picture block)), and a third-layer enhancement layer (the fifth UV picture block (the UV11 picture block)).

Case 3: When the first UV picture block is the UV22 picture block, the first UV picture block is split to obtain a sixth UV picture block and a seventh UV picture block. In this case, the enhancement layer picture block includes the sixth UV picture block as a picture block of a first-layer enhancement layer and the seventh UV picture block as a picture block of a second-layer enhancement layer.

The encoder side may further split the first UV picture block (the UV22 picture block), separately select one pixel of a first chroma component and one pixel of a second chroma component of the UV22 picture block to form the UV11 picture block (the sixth UV picture block), and separately select the remaining one pixel of the first chroma component and the remaining one pixel of the second chroma component of the UV22 picture block to form the UV11 picture block (the seventh UV picture block). In this way, the picture block may be layered to obtain three layers: a base layer (the first picture block in the YUV4:2:0 format), a first-layer enhancement layer (the sixth UV picture block (the UV11 picture block)), and a second-layer enhancement layer (the seventh UV picture block (the UV11 picture block)).

Method 2: Downsample the chroma component of the picture block to obtain a second picture block, where a sampling format of the second picture block is YUV4:2:2, and a third pixel and a fourth pixel in a first chroma component of the second picture block are obtained from a fifth pixel and a sixth pixel in the four pixels included in the first chroma component of the picture block; and split a chroma component of the second picture block to obtain a third picture block and an eighth UV picture block, where a sampling format of the third picture block is YUV4:2:0, and the eighth UV picture block is a UV11 picture block. In this case, the base layer picture block includes the third picture block, and the enhancement layer picture block includes the eighth UV picture block.

In a possible implementation, the fifth pixel and the sixth pixel are two pixels at preset locations in different rows. For example, the fifth pixel and the sixth pixel may be the pixel 0 and the pixel 3, or the pixel 1 and the pixel 2, or the pixel 0 and the pixel 2 in the four pixels included in the first chroma component of the picture block.

In a possible implementation, the fifth pixel and the sixth pixel are two pixels with a largest chroma value difference in the four pixels. For example, chroma value differences between every two of the four pixels included in the first chroma component of the picture block are calculated to obtain absolute values of six differences, a largest value in the absolute values of the six differences is determined, and two pixels with the largest value are determined as the fifth pixel and the sixth pixel.

In this case, a chroma value of the third pixel is a chroma value of the fifth pixel, that is, the chroma value of the fifth pixel is directly assigned to the third pixel. Alternatively, a chroma value of the third pixel is a weighted average value of chroma values of two pixels in a same row as the fifth pixel. For example, the fifth pixel is the pixel 0 (located in an upper row) in the four pixels included in the first chroma component of the picture block. A weighted average value of chroma values of the pixel 0 and the pixel 1 (both are located in an upper row) is calculated, and the weighted average value is assigned to the third pixel. Alternatively, a chroma value of the third pixel is a weighted average value of a chroma value of the fifth pixel and a chroma value of the sixth pixel. For example, the fifth pixel and the sixth pixel may be the pixel 0 and the pixel 3 in the four pixels included in the first chroma component of the picture block. A weighted average value of chroma values of the pixel 0 and the pixel 3 is calculated, and the weighted average value is assigned to the third pixel.

A chroma value of the fourth pixel is the chroma value of the sixth pixel, that is, the chroma value of the sixth pixel is directly assigned to the fourth pixel. Alternatively, a chroma value of the fourth pixel is a weighted average value of chroma values of two pixels in a same row as the sixth pixel. For example, the sixth pixel is the pixel 2 (located in a lower row) in the four pixels included in the first chroma component of the picture block. A weighted average value of chroma values of the pixel 2 and the pixel 3 (both are located in a lower row) is calculated, and the weighted average value is assigned to the fourth pixel.

Method 3: Splice a luma component of the picture block with each of the UV11 picture blocks obtained in Method 1 and Method 2, to obtain picture blocks in the YUV4:2:0 format, and then perform encoding by using the picture block as an enhancement layer. The following several cases may be included:
Case 1: Splice the luma component of the picture block with each of the second UV picture block, the fourth UV picture block, and the fifth UV picture block to obtain a fourth picture block, a fifth picture block, and a sixth picture block, where sampling formats of the fourth picture block, the fifth picture block, and the sixth picture block are all YUV4:2:0. In this case, the enhancement layer picture block includes the fourth picture block as the picture block of the first-layer enhancement layer, the fifth picture block as the picture block of the second-layer enhancement layer, and the sixth picture block as the picture block of the third-layer enhancement layer.
Case 2: Splice the luma component of the picture block with each of the sixth UV picture block and the seventh UV picture block to obtain a seventh picture block and an eighth picture block, where sampling formats of the seventh picture block and the eighth picture block are both YUV4:2:0. In this case, the enhancement layer picture block includes the seventh picture block as the picture block of the first-layer enhancement layer and the eighth picture block as the picture block of the second-layer enhancement layer.
Case 3: Splice the luma component of the picture block with the eighth UV picture block to obtain a ninth picture block, where a sampling format of the ninth picture block is YUV4:2:0. In this case, the enhancement layer picture block includes the ninth picture block.

In this way, the encoder side may encode both the base layer picture block and the enhancement layer picture block via a YUV4:2:0 encoder, to improve encoding efficiency. In addition, a luma component in the picture block may be subtracted for residual calculated in an encoding process, to reduce an amount of encoded data.

Method 4: Downsample the chroma component of the picture block to obtain the base layer picture block, where the sampling format of the base layer picture block is YUV4:2:2; and split the chroma component of the picture block to obtain the enhancement layer picture block, where the enhancement layer picture block is either a UV22 picture block or a UV11 picture block.

A difference from the foregoing three methods lies in that the sampling format of the base layer picture block obtained by using the fourth method is YUV4:2:2, and encoding may be performed via a YUV4:2:2 encoder in a related technology. Correspondingly, the enhancement layer picture block includes the pixels, in the chroma component of the picture block, other than the pixels included in the chroma component of the base layer picture block.

Step 903: Perform encoding based on the base layer picture block to obtain a base layer bitstream.

A base layer encoder performs an encoding operation on the input base layer picture block to obtain a base layer compressed bitstream, a base layer reconstructed block, and base layer encoding information. The base layer encoding information includes information such as a block split manner of the base layer picture block, and an encoding mode and a motion vector of each picture block. In this embodiment of this application, the base layer picture block may be encoded in the foregoing plurality of/picture encoding manners. This is not specifically limited.

The base layer encoder may obtain a base layer prediction block, calculate a difference between a corresponding pixel in the base layer picture block and a corresponding pixel in the base layer prediction block to obtain a base layer residual, split the base layer residual, perform transform and quantization, and perform entropy encoding on encoding control information, prediction information, motion information, and the like of the base layer together, to obtain the base layer bitstream. In addition, the base layer encoder may further perform inverse quantization and inverse transform on a quantized quantization coefficient to obtain a base layer reconstructed residual, and then sum up a corresponding pixel in the base layer prediction block and a corresponding pixel the base layer reconstructed residual, to obtain the base layer reconstructed block.

Step 904: Perform encoding based on the enhancement layer picture block to obtain an enhancement layer bitstream.

In this embodiment of this application, the encoder side may obtain the base layer reconstructed block and/or the base layer encoding information that correspond/corresponds to the base layer picture block, predicts the enhancement layer picture block based on the base layer reconstructed block and/or the base layer encoding information to obtain an enhancement layer residual, and performs encoding based on the enhancement layer residual to obtain the enhancement layer bitstream.

In this embodiment of this application, the picture block in the YUV4:2:0 format and the UV picture block are obtained based on the picture block with a high sampling rate, and base layer encoding and enhancement layer encoding are respectively performed on the picture block and the UV picture block, so that the base layer can ensure normal display of a picture, and a combination of the base layer and the enhancement layer can adapt to network fluctuation, thereby improving transmission efficiency. In addition, a pixel of a chroma component of the base layer picture block does not overlap a pixel of a chroma component of the enhancement layer picture block, so that an amount of to-be-encoded data can be reduced, encoding efficiency can be improved, and a bitstream can be reduced.

In a possible implementation, in this embodiment of this application, phase sampling information may be obtained, where the phase sampling information includes information indicating a location of the fifth pixel and a location of the sixth pixel; and then the phase sampling information is encoded.

In the foregoing embodiment, after the location of the fifth pixel and the sixth pixel are determined, a decoder side may be notified of the locations of the two pixels based on the phase sampling information. The phase sampling information may include an identifier of a phase sampling mode, for example, a mode 0 (representing that the location of the fifth pixel and the location of the sixth pixel are in the pixels 0 and 3), a mode 1 (representing that the location of the fifth pixel and the location of the sixth pixel are in the pixels 0 and 1), and a mode 2 (representing that the location of the fifth pixel and the location of the sixth pixel are in the pixels 1 and 2). The phase sampling information may alternatively include pixel codes that correspond to the location of the fifth pixel and the sixth pixel, for example, the pixels 0 and 3, or the pixels 1 and 2. An implementation of the phase sampling information is not specifically limited in embodiments of this application.

In this embodiment of this application, the phase sampling information may be encoded, written into a bitstream, and transmitted to the decoder side. Alternatively, the phase sampling information may be written into a file and transmitted to the decoder side. In addition, the phase sampling information may be transmitted to the decoder side in another manner. This is not specifically limited.

FIG. 10 is an example flowchart of a picture decoding method according to this application. A process 1000 may be performed by a video decoder 30 (or a decoder). The process 1000 is described as a series of steps or operations. It should be understood that the process 000 may be performed in various sequences and/or simultaneously, and is not limited to an execution sequence shown in FIG. 10. The process 1000 includes the following steps.

Step 1001: Obtain a base layer bitstream and an enhancement layer bitstream.

Step 1002: Parse the base layer bitstream to obtain a base layer reconstructed block.

A dimension of the base layer reconstructed block is 2×2, and a chroma sampling rate of the base layer reconstructed block is higher than or equal to that of YUV4:2:0. For example, a sampling format of the base layer reconstructed block is YUV4:2:2 (refer to FIG. 6b)/YUV4:2:0 (refer to FIG. 6c). To be specific, the base layer reconstructed block includes a luma component, a first chroma component, and a second chroma component, and sampling rates of the three components are different. The luma component includes four pixels, and the first chroma component and the second chroma component each include two or one pixel.

In this embodiment of this application, the base layer bitstream may be decoded by using a standard video decoding technology, or the base layer bitstream may be decoded by using another existing or future decoding technology. This is not specifically limited.

A decoder side may perform decoding by using a decoder corresponding to an encoder used by an encoder side. Therefore, the sampling format of the base layer reconstructed block obtained by decoding the base layer bitstream is YUV4:2:2/YUV4:2:0. As shown on the encoder side, chroma values of the pixels of the first chroma component and the second chroma component of the base layer reconstructed block may be obtained through filtering. In this way, the base layer reconstructed block may achieve subjective effect and encoding compression efficiency that are similar to those of a common YUV4:2:2/YUV4:2:0 picture block, and display effect of a picture can still be ensured even if the decoder side does not receive the enhancement layer bitstream.

Step 1003: Parse the enhancement layer bitstream to obtain an enhancement layer reconstructed block.

A pixel included in a first chroma component of the enhancement layer reconstructed block does not overlap the pixel included in the first chroma component of the base layer reconstructed block.

Optionally, decoding guidance and reference may be performed with reference to decoding information of a base layer and the base layer reconstructed block during decoding of the enhancement layer bitstream. For example, a chroma component of the base layer reconstructed block may be used as a prediction reference, and a block split mode of the chroma component of the base layer reconstructed block may be used to guide block splitting.

Optionally, the enhancement layer bitstream may be decoded without reference to the decoding information of the base layer reconstructed block and the base layer reconstructed block.

In this embodiment of this application, an existing standard decoder or a non-standard decoder may be used for a decoding manner of the enhancement layer bitstream. This is not limited herein.

Step 1004: Obtain a target reconstructed block based on the base layer reconstructed block and the enhancement layer reconstructed block.

A chroma sampling rate of the target reconstructed block is higher than the chroma sampling rate of the base layer picture block, for example, is that of YUV4:2:2 or YUV4:4:4. The following uses the target reconstructed block in a YUV4:4:4 sampling format as an example for description.

In this embodiment of this application, the target reconstructed block may be obtained by using the following several methods.

Method 1: Splice the chroma component of the base layer reconstructed block with the enhancement layer reconstructed block to obtain the target reconstructed block, where a first pixel in a first chroma component of the target reconstructed block is obtained based on a second pixel in the first chroma component of the base layer reconstructed block, and the sampling format of the base layer reconstructed block is YUV4:2:0.

In a possible implementation, a location of the first pixel is preset. In this case, a chroma value of the first pixel is a chroma value of the second pixel; or a chroma value of the first pixel is obtained by performing inverse average calculation based on a chroma value of the second pixel.

Corresponding to the encoder side, there are a plurality of cases for the enhancement layer reconstructed block: The enhancement layer reconstructed block is a UV33 reconstructed block; or the enhancement layer reconstructed block includes a UV11 reconstructed block as a reconstructed block of a first enhancement layer and a UV22 reconstructed block as a reconstructed block of a second enhancement layer; or the enhancement layer reconstructed block includes a UV11 reconstructed block as a reconstructed block of a first enhancement layer, a UV11 reconstructed block as a reconstructed block of a second enhancement layer, and a UV11 reconstructed block as a reconstructed block of a third enhancement layer.

Method 2: Splice the chroma component of the base layer reconstructed block with the enhancement layer reconstructed block to obtain a first reconstructed block, where a sampling format of the first reconstructed block is YUV4:2:2; and upsample a chroma component of the first reconstructed block to obtain the target reconstructed block, where a third pixel and a fourth pixel in a first chroma component of the target reconstructed block are obtained based on a fifth pixel and a sixth pixel in a first chroma component of the first reconstructed block, and the sampling format of the base layer reconstructed block is YUV4:2:0.

In a possible implementation, the third pixel and the fourth pixel are two pixels at preset locations in different rows.

In a possible implementation, decoding is performed to obtain phase sampling information, where the phase sampling information includes information indicating a location of the third pixel and a location of the fourth pixel; and the third pixel and the fourth pixel are determined based on the phase sampling information.

In this case, a chroma value of the third pixel is a chroma value of the fifth pixel; or a chroma value of the third pixel is a deweighted average value of a chroma value of the fifth pixel and a chroma value of another pixel in a same row as the fifth pixel; or a chroma value of the third pixel is a deweighted average value of a chroma value of the fifth pixel and a chroma value of the sixth pixel; and a chroma value of the fourth pixel is the chroma value of the sixth pixel; or a chroma value of the fourth pixel is a deweighted average value of the chroma value of the sixth pixel and a chroma value of another pixel in a same row as the sixth pixel.

Method 3: Obtain a chroma component of the enhancement layer reconstructed block; and splice the chroma component of the base layer reconstructed block with the chroma component of the enhancement layer reconstructed block to obtain the target reconstructed block, where a seventh pixel in a first chroma component of the target reconstructed block is obtained based on an eighth pixel in the first chroma component of the base layer reconstructed block, and the sampling format of the base layer reconstructed block is YUV4:2:0.

Method 4: Obtain a chroma component of the enhancement layer reconstructed block; splice the chroma component of the base layer reconstructed block with the chroma component of the enhancement layer reconstructed block to obtain a second reconstructed block, where a sampling format of the second reconstructed block is YUV4:2:2; and upsample a chroma component of the second reconstructed block to obtain the target reconstructed block, where a ninth pixel and a tenth pixel in a first chroma component of the target reconstructed block are obtained based on an eleventh pixel and a twelfth pixel in a first chroma component of the first reconstructed block, and the sampling format of the base layer reconstructed block is YUV4:2:0.

Method 5: Splice the chroma component of the base layer reconstructed block with the enhancement layer reconstructed block to obtain the target reconstructed block, where the sampling format of the base layer reconstructed block is YUV4:2:2, and the enhancement layer picture block is either a UV22 reconstructed block or a UV11 reconstructed block.

The following describes the solutions in the foregoing method embodiments by using several specific embodiments. For example, a to-be-processed picture is a YUV4:4:4 picture. Four pixels: an upper left pixel, an upper right pixel, a lower left pixel, and a lower right pixel in any 2×2 block included in the picture are sequentially numbered 0, 1, 2, and 3, and chroma values of the pixels 0, 1, 2, and 3 are A0, A1, A2, and A3, respectively. It should be understood that the following uses an example in which a YUV4:4:4 picture block with a dimension of 2×2 is used as a to-be-processed picture block for description. However, this does not constitute a limitation on the solutions of this application.

In addition, in the following embodiments, a YUV4:4:4 picture block is also referred to as a YUV4:4:4 source picture, and a YUV4:4:4 reconstructed block is also referred to as a YUV4:4:4 reconstructed picture; a YUV4:2:2 picture block is also referred to as a YUV4:2:2 picture, and a YUV4:2:2 reconstructed block is also referred to as a YUV4:2:2 reconstructed picture; a YUV4:2:0 picture block is also referred to as a YUV4:2:0 picture, and a YUV4:2:0 reconstructed block is also referred to as a YUV4:2:0 reconstructed picture; a UVnn picture (or picture block) is also referred to as a UVnn chroma signal, and a UVnn reconstructed picture (or reconstructed block) is also referred to as a UVnn reconstructed signal, where n is 1, 2, or 3; a phase sampling information stream is also referred to as a sampling information stream; and a pixel is also referred to as a sample. It should be understood that the foregoing names are not limited, and are used merely for a person skilled in the art to understand the solutions.

In addition, in processes in the following embodiments, a processing process of a first chroma component of the to-be-processed picture block is used as an example for description. For a processing process of a second chroma component, refer to this.

### Embodiment 1

In this embodiment, chroma downsampling is performed based on a YUV4:4:4 picture block, and there is an encoding architecture of three layers. A YUV4:2:0 picture block is at a base layer, a UV11 picture block (namely, a UV11 chroma signal) is at a first-layer enhancement layer, and a UV22 picture block (namely, a UV22 chroma signal) is at a second-layer enhancement layer.

### Encoder side

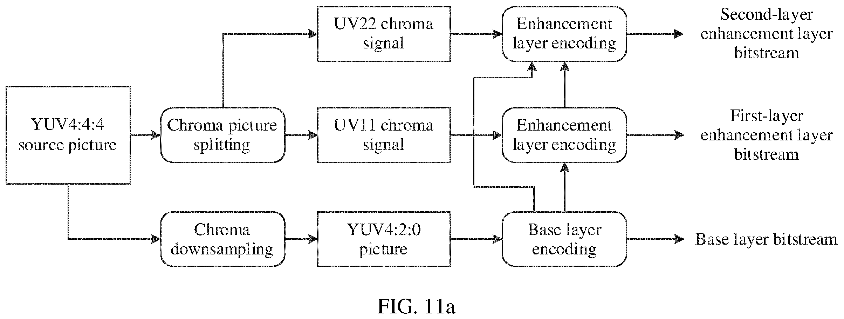

FIG. 11a is a diagram of an encoding framework. As shown in FIG. 11a, steps of the encoder side are as follows:
Step 1: Obtain the YUV4:4:4 source picture, and downsample a chroma component of the YUV4:4:4 source picture in a chroma phase point sampling mode, to obtain the YUV4:2:0 picture of the base layer.

A chroma component of the YUV4:2:0 picture may be considered as a UV11 picture (a UV11 signal). The chroma component of the YUV4:2:0 picture may be obtained by using two methods.

In one method, for each 2×2 block (chroma plane) in the YUV4:4:4 picture, a location and a chroma value of one phase point in four phase points included in the 2×2 block are selected, to form the UV11 picture. For example, a phase point 0 in each 2×2 block is selected, and a chroma value of the phase point 0 is directly obtained as a sampled chroma value, to form the UV11 picture.

In the other method, for each 2×2 block (chroma plane) in the YUV4:4:4 picture, a location of one phase point in four phase points included in the 2×2 block is selected, and then a chroma weighted average value of the four phase points in the corresponding 2×2 block is obtained and used as a sampled chroma value, to form the UV11 picture. For example, a phase point 0 in each 2×2 block is selected, and a sampled chroma value C0 may be an average value of chroma values of four phase points, that is, C0=(A0+A1+A2+A3)/4, to form the UV11 picture.

The obtained UV11 picture and a luma component in the YUV4:4:4 picture are spliced together, to obtain the YUV4:2:0 picture of the base layer. It is noted that the UV11 picture mentioned here is the chroma component of the YUV4:2:0 picture of the base layer and is different from the UV11 picture of the enhancement layer.

Step 2: Encode the YUV4:2:0 picture of the base layer, to obtain a base layer bitstream.

In this step, base layer encoding information may be obtained, including a prediction manner, a transform partition mode, an encoding parameter (for example, a quantization parameter), and the like, and a YUV4:2:0 reconstructed picture of the base layer may be obtained. The encoding information and the YUV4:2:0 reconstructed picture may be used to guide encoding of the enhancement layer. An existing standard encoder such as an AVC encoder or an HEVC encoder, or a non-standard encoder may be used for a base layer encoding manner. This is not limited herein.

Step 3: Perform splitting and point selecting on the chroma component of the YUV4:4:4 picture, to obtain the UV11 picture and the UV22 picture of the enhancement layers.

After the chroma component of the YUV4:2:0 picture of the base layer is removed from the chroma component of the YUV4:4:4 picture, a remaining chroma increment signal is a UV33 picture. The UV33 picture may be split into a UV11 picture and a UV22 picture. The two pictures do not include a same chroma phase point as the YUV4:2:0 picture of the base layer, and the UV11 picture and the UV22 picture do not include a same chroma phase point. For example, the chroma component of the YUV4:2:0 picture includes a phase point 0 of the chroma component of the YUV4:4:4 picture, the UV11 picture includes a phase point 2 of the chroma component of the YUV4:4:4 picture, and the UV22 picture includes phase points 1 and 3 of the chroma component of the YUV4:4:4 picture.

In this step, the UV11 picture or the UV22 picture may alternatively be obtained by performing phase sampling on the chroma component of the YUV4:4:4 picture. If a manner of obtaining a value of a phase point is used, a phase point of each of the UV11 picture and the UV22 picture is different from a phase point of the chroma component of the YUV4:2:0 picture, and the UV11 picture and the UV22 picture do not include a same phase point. If a weighted filtering manner is used, a same calculation manner or weight value is not used to calculate a sampled chroma value for YUV4:2:0 picture, UV11 picture, and the UV22 picture.

It should be noted that a sampling mode for obtaining the chroma component of the YUV4:2:0 picture may be different from a sampling mode for obtaining the phase point of the UV11 picture or the UV22 picture. For example, in a 2×2 block of the YUV4:4:4 picture, chroma values of phase points 0, 1, 2, and 3 are A0, A1, A2, and A3, respectively. The phase point 0 may be selected as the chroma component of the YUV4:2:0 picture, and the sampled chroma value is obtained in a weighted filtering manner, that is, weighted averaging is performed on the chroma values of the four phase points of the 2×2 block of the YUV4:4:4 picture, where C0=(A0+A1+A2+A3)/4. A manner of obtaining a value of a phase point may be used for the UV11 picture and the UV22 picture. For the UV11 picture, the phase point 2 is selected, and A2 is used as a sampled chroma value. For the UV22 picture, the phase point 1 and the phase point 3 are selected, and A1 and A3 are used as sampled chroma values. In this way, a weighted average value of all the four phase points of the YUV4:4:4 picture is assigned to phase points 0, to form the YUV4:2:0 picture, all phase points 2 form the UV11 picture, and all phase points 1 and 3 form the UV22 picture.

Step 4: Encode the UV11 picture of the first-layer enhancement layer, to obtain a first-layer enhancement layer bitstream.

In this step, encoding guidance and reference may be performed based on the base layer encoding information and the YUV4:2:0 reconstructed picture that are obtained in Step 2. For example, a chroma component of the YUV4:2:0 reconstructed picture may be used as a prediction reference of the UV11 picture of the enhancement layer, and a block split mode of the chroma component of the base layer may be used to guide block splitting of the UV11 picture of the enhancement layer. Similarly, an existing standard encoder or a non-standard encoder may be used for an enhancement layer encoding manner. This is not limited herein.

Step 5: Encode the UV22 picture of the second-layer enhancement layer, to obtain a second-layer enhancement layer bitstream.

In this step, encoding guidance and reference may be performed based on the base layer encoding information, the YUV4:2:0 reconstructed picture, encoding information of the first-layer enhancement layer, and the UV11 reconstructed picture that are obtained in Step 2 and Step 4. Similarly, an existing standard encoder or a non-standard encoder may be used for an enhancement layer encoding manner. This is not limited herein.

It should be noted that, in this embodiment of this application, an order of Step 4 and an order of Step 5 may alternatively be reversed. To be specific, the UV22 picture of the enhancement layer is encoded first, and then the UV11 picture of the enhancement layer is encoded. Then, when the UV11 picture of the enhancement layer is encoded, encoding guidance and reference may be performed based on a UV22 reconstructed picture and encoding information for encoding the UV22 picture of the enhancement layer. This is not specifically limited in this application.

In addition, the base layer in this embodiment of this application is the YUV4:2:0 picture. In actual application, scalable encoding may be performed on the YUV4:2:0 picture to obtain a YUV4:2:0 picture of multiple layers. The base layer in this embodiment of this application may be a YUV4:2:0 picture of an enhancement layer in this case.

### Decoder side

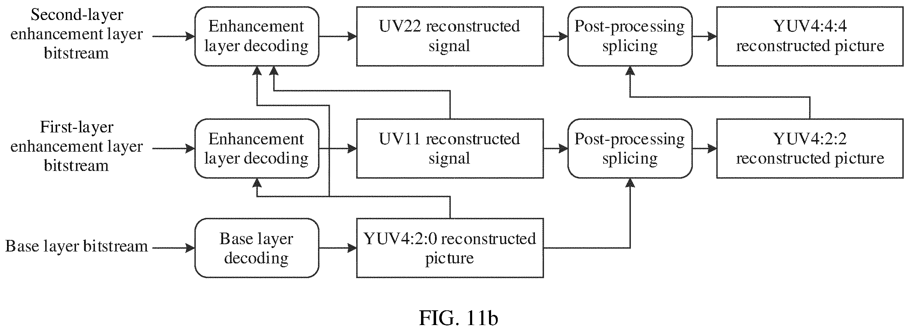

FIG. 11b is a diagram of a decoding framework. As shown in FIG. 11b, steps of the decoder side are as follows:
Step 1: Obtain the base layer bitstream, and perform decoding, to obtain the YUV4:2:0 reconstructed picture of the base layer.

Herein, a decoder corresponding to an encoder on the encoder side is used for decoding, and the decoder may be a standard or non-standard decoder. This is not limited herein.

Step 2: Obtain the first-layer enhancement layer bitstream, and perform decoding, to obtain the UV11 reconstructed picture of the first-layer enhancement layer.

During decoding, the YUV4:2:0 reconstructed picture and the base layer encoding information that are obtained through decoding the base layer may be used to assist in decoding, where the base layer encoding information includes the prediction manner, the transform partition mode, the encoding parameter, and the like. For example, the chroma component of the YUV4:2:0 reconstructed picture may be used as the prediction reference of the UV11 picture of the enhancement layer, and the block split mode of the chroma component of the base layer may be used to guide block splitting of the UV11 picture of the enhancement layer.

Step 3: Splice the YUV4:2:0 reconstructed picture of the base layer with the UV11 reconstructed picture of the first-layer enhancement layer, to obtain a YUV4:2:2 reconstructed picture.

In a splicing process, splicing may be performed based on chroma planes of the UV11 reconstructed picture and the YUV4:2:0 reconstructed picture, and a phase point included in the UV11 reconstructed picture is inserted into a chroma plane of the YUV4:2:0 reconstructed picture, to form a chroma plane including two phase points. When chroma splicing is performed herein, a location relationship needs to correspond to a location relationship of an odd-numbered row or even-numbered row of a phase point during chroma splitting of the encoder side. For example, when the encoder side samples a YUV4:4:4 picture to obtain a YUV4:2:0 picture, if a phase point in an odd-numbered row, namely, a phase point 0 or a phase point 1, is used, a phase point included in a chroma plane of the YUV4:2:0 reconstructed picture needs to be placed at a phase point 0 of a chroma plane of the YUV4:2:2 reconstructed picture (corresponding to an odd-numbered row of the chroma plane of the YUV4:2:2 reconstructed picture); or if a phase point in an even-numbered row, namely, a phase point 2 or a phase point 3, is used, a phase point included in a chroma plane of the YUV4:2:0 reconstructed picture needs to be placed at a phase point 1 of a chroma plane of the YUV4:2:2 reconstructed picture (corresponding to an even-numbered row of the chroma plane of the YUV4:2:2 reconstructed picture). Then, the phase point included in the chroma plane of the UV11 reconstructed picture is placed at another phase point of the chroma plane of the YUV4:2:2 reconstructed picture.

In this step, a filtering process may also be performed, and multi-phase-point filtering is performed based on the chroma plane of the YUV4:2:0 reconstructed picture and/or the chroma plane of the UV11 reconstructed picture, to obtain a chroma value, obtained without filtering and interpolation, of each phase point in the chroma plane of the YUV4:2:2 reconstructed picture. For example, corresponding to two phase points in the chroma plane of the YUV4:2:2 reconstructed picture, if a chroma value of the phase point of the chroma plane of the YUV4:2:0 reconstructed picture is C₀', and a chroma value of the phase point of the chroma plane of the UV11 reconstructed picture is A₂', a chroma value Gd₀ of the phase point 0 in the chroma plane of the YUV4:2:2 reconstructed picture may be obtained by performing filtering calculation on the two phase points, for example, Gd₀=2×C₀'-A₂', and a chroma value Gd₁ of the phase point 1 may be directly the chroma value of the phase point of the chroma plane of the UV11 reconstructed picture, that is, Gd₁=A₂', or a value Gd₁ of the phase point 1 may be obtained by performing weighted averaging on chroma values near the location in the UV11 reconstructed picture.

Step 4: Obtain the second-layer enhancement layer bitstream, and perform decoding, to obtain the UV22 reconstructed picture of the second-layer enhancement layer.

Same as Step 2, during decoding, the YUV4:2:0 reconstructed picture and the encoding information that are obtained through decoding the base layer, and the UV11 reconstructed picture and the encoding information that are obtained from the first-layer enhancement layer may be used to assist in decoding.

Step 5: Splice the UV22 reconstructed picture with the YUV4:2:2 reconstructed picture, to obtain a YUV4:4:4 reconstructed picture.

Similar to Step 3, a simple splicing process may be performed, and phase points of a chroma plane of the UV22 reconstructed picture are inserted into the chroma plane of the YUV4:2:2 reconstructed picture, to form a chroma plane with four phase points. Before splicing, the YUV4:2:2 reconstructed picture may be considered as the YUV4:2:0 picture and the UV11 picture. When chroma splicing is performed, a phase point needs to correspond to a phase point during chroma splitting of the encoder side. For example, when the encoder side samples a YUV4:4:4 picture to obtain a YUV4:2:0 picture, a phase point 0 is used; when the UV11 picture is obtained through sampling or splitting, a phase point 2 is used; and when the UV22 picture is obtained through sampling or splitting, phase points 1 and 3 are used. In this case, when the decoder side performs splicing restoration, the phase point of the chroma plane of the YUV4:2:0 reconstructed picture also needs to be placed at the phase point 0 of the chroma plane of the YUV4:4:4 reconstructed picture, the phase point of the chroma plane of the UV11 reconstructed picture needs to be placed at the phase point 2 of the chroma plane of the YUV4:4:4 reconstructed picture, and the phase points of the chroma plane of the UV22 reconstructed picture need to be placed at the phase points 1 and 3 of the chroma plane of the YUV4:4:4 reconstructed picture.

In this step, a post-processing process may also be performed, and multi-phase-point filtering is performed based on the chroma plane of the YUV4:2:2 reconstructed picture and/or the chroma plane of the UV22 reconstructed picture, to obtain a chroma value, obtained without filtering and interpolation, of each phase point in the chroma plane of the YUV4:4:4 reconstructed picture. For example, corresponding to four phase points in the chroma plane of the YUV4:4:4 reconstructed picture, if a chroma value of the phase point of the chroma plane of the YUV4:2:0 reconstructed picture is C₀', a chroma value of the phase point of the chroma plane of the UV11 reconstructed picture is A₂', and chroma values of the phase points of the chroma plane of the UV22 reconstructed picture are A₁' and A₃', a chroma value Gd₀ of the phase point 0 in the chroma plane of the YUV4:4:4 reconstructed picture may be obtained by performing filtering calculation on the four phase points, for example, Gd₀=4*C₀'-A₂'-A₁'-A₃', a chroma value Gd₂ of the phase point 2 may be directly the chroma value of the phase point of the chroma plane of the UV11 reconstructed picture, that is, Gd₂=A₂', and values Gd₁ and Gd₃ of the phase point 1 and the phase point 3 may also be directly the chroma values A₁' and A₃' of the phase points of the chroma plane of the UV22 reconstructed picture, that is, Gd₁=A₁', and Gd₃=A₃'.

In this embodiment, the chroma component of the YUV4:4:4 picture is split and then layered, phase points of the enhancement layers do not overlap, and phase points of the enhancement layer and the base layer do not overlap, thereby reducing redundant encoding information. The enhancement layer can refer to information about an encoded base layer or encoded enhancement layer, so that efficiency of encoding a chroma component can be better improved, and transmission bandwidth can be saved. The chroma component is layered. When the second-layer enhancement layer cannot be successfully sent due to network fluctuation, the decoder side may obtain, by using the pictures of the base layer and first-layer enhancement layer, the YUV4:2:2 reconstructed picture for display. When all enhancement layers fail to pass due to network fluctuation, the decoder side may use the YUV4:2:0 reconstructed picture of the base layer for display. In this way, an end-to-end delay from picture generation to picture display is reduced.

### Embodiment 2

In this embodiment, chroma downsampling is performed based on a YUV4:4:4 picture block, and there is an encoding architecture of two layers. A YUV4:2:0 picture block is at a base layer, and a UV11 picture block is at an enhancement layer.

### Encoder side

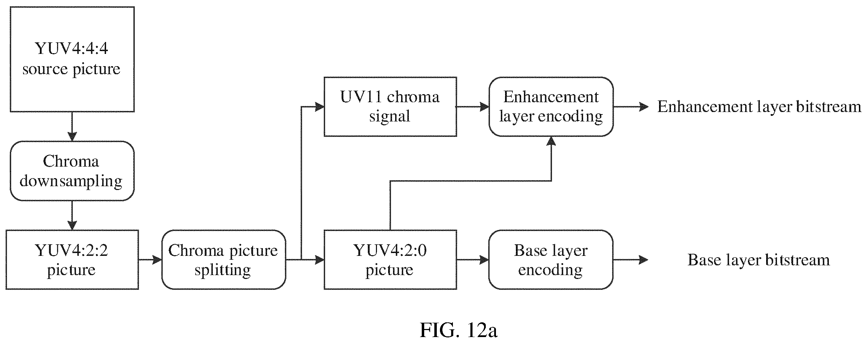

FIG. 12a is a diagram of an encoding framework. As shown in FIG. 12a, steps of the encoder side are as follows:
Step 1: Obtain the YUV4:4:4 source picture, and downsample a chroma component of the YUV4:4:4 source picture in a chroma phase point sampling mode, to obtain a YUV4:2:2 picture.

Chrominance of the YUV4:2:2 picture may be obtained, by using the following several methods, through phase point sampling.

A first method is phase point selecting. Two phase points are selected from four phase points of a chroma plane of the YUV4:4:4 picture as two phase points of a chroma plane of the YUV4:2:2 picture, to form a chroma component of the YUV4:2:2 picture. A method for selecting a phase point may not be limited. For example, a phase point 0 and a phase point 2 may be selected, or a phase point 0 and a phase point 3 may be selected, or a phase point 1 and a phase point 2 may be selected.

A second method is weighted filtering. Two fixed samples in four phase points of a chroma plane of the YUV4:4:4 picture are specified as two phase points of a chroma plane of the YUV4:2:2 picture, but chroma values of the phase points are obtained through weighted filtering. For example, it is specified that a first sample is located at a phase point 0 of a chroma plane of the YUV4:4:4 picture, and then an average value of chroma values of the phase point 0 and a phase point 1 is used as a chroma value of the sample; and a second sample is located at a phase point 3 of the chroma plane of the YUV4:4:4 picture, and then an average value of chroma values of a phase point 2 and the phase point 3 is used as a chroma value of the sample.

A third method is a hybrid method of phase point selecting and weighted filtering. After two phase points are selected from four phase points of a chroma plane of the YUV4:4:4 picture as two phase points of a chroma plane of the YUV4:2:2 picture (in this case, the chroma plane of the YUV4:2:2 picture has been obtained), if a chroma value of a phase point 0 is G₀, and a chroma value of a phase point 1 is Gi, a chroma value of a phase point 0 of the chroma plane of the YUV4:2:2 picture may be changed to an average value of the chroma values of the two phase points, that is, a value G₀' of the phase point 0 is re-obtained by using G₀'=(G₀+G₁)/2, and a chroma value G₁ of the phase point 1 remains unchanged. In this way, when the YUV4:2:2 picture is split into the YUV4:2:0 picture in a subsequent step, pixel values of a plurality of chroma phases are fused with chrominance of the picture, so that chroma information is more continuous, and no chroma breakpoint is generated.

Step 2: Split the YUV4:2:2 picture into the YUV4:2:0 picture and the UV11 picture.

In this step, a luma component in the YUV4:2:2 picture is spliced with all points of the phase point 0 of the chroma plane, to form the YUV4:2:0 picture, and all points of the phase point 1 of the chroma plane of the YUV4:2:2 picture may form the UV11 picture. It should be noted that how to select phase points of the YUV4:2:2 picture to form the YUV4:2:0 picture and the UV11 picture is not specifically limited.

Step 3: Encode the YUV4:2:0 picture of the base layer.

Refer to Step 2 of the encoder side in Embodiment 1.

Step 4: Encode the UV11 picture of the enhancement layer.

Refer to Step 4 of the encoder side in Embodiment 1.

It should be noted that, in this embodiment, the UV11 picture may alternatively be encoded without reference to encoding information of the YUV4:2:0 picture of the base layer, because a chroma correlation between the UV11 picture herein and the YUV4:2:0 picture may be low. In this way, the UV11 picture can be encoded separately, and UV11 picture encoding can be processed in parallel when a bit rate does not increase greatly, thereby improving an encoding speed.

### Decoder side

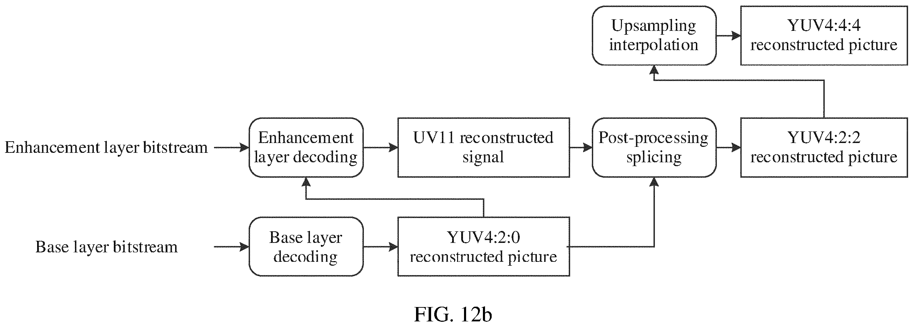

FIG. 12b is a diagram of a decoding framework. As shown in FIG. 12b, steps of the decoder side are as follows:
Step 1: Refer to Step 1 of the decoder side in Embodiment 1.
Step 2: Refer to Step 2 of the decoder side in Embodiment 1.

It should be noted that, corresponding to the encoder side, in this embodiment, an enhancement layer may be decoded without reference to information about a base layer.

Step 3: Refer to Step 3 of the decoder side in Embodiment 1. A chroma plane of a YUV4:2:0 reconstructed picture of the base layer and a chroma plane of a UV11 reconstructed picture of the enhancement layer may be spliced, or a chroma plane of a YUV4:2:2 reconstructed picture may be obtained by using a post-processing filtering process.

If the encoder side performs chroma sampling by using the third method, the decoder side may perform the following operations:
(1) A phase point of the chroma plane of the YUV4:2:0 reconstructed picture is placed at a phase point 0 of the chroma plane of the YUV4:2:2 reconstructed picture, and a phase point of the chroma plane of the UV11 reconstructed picture is placed at a phase point 1 of the chroma plane of the YUV4:2:2 reconstructed picture, to obtain the YUV4:2:2 reconstructed picture. It may be assumed that a value of the phase point 0 is Gd₀', and a value of the phase point 1 is Gd₁.
(2) The phase point 0 of the chroma plane of the YUV4:2:2 picture is restored based on the chroma plane of the UV11 reconstructed picture and the chroma plane of the YUV4:2:0 reconstructed picture by using an inverse process of filtering performed by the encoder side. For example, the encoder side obtains the phase point 0 (whose value is G₀'=(G₀+G₁)/2) by calculating an average value of the phase point 0 (whose value is G₀) and the phase point 1 (whose value is G₁), and obtains from (1) that the value of the phase point 0 of the chroma plane of the reconstructed YUV4:2:2 picture is Gd₀', and the value of the phase point 1 is Gd₁, a value Gd₀ of the phase point 0 of the chroma plane of the YUV4:2:2 reconstructed picture may be obtained by using a formula Gd₀=2*Gd₀'-Gd₁.

Step 4: Perform upsampling interpolation on the chroma plane of the YUV4:2:2 reconstructed picture, to obtain a YUV4:4:4 reconstructed picture.

In this step, the decoder side needs to obtain, in advance, two phase points that are selected when the encoder side performs phase point sampling on the chroma plane of the YUV4:4:4 picture to obtain the YUV4:2:2 picture, the information may be obtained through negotiation between the encoder side and the decoder side, or the encoder side transmits the information to the decoder side.

Based on the known chroma phase downsampling information, the two phase points of the chroma plane of the YUV4:2:2 reconstructed picture may be first placed on corresponding phase points of a chroma plane of the YUV4:4:4 reconstructed picture. For example, when the encoder side obtains the chroma plane of the YUV4:2:2 picture through sampling, the phase point 0 and the phase point 2 in the four phase points of the chroma plane of the YUV4:4:4 picture are selected. In this case, the decoder side may separately place the two phase points of the chroma plane of the YUV4:2:2 reconstructed picture on a phase point 0 and a phase point 2 of the chroma plane of the YUV4:4:4 reconstructed picture. Then, a value of a missing pixel in the chroma plane of the YUV4:4:4 picture may be obtained based on an existing chroma value in an interpolation or prediction manner. For example, chroma values of a phase point 1 and a phase point 3 of the chroma plane of the YUV4:4:4 reconstructed picture may be calculated by performing interpolation filtering on existing chroma values near the phase points, or may be obtained by performing prediction and estimation on existing chroma values near the phase points.

In this embodiment, the chroma component of the YUV4:4:4 picture is downsampled to obtain the YUV4:2:2 picture and then layered, so that chroma signal information is effectively used, more chroma information is retained by using fewer chroma pixels, an amount of layered data is smaller than that of the YUV4:4:4 picture, a processing method is simple, computing resources can be saved, a quantity of layers can be reduced, and a bit rate can be reduced. Information of the enhancement layer and information of the base layer do not overlap, so that redundant encoding information is reduced. The chroma component is layered. When the enhancement layer fails to pass due to network fluctuation, the decoder side may use the YUV4:2:0 reconstructed picture of the base layer for display. In this way, an end-to-end delay from picture generation to picture display is reduced.

### Embodiment 3

In this embodiment, based on Embodiment 2, phase sampling information is added, so that a chroma component of a YUV4:4:4 reconstructed picture can be better restored by a decoder side.

### Encoder side

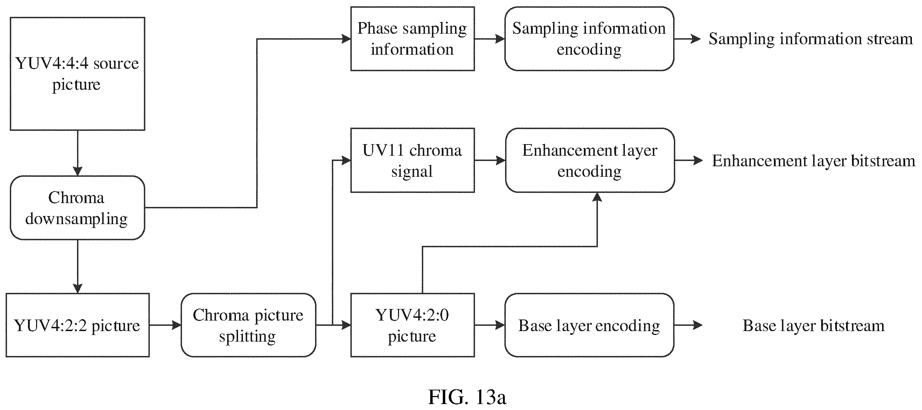

FIG. 13a is a diagram of an encoding framework. As shown in FIG. 13a, steps of the encoder side are as follows:
Step 1: Obtain a YUV4:4:4 source picture, perform adaptive phase downsampling on a chroma component of the YUV4:4:4 source picture in a chroma phase point sampling mode, to obtain a YUV4:2:2 picture, and generate the phase sampling information.

When phase point sampling is performed to obtain a chroma component of the YUV4:2:2 picture, chroma values of four phase points are considered to be analyzed in each 2×2 block (chroma plane), and two different phase points may be selected from different chroma planes to construct a chroma plane of the YUV4:2:2 picture. A phase selection manner of each chroma plane is marked, and a signal including these marks is phase sampling information. It should be noted that a manner of selecting a phase in a chroma plane may not be limited. For example, two phase points with a largest color difference in four phases may be selected as chroma samples.

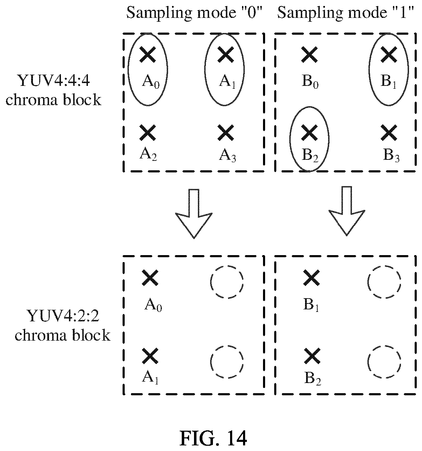

FIG. 14 is a diagram of adaptive chroma phase point sampling. As shown in FIG. 14, for two chroma planes of a YUV4:4:4 picture, chroma values of four phase points: phase points 0, 1, 2, and 3 of a left chroma plane are respectively A0, A1, A2, and A3, and it is found through pairwise comparing that a difference between A0 and A1 is greater than a difference between those of other two phase points, so that the phase point 0 and the phase point 1 may be selected from the four phase points of the left chroma plane to construct a chroma plane of a YUV4:2:2 picture; and chroma values of four phase points: phase points 0, 1, 2, and 3 of a right chroma plane are respectively B0, B1, B2, and B3, and it is found through pairwise comparing that a difference between B1 and B2 is greater than a difference between those of other two phase points, so that the phase point 1 and the phase point 2 may be selected from the four phase points of the right chroma plane to construct the chroma plane of the YUV4:2:2 picture. In addition, a mode in which the phase point 0 and the phase point 1 are used as samples may be marked as 0, and a mode in which the phase point 1 and the phase point 2 are used as samples may be marked as 1. Therefore, a phase sampling mode of the left chroma plane may be marked as "0", and a phase sampling mode of the right chroma plane may be marked as "1". In this way, marking values of the phase sampling modes of all the chroma planes form phase sampling information, and marking values of phase sampling modes corresponding to all the chroma planes may be different.

After the point selecting and sampling are performed to obtain the chroma plane of the YUV4:2:2 picture, the phase points may be further filtered with reference to the third method in Step 1 of the encoder side in Embodiment 2. Details are not described herein again.

Step 2: Refer to Step 2 of the encoder side in Embodiment 2.

Step 3: Refer to Step 3 of the encoder side in Embodiment 2.

Step 4: Refer to Step 4 of the encoder side in Embodiment 2.

In this embodiment, a UV11 picture may alternatively be encoded without reference to encoding information of the YUV4:2:0 picture of a base layer.

Step 5: Encode the phase sampling information, to obtain a phase sampling information bitstream.

Lossless encoding needs to be performed for the encoding herein, so that the phase sampling information can be transmitted to the decoder side without distortion. In this step, an existing standard encoder or a non-standard encoder may be used for encoding. This is not limited herein.

### Decoder side

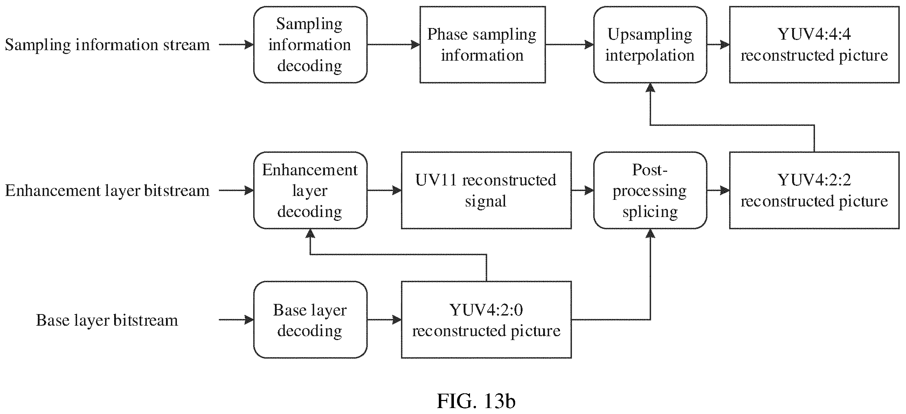

FIG. 13b is a diagram of a decoding framework. As shown in FIG. 13b, steps of the decoder side are as follows:
Step 1: Refer to Step 1 of the decoder side in Embodiment 2.
Step 2: Refer to Step 2 of the decoder side in Embodiment 2.

It should be noted that, corresponding to the encoder side, in this embodiment, an enhancement layer may be decoded without reference to information about the base layer.

Step 3: Refer to Step 3 of the decoder side in Embodiment 2.

Step 4: Obtain the phase sampling information bitstream, and perform decoding, to obtain the phase sampling information. A decoder is a decoder that can decode the phase sampling information stream and that matches the encoder side.

Step 5: Refer to Step 4 of the decoder side in Embodiment 2.

A main difference lies in that the phase sampling information is used to perform auxiliary sampling interpolation and restoration on a chroma plane of the YUV4:4:4 reconstructed picture.

In this step, the phase sampling information is parsed, and two phase points of the chroma plane of the YUV4:2:2 picture are placed on phases of a corresponding chroma plane of the YUV4:4:4 picture. For example, for a chroma plane, if it is obtained through parsing that a marking value of a phase sampling mode is "0", two phase points of the chroma plane of the YUV4:2:2 picture in the chroma plane are placed on a phase point 0 and a phase point 1; and for another chroma plane, if it is obtained through parsing that a marking value of a phase sampling mode is "1", two phase points of the chroma plane of the YUV4:2:2 picture in the chroma plane are placed on the phase point 1 and a phase point 2.

In this way, after this operation is performed on each chroma plane, a chroma value of a missing phase point is obtained by performing interpolation or prediction on the chroma plane. For a subsequent calculation process, refer to Step 4 of the decoder side in Embodiment 2.

This embodiment is the same as Embodiment 2, and the phase sampling information enables more flexible chroma sampling of the encoder side, so that chroma information of the picture can be further retained. Therefore, subjective effect is better when restoration is performed by the decoder side.

### Embodiment 4

This embodiment is an extension of Embodiment 1, and the UV11 picture block and the UV22 picture block at the enhancement layer in Embodiment 1 are combined into a UV33 picture block for processing.

### Encoder side

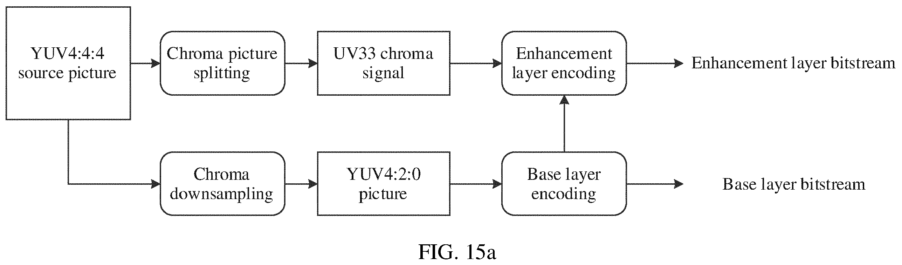

FIG. 15a is a diagram of an encoding framework. As shown in FIG. 15a, steps of the encoder side are as follows:
Step 1: Refer to Step 1 of the encoder side in Embodiment 1.
Step 2: Refer to Step 2 of the encoder side in Embodiment 1.
Step 3: Perform chroma plane splitting and point selecting on a chroma component of a YUV4:4:4 picture, to obtain a YUV4:2:0 picture of a base layer and a UV33 picture of an enhancement layer, where the UV33 picture does not include a same phase point as the YUV4:2:0 picture of the base layer. For a phase sampling obtaining manner, refer to Step 3 of the encoder side in Embodiment 1.
Step 4: Encode the UV33 picture of the enhancement layer, to obtain an enhancement layer bitstream.

In this step, encoding guidance and reference may be performed based on base layer encoding information and a YUV4:2:0 reconstructed picture that are obtained in Step 2. For example, a chroma component of the YUV4:2:0 reconstructed picture of the base layer may be used as a prediction reference of the UV33 picture of the enhancement layer, and a block split mode of the chroma component of the base layer may be used to guide block splitting of the UV33 picture of the enhancement layer. Similarly, an existing standard encoder or a non-standard encoder may be used for an enhancement layer encoding manner. This is not limited herein.

### Decoder side

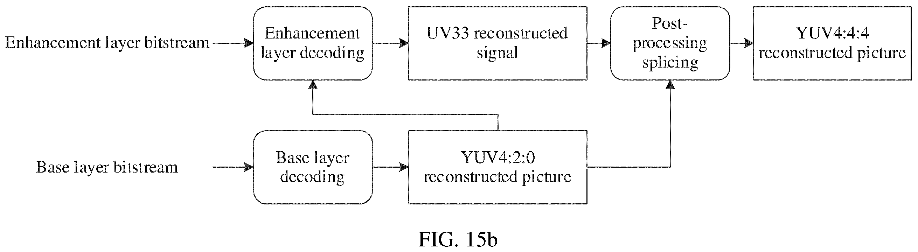

FIG. 15b is a diagram of a decoding framework. As shown in FIG. 15b, steps of the decoder side are as follows:
Step 1: Refer to Step 1 of the decoder side in Embodiment 1.
Step 2: Obtain the enhancement layer bitstream, and perform decoding, to obtain a UV33 reconstructed picture of the enhancement layer.

During decoding, the YUV4:2:0 reconstructed picture and information included in the base layer that are obtained through decoding the base layer may be used to assist in decoding, where the information includes a prediction manner, a transform partition mode, an encoding parameter, and the like. For example, the chroma component of the YUV4:2:0 reconstructed picture of the base layer may be used as a prediction reference of the UV33 reconstructed picture of the enhancement layer, and a block split mode of the chroma component of the base layer may be used to guide block splitting of the UV33 reconstructed picture of the enhancement layer.

Step 3: Perform post-processing splicing on the YUV4:2:0 reconstructed picture of the base layer and the UV33 reconstructed picture of the enhancement layer, to obtain a YUV4:4:4 reconstructed picture.

Similar to Step 5 of the decoder side in Embodiment 1, a simple splicing process may be performed, and phase points of a chroma plane of the UV33 reconstructed picture are inserted into a chroma plane of the YUV4:2:0 reconstructed picture, to form a chroma plane with four phase points. When splicing is performed, a phase point needs to correspond to a phase point during chroma sampling or splitting of the encoder side. For example, when the encoder side samples a YUV4:4:4 picture to obtain a YUV4:2:0, a phase point 0 is used; and when a UV33 picture is obtained through sampling or splitting, phase points 1, 2, and 3 are used. In this case, when the decoder side performs splicing restoration, the phase point of the chroma plane of the YUV4:2:0 reconstructed picture also needs to be placed at the phase point 0 of the chroma plane of the YUV4:4:4 reconstructed picture, and the phase points of the chroma plane of the UV33 reconstructed picture need to be placed at the phase points 1, 2, and 3 of the chroma plane of the YUV4:4:4 reconstructed picture, correspond to phase sampling locations.

In this step, a post-processing process may also be performed, and multi-phase-point filtering is performed based on the chroma plane of the YUV4:2:0 reconstructed picture and/or the chroma plane of the UV33 reconstructed picture, to obtain a chroma value, obtained through filtering and interpolation, of each phase point in the chroma plane of the YUV4:4:4 reconstructed picture. For example, in the chroma plane corresponding to the YUV4:4:4 reconstructed picture, a chroma value of the phase point of the chroma plane of the YUV4:2:0 reconstructed picture is C₀', and chroma values of the phase points of the chroma plane of the UV33 reconstructed picture are A₁', A₂', and A₃' respectively. In this case, a chroma value Gd₀ of the phase point 0 may be obtained by performing filtering calculation on the four phase points, for example, Gd₀=4*C₀'-A₂'-A₁'-A₃', and chroma values Gd₁, Gd₂, and Gd₃ of the phase points 1, 2, and 3 may be directly chroma values corresponding to the chroma plane of the UV33 reconstructed picture, that is, Gd₁=A₁', Gd₂=A₂', and Gd₃=A₃'.

### Embodiment 5

This embodiment is an extension of Embodiment 1. Chroma downsampling is performed based on a YUV4:4:4 picture block, and there is an encoding architecture of four layers. A YUV4:2:0 picture block is at a base layer, and a UV11 picture block is at each of a first-layer enhancement layer, a second-layer enhancement layer, and a third-layer enhancement layer.

### Encoder side

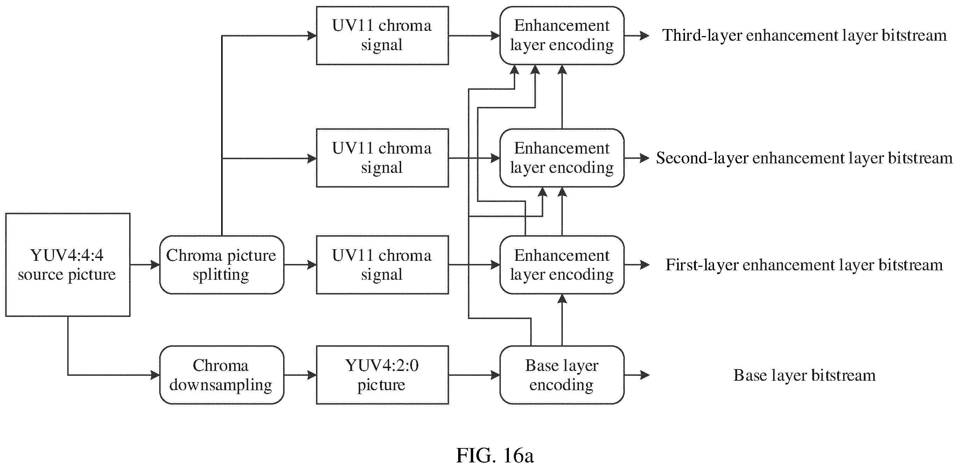

FIG. 16a is a diagram of an encoding framework. As shown in FIG. 16a, steps of the encoder side are as follows:
Step 1: Refer to Step 1 of the encoder side in Embodiment 1.
Step 2: Refer to Step 2 of the encoder side in Embodiment 1.
Step 3: Perform chroma plane splitting and point selecting on a chroma component of the YUV4:4:4 picture to, obtain the respective UV11 pictures of the first-layer, second-layer, and third-layer enhancement layers.

The UV11 picture of the enhancement layer does not include a same phase point as a chroma plane of the YUV4:2:0 picture of the base layer, and the UV11 pictures of the three layers do not include a same phase point.

For a phase sampling obtaining manner, refer to Step 3 of the encoder side in Embodiment 1.

Step 4: Separately encode the UV11 pictures of the first, second, and third layers, to obtain first-layer, second-layer, and third-layer enhancement layer bitstreams.

For encoding of a high-layer enhancement layer, a chroma component and encoding information of a reconstructed picture of a low-layer enhancement layer or the base layer may be used to assist in encoding. For details, refer to Step 4 of the encoder side in Embodiment 1. Details are not described herein again.

It should be noted that, in this embodiment, the UV11 picture of the third-layer enhancement layer may not be encoded, and only the first-layer and second-layer enhancement layer bitstreams are obtained through encoding. In this way, encoder resources can be saved, less chroma information is encoded, and an encoding speed is improved.

### Decoder side

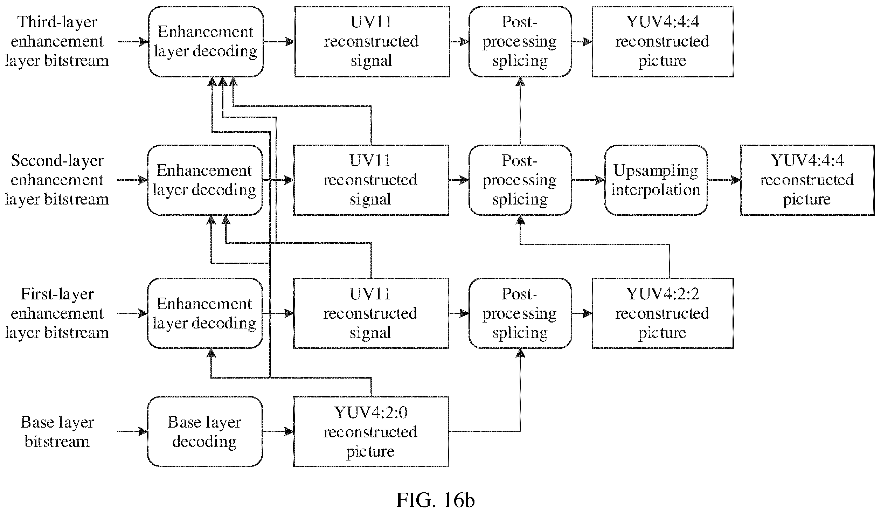

FIG. 16b is a diagram of a decoding framework. As shown in FIG. 16b, steps of the decoder side are as follows:
Step 1: Refer to Step 1 of the decoder side in Embodiment 1.
Step 2: Refer to Step 2 of the decoder side in Embodiment 1.
Step 3: Refer to Step 3 of the decoder side in Embodiment 1.
Step 4: Obtain the second-layer enhancement layer bitstream, and perform decoding, to obtain a UV11 reconstructed picture of the second-layer enhancement layer.

Similar to Step 2, during decoding, a YUV4:2:0 reconstructed picture and encoding information that are obtained through decoding the base layer, and a UV11 reconstructed picture and encoding information that are obtained from the first-layer enhancement layer may be used to assist in decoding.

Step 5: Perform post-processing splicing on the UV11 reconstructed picture of the second-layer enhancement layer and a YUV4:2:2 reconstructed picture obtained in Step 3, to obtain a YUV4:3:3 reconstructed picture.

Because each of chroma planes of the reconstructed picture includes three phase points, the reconstructed picture is referred to as the YUV 4:3:3 reconstructed picture in this embodiment.

The post-processing splicing process herein is similar to that in Step 3. A chroma component of the YUV4:2:2 reconstructed picture and the UV11 reconstructed picture of the second-layer enhancement layer are spliced, and when splicing is performed, a phase point needs to correspond to a phase point during chroma sampling or splitting of the encoder side. Alternatively, a post-processing filtering process is performed, and chroma filtering is performed to obtain a chroma component of the YUV4:3:3 reconstructed picture.

Step 6: If the third-layer enhancement layer bitstream or the UV11 reconstructed picture is not obtained, perform chroma upsampling interpolation on the YUV4:3:3 reconstructed picture obtained in Step 5, to obtain a YUV4:4:4 reconstructed picture.

For example, the encoder side does not encode the third-layer enhancement layer, or the third-layer enhancement layer bitstream is discarded during transmission. A main process of performing chroma upsampling interpolation herein is to obtain a chroma value of a fourth phase point missing in a chroma plane of the YUV4:4:4 reconstructed picture by performing chroma pixel interpolation or prediction on chroma values of three existing phase points in the chroma plane of the YUV4:3:3 reconstructed picture, so as to obtain the YUV4:4:4 reconstructed picture.

Step 7: If the decoder side can obtain the third-layer enhancement layer bitstream, decode the third-layer enhancement layer, to obtain a UV11 reconstructed picture of the third layer.

During decoding, the YUV4:2:0 reconstructed picture and the encoding information that are obtained through decoding the base layer, and the UV11 reconstructed picture and the encoding information that are obtained from the low-layer enhancement layer may be used to assist in decoding.

Step 8: Perform post-processing splicing on the UV11 reconstructed picture of the third-layer enhancement layer and the YUV4:3:3 reconstructed picture obtained in Step 5, to obtain a YUV4:4:4 reconstructed picture.

The post-processing splicing process herein is similar to that in Step 5, and a splicing or post-processing filtering process may be performed to obtain a chroma component of the YUV4:4:4 reconstructed picture.

### Embodiment 6

This embodiment is an extension of Embodiment 1 to Embodiment 5, and is an implementation of a chroma scaling solution in Embodiment 1 to Embodiment 5 in which a current existing encoder is used for temporal domain layered encoding.

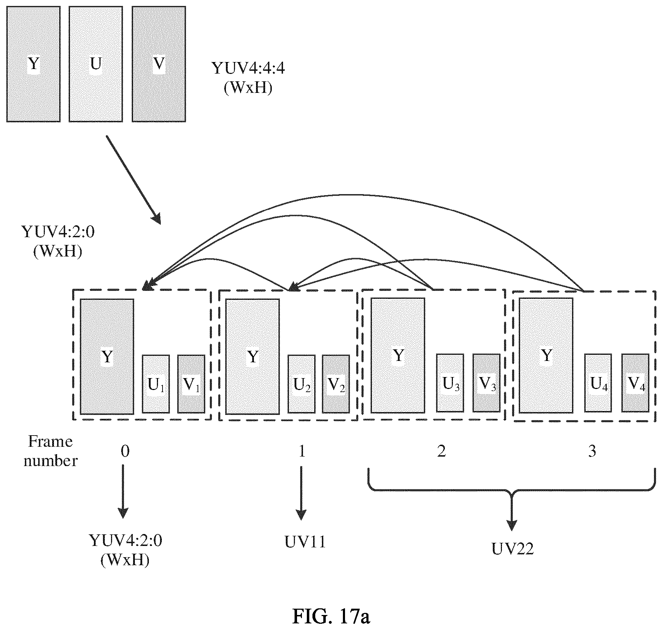

FIG. 17a shows a temporal domain structure of video chroma scalable coding based on a YUV4:4:4 picture in Embodiment 1. As shown in FIG. 17a, a frame of YUV4:4:4 picture whose width and height are W (width)×H (height) is sampled based on chrominance, to form a sequence including four frames of YUV4:2:0 pictures whose width and height are all W×H for encoding, and a reference relationship is specified during encoding, as shown by an arc arrow drawn on each frame in FIG. 17a. A first frame is encoded with reference to a zeroth frame, and a second frame and a third frame may be encoded with reference to the zeroth frame and the first frame.

Steps of an encoder side are as follows:
Step 1: Refer to Step 1 and Step 3 of the encoder side in Embodiment 1, to obtain a YUV4:2:0 picture of a base layer, a UV11 picture of a first enhancement layer, and a UV22 picture of a second enhancement layer.
Step 2: Obtain a luma component of a YUV4:4:4 picture, splice the luma component with the UV11 picture of the first enhancement layer into a YUV4:2:0 picture, and splice the picture after the YUV4:2:0 picture of the base layer, to form a sequence with two frames of YUV4:2:0 pictures, where a zeroth frame is the YUV4:2:0 picture of the base layer, and a first frame is the YUV4:2:0 picture obtained by splicing the UV11 picture.
Step 3: Split the UV22 picture of the second-layer enhancement layer into two UV11 pictures. During splitting, two phase points of a chroma plane of the UV22 picture may be separated to form chroma planes respectively, so that the two UV11 pictures can be obtained.
Step 4: Obtain the luma component of the YUV4:4:4 picture, and separately splice the luma component with the two UV11 pictures obtained in Step 3, to obtain two frames of YUV4:2:0 pictures. The two frames of pictures are sequentially spliced after the sequence with the two frames of pictures obtained in Step 2, to form a sequence with four frames of YUV4:2:0 pictures.
Step 5: Specify a reference relationship for frame encoding, and send the sequence with the YUV4:2:0 pictures in Step 4 to the encoder for encoding. For a frame with a lower ranking in a time sequence, refer to a frame with a higher ranking in the time sequence. A reference relationship is not limited. Corresponding to Embodiment 1, it may be specified that the reference relationship for encoding is that a first frame is encoded with reference to a zeroth frame, and a second frame and a third frame may be encoded with reference to the zeroth frame and the first frame.

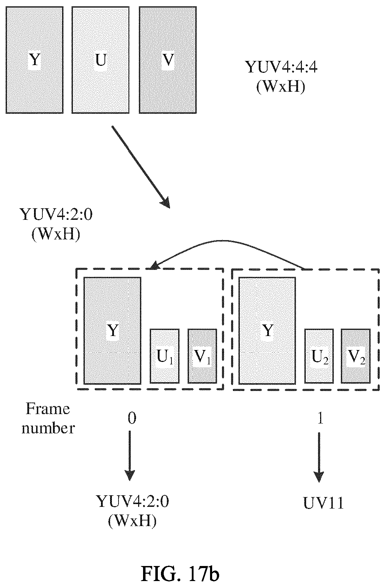

FIG. 17b shows a temporal domain structure of video chroma scalable coding based on a YUV4:4:4 picture in Embodiment 2 and Embodiment 3. As shown in FIG. 17b, a frame of YUV4:4:4 picture whose width and height are W (width)×H (height) is sampled based on chrominance, to form a sequence including two frames of YUV4:2:0 pictures whose width and height are all W×H for encoding, and a reference relationship is specified during encoding, as shown by an arc arrow drawn on each frame in FIG. 17b. A first frame is encoded with reference to a zeroth frame; or a first frame may be independently encoded without reference to a zeroth frame.

Steps of an encoder side are as follows:
Step 1: Obtain a YUV4:2:0 picture of a base layer and a UV11 picture of an enhancement layer with reference to the method of the encoder side in Embodiment 2 or Embodiment 3.
Step 2: Obtain a luma component of a YUV4:4:4 picture, splice the luma component with the UV11 picture of the enhancement layer into a YUV4:2:0 picture, and splice the picture after the YUV4:2:0 picture of the base layer, to form a sequence with two frames of YUV4:2:0 pictures, where a zeroth frame is the YUV4:2:0 picture of the base layer, and a first frame is the YUV4:2:0 picture obtained by splicing the UV11 picture.
Step 3: Specify a reference relationship for frame encoding, and send the sequence with the YUV4:2:0 pictures in Step 2 to the encoder for encoding. It is specified that the reference relationship for frame encoding is that a first frame is encoded with reference to a zeroth frame; or a first frame may be independently encoded without reference to a zeroth frame.

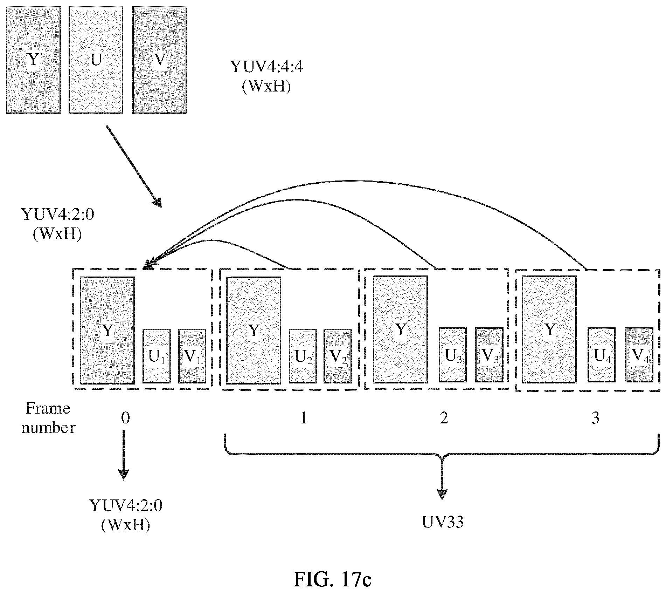

FIG. 17c shows a temporal domain structure of video chroma scalable coding based on a YUV4:4:4 picture in Embodiment 4. As shown in FIG. 17c, a frame of YUV4:4:4 picture whose width and height are W (width)×H (height) is sampled based on chrominance, to form a sequence including four frames of YUV4:2:0 pictures whose width and height are all W×H for encoding, and a reference relationship is specified during encoding, as shown by an arc arrow drawn on each frame in FIG. 17c. A first frame, a second frame, and a third frame are all encoded with reference to a zeroth frame.

Steps of an encoder side are as follows:
Step 1: Obtain a YUV4:2:0 picture of a base layer and a UV33 picture of an enhancement layer with reference to the method of the encoder side in Embodiment 4.
Step 2: Split the UV33 picture of the enhancement layer into three UV11 pictures. During splitting, three phase points of a chroma plane of the UV33 picture may be separated to form chroma planes respectively, so that the three UV11 pictures can be obtained.
Step 3: Obtain a luma component of a YUV4:4:4 picture, and separately splice the luma component with the three UV11 pictures obtained in Step 2, to obtain three frames of YUV4:2:0 pictures. The three frames of pictures are sequentially spliced after the YUV4:2:0 picture of the base layer obtained in Step 1, to form a sequence with four frames of YUV4:2:0 pictures.
Step 4: Specify a reference relationship for frame encoding, and send the sequence with the YUV4:2:0 pictures in Step 3 to the encoder for encoding. Likewise, for a frame with a lower ranking in a time sequence, refer to a frame with a higher ranking in the time sequence. A reference relationship is not limited. Corresponding to Embodiment 4, it may be specified that the reference relationship for encoding is that a first frame, a second frame, and a third frame are all encoded with reference to a zeroth frame.

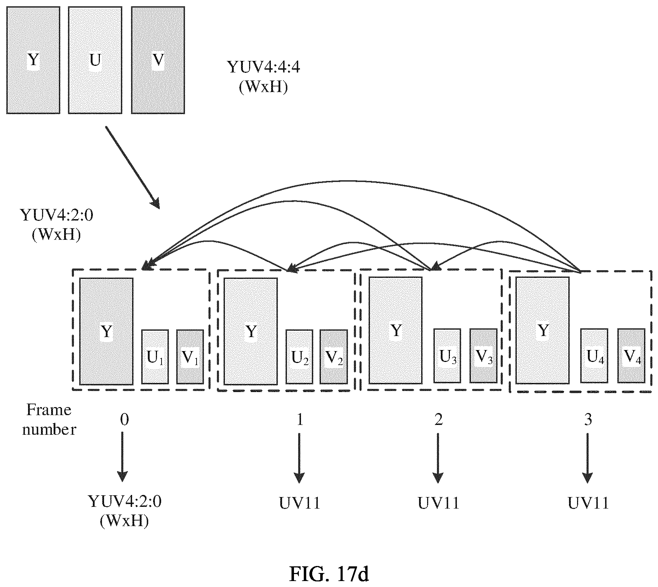

FIG. 17d shows a temporal domain structure of video chroma scalable coding based on a YUV4:4:4 picture in Embodiment 5 (UV11 pictures of three layers). As shown in FIG. 17d, a frame of YUV4:4:4 picture whose width and height are W (width)×H (height) is sampled based on chrominance, to form a sequence including four frames of YUV4:2:0 pictures whose width and height are all W×H for encoding, and a reference relationship is specified during encoding, as shown by an arc arrow drawn on each frame in FIG. 17d. A first frame may be encoded with reference to a zeroth frame, a second frame may be encoded with reference to the zeroth frame and the first frame, and a third frame may be encoded with reference to the zeroth frame, the first frame, and the second frame.

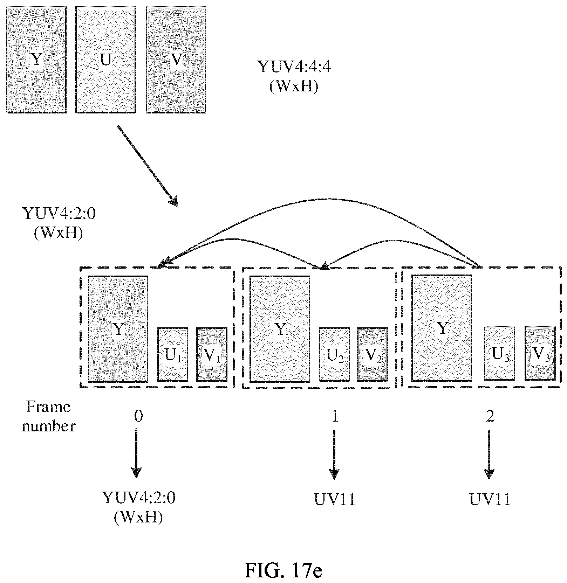

FIG. 17e shows a temporal domain structure of video chroma scalable coding based on a YUV4:4:4 picture in Embodiment 5 (UV11 pictures of two layers). As shown in FIG. 17e, a frame of YUV4:4:4 picture whose width and height are W (width)×H (height) is sampled based on chrominance, to form a sequence including three frames of YUV4:2:0 pictures whose width and height are all W×H for encoding, and a reference relationship is specified during encoding, as shown by an arc arrow drawn on each frame in FIG. 17e. A first frame may be encoded with reference to a zeroth frame, and a second frame may be encoded with reference to the zeroth frame and the first frame.

Steps of an encoder side are as follows:
Step 1: Obtain a YUV4:2:0 picture of a base layer and UV11 pictures of three enhancement layers with reference to the method of the encoder side in Embodiment 5.
Step 2: Obtain a luma component of a YUV4:4:4 picture, and separately splice the luma component with the three UV11 pictures obtained in Step 1, to obtain three frames of YUV4:2:0 pictures. The three frames of pictures are sequentially spliced after the YUV4:2:0 picture of the base layer obtained in Step 1, to form a sequence with four frames of YUV4:2:0 pictures, as shown in FIG. 17d. If the UV11 picture of the third-layer enhancement layer is not encoded, the luma component of the YUV4:4:4 picture is separately spliced with only the two UV11 pictures of the enhancement layers, to obtain two frames of YUV4:2:0 pictures, and then the two frames of pictures are sequentially spliced after the YUV4:2:0 picture of the base layer, to form a sequence with three frames of YUV4:2:0 pictures, as shown in FIG. 17e.
Step 3: Specify a reference relationship for frame encoding, and send the sequence with the YUV4:2:0 pictures in Step 2 to the encoder for encoding. Likewise, for a frame with a lower ranking in a time sequence, refer to a frame with a higher ranking in the time sequence. A reference relationship is not limited. As shown in FIG. 17d, a first frame may be encoded with reference to a zeroth frame, a second frame may be encoded with reference to the zeroth frame and the first frame, and a third frame may be encoded with reference to the zeroth frame, the first frame, and the second frame. As shown in FIG. 17e, a first frame may be encoded with reference to a zeroth frame, and a second frame may be encoded with reference to the zeroth frame and the first frame.

In this embodiment, the chroma layering solution in Embodiment 1 to Embodiment 5 may be obtained by using an existing hardware chip encoder, so that implementation costs of the solutions in Embodiment 1 to Embodiment 5 can be reduced.

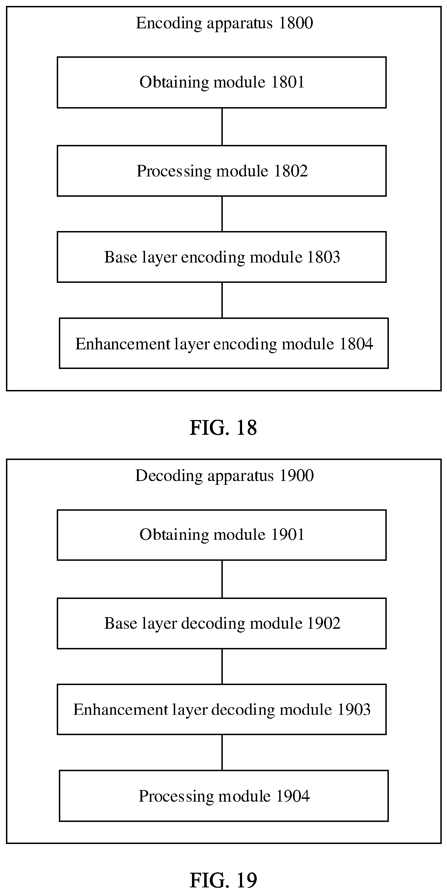

FIG. 18 is a diagram of a structure of an encoding apparatus 1800 according to an embodiment of this application. The encoding apparatus 1800 may be used in a video encoder 20 (or an encoder), and includes an obtaining module 1801, a processing module 1802, a base layer encoding module 1803, and an enhancement layer encoding module 1804.

The obtaining module 1801 is configured to obtain a to-be-processed picture block, where a dimension of the picture block is 2×2, and a chroma sampling rate of the picture block is higher than that of YUV4:2:0. The processing module 1802 is configured to obtain a base layer picture block and an enhancement layer picture block based on the picture block, where a chroma sampling rate of the base layer picture block is lower than the chroma sampling rate of the picture block, and a pixel included in a first chroma component of the enhancement layer picture block does not overlap a pixel included in a first chroma component of the base layer picture block. The base layer encoding module 1803 is configured to perform encoding based on the base layer picture block to obtain a base layer bitstream. The enhancement layer encoding module 1804 is configured to perform encoding based on the enhancement layer picture block to obtain an enhancement layer bitstream.

In a possible implementation, the processing module 1802 is specifically configured to: downsample a chroma component of the picture block to obtain a first picture block, where a sampling format of the first picture block is YUV4:2:0, and a first pixel in a first chroma component of the first picture block is obtained from a second pixel in four pixels included in a first chroma component of the picture block; and split the chroma component of the picture block to obtain a first UV picture block, where the first UV picture block is one of a UV33 picture block, a UV22 picture block, and a UV11 picture block; and
in this case, the base layer picture block includes the first picture block, and the enhancement layer picture block includes the first UV picture block.

In a possible implementation, the second pixel is a pixel at a preset location; and a chroma value of the first pixel is a chroma value of the second pixel; or a chroma value of the first pixel is an average value of chroma values of the four pixels.

In a possible implementation, the processing module 1802 is further configured to: when the first UV picture block is the UV33 picture block, split the first UV picture block to obtain a second UV picture block and a third UV picture block, where the second UV picture block is a UV11 picture block, and the third UV picture block is a UV22 picture block; and
in this case, the enhancement layer picture block includes the second UV picture block as a picture block of a first-layer enhancement layer and the third UV picture block as a picture block of a second-layer enhancement layer.

In a possible implementation, the processing module 1802 is further configured to split the third UV picture block to obtain a fourth UV picture block and a fifth UV picture block, where both the fourth UV picture block and the fifth UV picture block are UV11 picture blocks; and
in this case, the enhancement layer picture block includes the second UV picture block as the picture block of the first-layer enhancement layer, the fourth UV picture block as the picture block of the second-layer enhancement layer, and the fifth UV picture block as a picture block of a third-layer enhancement layer.

In a possible implementation, the processing module 1802 is further configured to: when the first UV picture block is the UV22 picture block, split the first UV picture block to obtain a sixth UV picture block and a seventh UV picture block, where
in this case, the enhancement layer picture block includes the sixth UV picture block as a picture block of a first-layer enhancement layer and the seventh UV picture block as a picture block of a second-layer enhancement layer.

In a possible implementation, the processing module 1802 is specifically configured to: downsample a chroma component of the picture block to obtain a second picture block, where a sampling format of the second picture block is YUV4:2:2, and a third pixel and a fourth pixel in a first chroma component of the second picture block are obtained from a fifth pixel and a sixth pixel in four pixels included in a first chroma component of the picture block; and split a chroma component of the second picture block to obtain a third picture block and an eighth UV picture block, where a sampling format of the third picture block is YUV4:2:0, and the eighth UV picture block is a UV11 picture block; and
in this case, the base layer picture block includes the third picture block, and the enhancement layer picture block includes the eighth UV picture block.

In a possible implementation, the fifth pixel and the sixth pixel are two pixels at preset locations in different rows; or the fifth pixel and the sixth pixel are two pixels with a largest chroma value difference in the four pixels.

In a possible implementation, a chroma value of the third pixel is a chroma value of the fifth pixel; or a chroma value of the third pixel is a weighted average value of chroma values of two pixels in a same row as the fifth pixel; or a chroma value of the third pixel is a weighted average value of a chroma value of the fifth pixel and a chroma value of the sixth pixel; and a chroma value of the fourth pixel is the chroma value of the sixth pixel; or a chroma value of the fourth pixel is a weighted average value of chroma values of two pixels in a same row as the sixth pixel.

In a possible implementation, the processing module 1802 is further configured to splice a luma component of the picture block with each of the second UV picture block, the fourth UV picture block, and the fifth UV picture block to obtain a fourth picture block, a fifth picture block, and a sixth picture block, where sampling formats of the fourth picture block, the fifth picture block, and the sixth picture block are all YUV4:2:0; and
in this case, the enhancement layer picture block includes the fourth picture block as the picture block of the first-layer enhancement layer, the fifth picture block as the picture block of the second-layer enhancement layer, and the sixth picture block as the picture block of the third-layer enhancement layer.

In a possible implementation, the processing module 1802 is further configured to splice a luma component of the picture block with each of the sixth UV picture block and the seventh UV picture block to obtain a seventh picture block and an eighth picture block, where sampling formats of the seventh picture block and the eighth picture block are both YUV4:2:0; and
in this case, the enhancement layer picture block includes the seventh picture block as the picture block of the first-layer enhancement layer and the eighth picture block as the picture block of the second-layer enhancement layer.

In a possible implementation, the processing module 1802 is further configured to splice a luma component of the picture block with the eighth UV picture block to obtain a ninth picture block, where a sampling format of the ninth picture block is YUV4:2:0; and
in this case, the enhancement layer picture block includes the ninth picture block.

In a possible implementation, a sampling format of the base layer picture block is YUV4:2:2, and the enhancement layer picture block is either a UV22 picture block or a UV11 picture block.

In a possible implementation, the enhancement layer encoding module 1804 is specifically configured to: obtain a base layer reconstructed block and/or base layer encoding information that correspond/corresponds to the base layer picture block; predict the enhancement layer picture block based on the base layer reconstructed block and/or the base layer encoding information to obtain an enhancement layer residual; and perform encoding based on the enhancement layer residual to obtain the enhancement layer bitstream.

In a possible implementation, the base layer encoding module 1803 is further configured to: obtain phase sampling information, where the phase sampling information includes information indicating a location of the fifth pixel and a location of the sixth pixel; and encode the phase sampling information.

In a possible implementation, a pixel included in a second chroma component of the enhancement layer picture block does not overlap a pixel included in a second chroma component of the base layer picture block.

In a possible implementation, the first chroma component is a component U, and the second chroma component is a component V; or the first chroma component is a component V, and the second chroma component is a component U.

The apparatus in this embodiment may be used to execute the technical solution of the method embodiment shown in FIG. 9. An implementation principle and technical effects of the apparatus are similar to those of the technical solution of the method embodiment shown in FIG. 9. Details are not described herein again.

FIG. 19 is a diagram of a structure of a decoding apparatus 1900 according to an embodiment of this application. The decoding apparatus 1900 may be used in a video decoder 30 (or a decoder), and includes an obtaining module 1901, a base layer decoding module 1902, an enhancement layer decoding module 1903, and a processing module 1904.

The obtaining module 1901 is configured to obtain a base layer bitstream and an enhancement layer bitstream. The base layer decoding module 1902 is configured to parse the base layer bitstream to obtain a base layer reconstructed block, where a dimension of the base layer reconstructed block is 2×2, and a chroma sampling rate of the base layer reconstructed block is higher than or equal to that of YUV4:2:0. The enhancement layer decoding module 1903 is configured to parse the enhancement layer bitstream to obtain an enhancement layer reconstructed block, where a pixel included in a first chroma component of the enhancement layer reconstructed block does not overlap a pixel included in a first chroma component of the base layer reconstructed block, and the pixel included in the first chroma component of the enhancement layer reconstructed block does not overlap the pixel included in the first chroma component of the base layer reconstructed block. The processing module 1904 is configured to obtain a target reconstructed block based on the base layer reconstructed block and the enhancement layer reconstructed block, where a chroma sampling rate of the target reconstructed block is higher than the chroma sampling rate of the base layer picture block.

In a possible implementation, the processing module 1904 is specifically configured to splice a chroma component of the base layer reconstructed block with the enhancement layer reconstructed block to obtain the target reconstructed block, where a first pixel in a first chroma component of the target reconstructed block is obtained based on a second pixel in the first chroma component of the base layer reconstructed block, and a sampling format of the base layer reconstructed block is YUV4:2:0.

In a possible implementation, a location of the first pixel is preset; and a chroma value of the first pixel is a chroma value of the second pixel; or a chroma value of the first pixel is obtained by performing inverse average calculation based on a chroma value of the second pixel.

In a possible implementation, the enhancement layer reconstructed block is a UV33 reconstructed block; or the enhancement layer reconstructed block includes a UV11 reconstructed block as a reconstructed block of a first enhancement layer and a UV22 reconstructed block as a reconstructed block of a second enhancement layer; or the enhancement layer reconstructed block includes a UV11 reconstructed block as a reconstructed block of a first enhancement layer, a UV11 reconstructed block as a reconstructed block of a second enhancement layer, and a UV11 reconstructed block as a reconstructed block of a third enhancement layer.

In a possible implementation, the processing module 1904 is specifically configured to: splice a chroma component of the base layer reconstructed block with the enhancement layer reconstructed block to obtain a first reconstructed block, where a sampling format of the first reconstructed block is YUV4:2:2, and a sampling format of the base layer reconstructed block is YUV4:2:0; and upsample a chroma component of the first reconstructed block to obtain the target reconstructed block, where a third pixel and a fourth pixel in a first chroma component of the target reconstructed block are obtained based on a fifth pixel and a sixth pixel in a first chroma component of the first reconstructed block.

In a possible implementation, the third pixel and the fourth pixel are two pixels at preset locations in different rows.

In a possible implementation, the base layer decoding module 1902 is further configured to perform decoding to obtain phase sampling information, where the phase sampling information includes information indicating a location of the third pixel and a location of the fourth pixel; and the processing module 1904 is further configured to determine the third pixel and the fourth pixel based on the phase sampling information.

In a possible implementation, a chroma value of the third pixel is a chroma value of the fifth pixel; or a chroma value of the third pixel is a deweighted average value of a chroma value of the fifth pixel and a chroma value of another pixel in a same row as the fifth pixel; or a chroma value of the third pixel is a deweighted average value of a chroma value of the fifth pixel and a chroma value of the sixth pixel; and a chroma value of the fourth pixel is the chroma value of the sixth pixel; or a chroma value of the fourth pixel is a deweighted average value of the chroma value of the sixth pixel and a chroma value of another pixel in a same row as the sixth pixel.

In a possible implementation, the processing module 1904 is specifically configured to obtain a chroma component of the enhancement layer reconstructed block; and splice a chroma component of the base layer reconstructed block with the chroma component of the enhancement layer reconstructed block to obtain the target reconstructed block, where a seventh pixel in a first chroma component of the target reconstructed block is obtained based on an eighth pixel in the first chroma component of the base layer reconstructed block, and a sampling format of the base layer reconstructed block is YUV4:2:0.

In a possible implementation, the processing module 1904 is specifically configured to: obtain a chroma component of the enhancement layer reconstructed block; and splice a chroma component of the base layer reconstructed block with the chroma component of the enhancement layer reconstructed block to obtain a second reconstructed block, where a sampling format of the second reconstructed block is YUV4:2:2, and a sampling format of the base layer reconstructed block is YUV4:2:0; and upsample a chroma component of the second reconstructed block to obtain the target reconstructed block, where a ninth pixel and a tenth pixel in a first chroma component of the target reconstructed block are obtained based on an eleventh pixel and a twelfth pixel in a first chroma component of the first reconstructed block.

In a possible implementation, a sampling format of the base layer reconstructed block is YUV4:2:2, and the enhancement layer picture block is either a UV22 reconstructed block or a UV11 reconstructed block.

In a possible implementation, a pixel included in a second chroma component of the enhancement layer picture block does not overlap a pixel included in a second chroma component of the base layer picture block.

In a possible implementation, the first chroma component is a component U, and the second chroma component is a component V; or the first chroma component is a component V, and the second chroma component is a component U.

The apparatus in this embodiment may be used to execute the technical solution of the method embodiment shown in FIG. 10. An implementation principle and technical effects of the apparatus are similar to those of the technical solution of the method embodiment shown in FIG. 10. Details are not described herein again.

In an implementation process, steps in the foregoing method embodiments can be implemented by using a hardware integrated logic circuit in the processor, or by using instructions in a form of software. The processor may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, or a discrete hardware component. The general-purpose processor may be a microprocessor, or the processor may be any conventional processor or the like. The steps of the methods disclosed in embodiments of this application may be directly presented as being performed and completed by a hardware encoding processor, or performed and completed by a combination of hardware and a software module in an encoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

The memory in the foregoing embodiments may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example rather than limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

A person of ordinary skill in the art may be aware that units and algorithm steps in the examples described with reference to embodiments disclosed in this specification may be implemented by electronic hardware or a combination of computer software and electronic hardware. Whether the functions are implemented by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed systems, apparatuses, and methods may be implemented in other manners. For example, the foregoing described apparatus embodiments are merely examples. For example, division into the units is merely logical function division and may be another division during actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate components may or may not be physically separate, and components displayed as units may or may not be physical units. To be specific, the components may be located at one location, or may be distributed on a plurality of network units. A part or all of the units may be selected based on actual requirements to achieve the objectives of the solutions in embodiments.

In addition, all functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions in this application essentially, or the part contributing to the conventional technology, or a part of the technical solutions may be implemented in a form of a software product. The computer software product is stored in a storage medium and includes several instructions for instructing a computer device (a personal computer, a server, a network device, or the like) to perform all or a part of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A picture encoding method, comprising:
obtaining a to-be-processed picture block, wherein a dimension of the picture block is 2×2, and a chroma sampling rate of the picture block is higher than that of YUV4:2:0;
obtaining a base layer picture block and an enhancement layer picture block based on the picture block, wherein a chroma sampling rate of the base layer picture block is lower than the chroma sampling rate of the picture block, and a pixel comprised in a first chroma component of the enhancement layer picture block does not overlap a pixel comprised in a first chroma component of the base layer picture block;
performing encoding based on the base layer picture block to obtain a base layer bitstream; and
performing encoding based on the enhancement layer picture block to obtain an enhancement layer bitstream.

2. The method according to claim 1, wherein the obtaining a base layer picture block and an enhancement layer picture block based on the picture block comprises:
downsampling a chroma component of the picture block to obtain a first picture block, wherein a sampling format of the first picture block is YUV4:2:0, and a first pixel in a first chroma component of the first picture block is obtained from a second pixel in four pixels comprised in a first chroma component of the picture block; and
splitting the chroma component of the picture block to obtain a first UV picture block, wherein the first UV picture block is one of a UV33 picture block, a UV22 picture block, and a UV11 picture block; and
in this case, the base layer picture block comprises the first picture block, and the enhancement layer picture block comprises the first UV picture block.

3. The method according to claim 2, wherein the second pixel is a pixel at a preset location; and
a chroma value of the first pixel is a chroma value of the second pixel; or a chroma value of the first pixel is an average value of chroma values of the four pixels.

4. The method according to claim 2 or 3, further comprising:
when the first UV picture block is the UV33 picture block, splitting the first UV picture block to obtain a second UV picture block and a third UV picture block, wherein the second UV picture block is a UV11 picture block, and the third UV picture block is a UV22 picture block; and
in this case, the enhancement layer picture block comprises the second UV picture block as a picture block of a first-layer enhancement layer and the third UV picture block as a picture block of a second-layer enhancement layer.

5. The method according to claim 4, further comprising:
splitting the third UV picture block to obtain a fourth UV picture block and a fifth UV picture block, wherein both the fourth UV picture block and the fifth UV picture block are UV11 picture blocks; and
in this case, the enhancement layer picture block comprises the second UV picture block as the picture block of the first-layer enhancement layer, the fourth UV picture block as the picture block of the second-layer enhancement layer, and the fifth UV picture block as a picture block of a third-layer enhancement layer.

6. The method according to claim 2 or 3, further comprising:
when the first UV picture block is the UV22 picture block, splitting the first UV picture block to obtain a sixth UV picture block and a seventh UV picture block, wherein
in this case, the enhancement layer picture block comprises the sixth UV picture block as a picture block of a first-layer enhancement layer and the seventh UV picture block as a picture block of a second-layer enhancement layer.

7. The method according to claim 1, wherein the obtaining a base layer picture block and an enhancement layer picture block based on the picture block comprises:
downsampling a chroma component of the picture block to obtain a second picture block, wherein a sampling format of the second picture block is YUV4:2:2, and a third pixel and a fourth pixel in a first chroma component of the second picture block are obtained from a fifth pixel and a sixth pixel in four pixels comprised in a first chroma component of the picture block; and
splitting a chroma component of the second picture block to obtain a third picture block and an eighth UV picture block, wherein a sampling format of the third picture block is YUV4:2:0, and the eighth UV picture block is a UV11 picture block; and
in this case, the base layer picture block comprises the third picture block, and the enhancement layer picture block comprises the eighth UV picture block.

8. The method according to claim 7, wherein the fifth pixel and the sixth pixel are two pixels at preset locations in different rows; or the fifth pixel and the sixth pixel are two pixels with a largest chroma value difference in the four pixels.

9. The method according to claim 7 or 8, wherein a chroma value of the third pixel is a chroma value of the fifth pixel; or a chroma value of the third pixel is a weighted average value of chroma values of two pixels in a same row as the fifth pixel; or a chroma value of the third pixel is a weighted average value of a chroma value of the fifth pixel and a chroma value of the sixth pixel; and
a chroma value of the fourth pixel is the chroma value of the sixth pixel; or a chroma value of the fourth pixel is a weighted average value of chroma values of two pixels in a same row as the sixth pixel.

10. The method according to claim 5, further comprising:
splicing a luma component of the picture block with each of the second UV picture block, the fourth UV picture block, and the fifth UV picture block to obtain a fourth picture block, a fifth picture block, and a sixth picture block, wherein sampling formats of the fourth picture block, the fifth picture block, and the sixth picture block are all YUV4:2:0; and
in this case, the enhancement layer picture block comprises the fourth picture block as the picture block of the first-layer enhancement layer, the fifth picture block as the picture block of the second-layer enhancement layer, and the sixth picture block as the picture block of the third-layer enhancement layer.

11. The method according to claim 6, further comprising:
splicing a luma component of the picture block with each of the sixth UV picture block and the seventh UV picture block to obtain a seventh picture block and an eighth picture block, wherein sampling formats of the seventh picture block and the eighth picture block are both YUV4:2:0; and
in this case, the enhancement layer picture block comprises the seventh picture block as the picture block of the first-layer enhancement layer and the eighth picture block as the picture block of the second-layer enhancement layer.

12. The method according to claim 7, further comprising:
splicing a luma component of the picture block with the eighth UV picture block to obtain a ninth picture block, wherein a sampling format of the ninth picture block is YUV4:2:0; and
in this case, the enhancement layer picture block comprises the ninth picture block.

13. The method according to claim 1, wherein a sampling format of the base layer picture block is YUV4:2:2, and the enhancement layer picture block is either a UV22 picture block or a UV11 picture block.

14. The method according to any one of claims 1 to 13, wherein the performing encoding based on the enhancement layer picture block to obtain an enhancement layer bitstream comprises:
obtaining a base layer reconstructed block and/or base layer encoding information that correspond/corresponds to the base layer picture block;
predicting the enhancement layer picture block based on the base layer reconstructed block and/or the base layer encoding information to obtain an enhancement layer residual; and
performing encoding based on the enhancement layer residual to obtain the enhancement layer bitstream.

15. The method according to claim 8 or 9, further comprising:
obtaining phase sampling information, wherein the phase sampling information comprises information indicating a location of the fifth pixel and a location of the sixth pixel; and
encoding the phase sampling information.

16. The method according to any one of claims 1 to 15, wherein a pixel comprised in a second chroma component of the enhancement layer picture block does not overlap a pixel comprised in a second chroma component of the base layer picture block.

17. The method according to claim 16, wherein the first chroma component is a component U, and the second chroma component is a component V; or the first chroma component is a component V, and the second chroma component is a component U.

18. A picture decoding method, comprising:
obtaining a base layer bitstream and an enhancement layer bitstream;
parsing the base layer bitstream to obtain a base layer reconstructed block, wherein a dimension of the base layer reconstructed block is 2×2, and a chroma sampling rate of the base layer reconstructed block is higher than or equal to that of YUV4:2:0;
parsing the enhancement layer bitstream to obtain an enhancement layer reconstructed block, wherein a pixel comprised in a first chroma component of the enhancement layer reconstructed block does not overlap a pixel comprised in a first chroma component of the base layer reconstructed block, and the pixel comprised in the first chroma component of the enhancement layer reconstructed block does not overlap the pixel comprised in the first chroma component of the base layer reconstructed block; and
obtaining a target reconstructed block based on the base layer reconstructed block and the enhancement layer reconstructed block, wherein a chroma sampling rate of the target reconstructed block is higher than the chroma sampling rate of the base layer picture block.

19. The method according to claim 18, wherein the obtaining a target reconstructed block based on the base layer reconstructed block and the enhancement layer reconstructed block comprises:
splicing a chroma component of the base layer reconstructed block with the enhancement layer reconstructed block to obtain the target reconstructed block, wherein a first pixel in a first chroma component of the target reconstructed block is obtained based on a second pixel in the first chroma component of the base layer reconstructed block, and a sampling format of the base layer reconstructed block is YUV4:2:0.

20. The method according to claim 19, wherein a location of the first pixel is preset; and
a chroma value of the first pixel is a chroma value of the second pixel; or a chroma value of the first pixel is obtained by performing inverse average calculation based on a chroma value of the second pixel.

21. The method according to claim 19 or 20, wherein the enhancement layer reconstructed block is a UV33 reconstructed block; or the enhancement layer reconstructed block comprises a UV11 reconstructed block as a reconstructed block of a first enhancement layer and a UV22 reconstructed block as a reconstructed block of a second enhancement layer; or the enhancement layer reconstructed block comprises a UV11 reconstructed block as a reconstructed block of a first enhancement layer, a UV11 reconstructed block as a reconstructed block of a second enhancement layer, and a UV11 reconstructed block as a reconstructed block of a third enhancement layer.

22. The method according to claim 18, wherein the obtaining a target reconstructed block based on the base layer reconstructed block and the enhancement layer reconstructed block comprises:
splicing a chroma component of the base layer reconstructed block with the enhancement layer reconstructed block to obtain a first reconstructed block, wherein a sampling format of the first reconstructed block is YUV4:2:2, and a sampling format of the base layer reconstructed block is YUV4:2:0; and
upsampling a chroma component of the first reconstructed block to obtain the target reconstructed block, wherein a third pixel and a fourth pixel in a first chroma component of the target reconstructed block are obtained based on a fifth pixel and a sixth pixel in a first chroma component of the first reconstructed block.

23. The method according to claim 22, wherein the third pixel and the fourth pixel are two pixels at preset locations in different rows.

24. The method according to claim 22, further comprising:
performing decoding to obtain phase sampling information, wherein the phase sampling information comprises information indicating a location of the third pixel and a location of the fourth pixel; and
determining the third pixel and the fourth pixel based on the phase sampling information.

25. The method according to any one of claims 22 to 24, wherein a chroma value of the third pixel is a chroma value of the fifth pixel; or a chroma value of the third pixel is a deweighted average value of a chroma value of the fifth pixel and a chroma value of another pixel in a same row as the fifth pixel; or a chroma value of the third pixel is a deweighted average value of a chroma value of the fifth pixel and a chroma value of the sixth pixel; and
a chroma value of the fourth pixel is the chroma value of the sixth pixel; or a chroma value of the fourth pixel is a deweighted average value of the chroma value of the sixth pixel and a chroma value of another pixel in a same row as the sixth pixel.

26. The method according to claim 18, wherein the obtaining a target reconstructed block based on the base layer reconstructed block and the enhancement layer reconstructed block comprises:
obtaining a chroma component of the enhancement layer reconstructed block; and
splicing a chroma component of the base layer reconstructed block with the chroma component of the enhancement layer reconstructed block to obtain the target reconstructed block, wherein a seventh pixel in a first chroma component of the target reconstructed block is obtained based on an eighth pixel in the first chroma component of the base layer reconstructed block, and a sampling format of the base layer reconstructed block is YUV4:2:0.

27. The method according to claim 18, wherein the obtaining a target reconstructed block based on the base layer reconstructed block and the enhancement layer reconstructed block comprises:
obtaining a chroma component of the enhancement layer reconstructed block;
splicing a chroma component of the base layer reconstructed block with the chroma component of the enhancement layer reconstructed block to obtain a second reconstructed block, wherein a sampling format of the second reconstructed block is YUV4:2:2, and a sampling format of the base layer reconstructed block is YUV4:2:0; and
upsampling a chroma component of the second reconstructed block to obtain the target reconstructed block, wherein a ninth pixel and a tenth pixel in a first chroma component of the target reconstructed block are obtained based on an eleventh pixel and a twelfth pixel in a first chroma component of the first reconstructed block.

28. The method according to claim 18, wherein a sampling format of the base layer reconstructed block is YUV4:2:2, and the enhancement layer picture block is either a UV22 reconstructed block or a UV11 reconstructed block.

29. The method according to any one of claims 18 to 28, wherein a pixel comprised in a second chroma component of the enhancement layer picture block does not overlap a pixel comprised in a second chroma component of the base layer picture block.

30. The method according to claim 29, wherein the first chroma component is a component U, and the second chroma component is a component V; or the first chroma component is a component V, and the second chroma component is a component U.

31. An encoding apparatus, comprising:
an obtaining module, configured to obtain a to-be-processed picture block, wherein a dimension of the picture block is 2×2, and a chroma sampling rate of the picture block is higher than that of YUV4:2:0;
a processing module, configured to obtain a base layer picture block and an enhancement layer picture block based on the picture block, wherein a chroma sampling rate of the base layer picture block is lower than the chroma sampling rate of the picture block, and a pixel comprised in a first chroma component of the enhancement layer picture block does not overlap a pixel comprised in a first chroma component of the base layer picture block;
a base layer encoding module, configured to perform encoding based on the base layer picture block to obtain a base layer bitstream; and
an enhancement layer encoding module, configured to perform encoding based on the enhancement layer picture block to obtain an enhancement layer bitstream.

32. The apparatus according to claim 31, wherein the processing module is specifically configured to: downsample a chroma component of the picture block to obtain a first picture block, wherein a sampling format of the first picture block is YUV4:2:0, and a first pixel in a first chroma component of the first picture block is obtained from a second pixel in four pixels comprised in a first chroma component of the picture block; and split the chroma component of the picture block to obtain a first UV picture block, wherein the first UV picture block is one of a UV33 picture block, a UV22 picture block, and a UV11 picture block; and
in this case, the base layer picture block comprises the first picture block, and the enhancement layer picture block comprises the first UV picture block.

33. The apparatus according to claim 32, wherein the second pixel is a pixel at a preset location; and
a chroma value of the first pixel is a chroma value of the second pixel; or a chroma value of the first pixel is an average value of chroma values of the four pixels.

34. The apparatus according to claim 32 or 33, wherein the processing module is further configured to: when the first UV picture block is the UV33 picture block, split the first UV picture block to obtain a second UV picture block and a third UV picture block, wherein the second UV picture block is a UV11 picture block, and the third UV picture block is a UV22 picture block; and
in this case, the enhancement layer picture block comprises the second UV picture block as a picture block of a first-layer enhancement layer and the third UV picture block as a picture block of a second-layer enhancement layer.

35. The apparatus according to claim 34, wherein the processing module is further configured to split the third UV picture block to obtain a fourth UV picture block and a fifth UV picture block, wherein both the fourth UV picture block and the fifth UV picture block are UV11 picture blocks; and
in this case, the enhancement layer picture block comprises the second UV picture block as the picture block of the first-layer enhancement layer, the fourth UV picture block as the picture block of the second-layer enhancement layer, and the fifth UV picture block as a picture block of a third-layer enhancement layer.

36. The apparatus according to claim 32 or 33, wherein the processing module is further configured to: when the first UV picture block is the UV22 picture block, split the first UV picture block to obtain a sixth UV picture block and a seventh UV picture block, wherein
in this case, the enhancement layer picture block comprises the sixth UV picture block as a picture block of a first-layer enhancement layer and the seventh UV picture block as a picture block of a second-layer enhancement layer.

37. The apparatus according to claim 31, wherein the processing module is specifically configured to: downsample a chroma component of the picture block to obtain a second picture block, wherein a sampling format of the second picture block is YUV4:2:2, and a third pixel and a fourth pixel in a first chroma component of the second picture block are obtained from a fifth pixel and a sixth pixel in four pixels comprised in a first chroma component of the picture block; and split a chroma component of the second picture block to obtain a third picture block and an eighth UV picture block, wherein a sampling format of the third picture block is YUV4:2:0, and the eighth UV picture block is a UV11 picture block; and
in this case, the base layer picture block comprises the third picture block, and the enhancement layer picture block comprises the eighth UV picture block.

38. The apparatus according to claim 37, wherein the fifth pixel and the sixth pixel are two pixels at preset locations in different rows; or the fifth pixel and the sixth pixel are two pixels with a largest chroma value difference in the four pixels.

39. The apparatus according to claim 37 or 38, wherein a chroma value of the third pixel is a chroma value of the fifth pixel; or a chroma value of the third pixel is a weighted average value of chroma values of two pixels in a same row as the fifth pixel; or a chroma value of the third pixel is a weighted average value of a chroma value of the fifth pixel and a chroma value of the sixth pixel; and
a chroma value of the fourth pixel is the chroma value of the sixth pixel; or a chroma value of the fourth pixel is a weighted average value of chroma values of two pixels in a same row as the sixth pixel.

40. The apparatus according to claim 35, wherein the processing module is configured to splice a luma component of the picture block with each of the second UV picture block, the fourth UV picture block, and the fifth UV picture block to obtain a fourth picture block, a fifth picture block, and a sixth picture block, wherein sampling formats of the fourth picture block, the fifth picture block, and the sixth picture block are all YUV4:2:0; and
in this case, the enhancement layer picture block comprises the fourth picture block as the picture block of the first-layer enhancement layer, the fifth picture block as the picture block of the second-layer enhancement layer, and the sixth picture block as the picture block of the third-layer enhancement layer.

41. The apparatus according to claim 36, wherein the processing module is further configured to splice a luma component of the picture block with each of the sixth UV picture block and the seventh UV picture block to obtain a seventh picture block and an eighth picture block, wherein sampling formats of the seventh picture block and the eighth picture block are both YUV4:2:0; and
in this case, the enhancement layer picture block comprises the seventh picture block as the picture block of the first-layer enhancement layer and the eighth picture block as the picture block of the second-layer enhancement layer.

42. The apparatus according to claim 37, wherein the processing module is further configured to splice a luma component of the picture block with the eighth UV picture block to obtain a ninth picture block, wherein a sampling format of the ninth picture block is YUV4:2:0; and
in this case, the enhancement layer picture block comprises the ninth picture block.

43. The apparatus according to claim 31, wherein a sampling format of the base layer picture block is YUV4:2:2, and the enhancement layer picture block is either a UV22 picture block or a UV11 picture block.

44. The apparatus according to any one of claims 31 to 43, wherein the enhancement layer encoding module is specifically configured to: obtain a base layer reconstructed block and/or base layer encoding information that correspond/corresponds to the base layer picture block; predict the enhancement layer picture block based on the base layer reconstructed block and/or the base layer encoding information to obtain an enhancement layer residual; and perform encoding based on the enhancement layer residual to obtain the enhancement layer bitstream.

45. The apparatus according to claim 38 or 39, wherein the base layer encoding module is further configured to: obtain phase sampling information, wherein the phase sampling information comprises information indicating a location of the fifth pixel and a location of the sixth pixel; and encode the phase sampling information.

46. The apparatus according to any one of claims 31 to 45, wherein a pixel comprised in a second chroma component of the enhancement layer picture block does not overlap a pixel comprised in a second chroma component of the base layer picture block.

47. The apparatus according to claim 46, wherein the first chroma component is a component U, and the second chroma component is a component V; or the first chroma component is a component V, and the second chroma component is a component U.

48. A decoding apparatus, comprising:
an obtaining module, configured to obtain a base layer bitstream and an enhancement layer bitstream;
a base layer decoding module, configured to parse the base layer bitstream to obtain a base layer reconstructed block, wherein a dimension of the base layer reconstructed block is 2×2, and a chroma sampling rate of the base layer reconstructed block is higher than or equal to that of YUV4:2:0;
an enhancement layer decoding module, configured to parse the enhancement layer bitstream to obtain an enhancement layer reconstructed block, wherein a pixel comprised in a first chroma component of the enhancement layer reconstructed block does not overlap a pixel comprised in a first chroma component of the base layer reconstructed block, and the pixel comprised in the first chroma component of the enhancement layer reconstructed block does not overlap the pixel comprised in the first chroma component of the base layer reconstructed block; and
a processing module, configured to obtain a target reconstructed block based on the base layer reconstructed block and the enhancement layer reconstructed block, wherein a chroma sampling rate of the target reconstructed block is higher than the chroma sampling rate of the base layer picture block.

49. The apparatus according to claim 48, wherein the processing module is specifically configured to splice a chroma component of the base layer reconstructed block with the enhancement layer reconstructed block to obtain the target reconstructed block, wherein a first pixel in a first chroma component of the target reconstructed block is obtained based on a second pixel in the first chroma component of the base layer reconstructed block, and a sampling format of the base layer reconstructed block is YUV4:2:0.

50. The apparatus according to claim 49, wherein a location of the first pixel is preset; and
a chroma value of the first pixel is a chroma value of the second pixel; or a chroma value of the first pixel is obtained by performing inverse average calculation based on a chroma value of the second pixel.

51. The apparatus according to claim 49 or 50, wherein the enhancement layer reconstructed block is a UV33 reconstructed block; or the enhancement layer reconstructed block comprises a UV11 reconstructed block as a reconstructed block of a first enhancement layer and a UV22 reconstructed block as a reconstructed block of a second enhancement layer; or the enhancement layer reconstructed block comprises a UV11 reconstructed block as a reconstructed block of a first enhancement layer, a UV11 reconstructed block as a reconstructed block of a second enhancement layer, and a UV11 reconstructed block as a reconstructed block of a third enhancement layer.

52. The apparatus according to claim 48, wherein the processing module is specifically configured to: splice a chroma component of the base layer reconstructed block with the enhancement layer reconstructed block to obtain a first reconstructed block, wherein a sampling format of the first reconstructed block is YUV4:2:2, and a sampling format of the base layer reconstructed block is YUV4:2:0; and upsample a chroma component of the first reconstructed block to obtain the target reconstructed block, wherein a third pixel and a fourth pixel in a first chroma component of the target reconstructed block are obtained based on a fifth pixel and a sixth pixel in a first chroma component of the first reconstructed block.

53. The apparatus according to claim 52, wherein the third pixel and the fourth pixel are two pixels at preset locations in different rows.

54. The apparatus according to claim 52, wherein the base layer decoding module is further configured to perform decoding to obtain phase sampling information, wherein the phase sampling information comprises information indicating a location of the third pixel and a location of the fourth pixel; and
the processing module is further configured to determine the third pixel and the fourth pixel based on the phase sampling information.

55. The apparatus according to any one of claims 52 to 54, wherein a chroma value of the third pixel is a chroma value of the fifth pixel; or a chroma value of the third pixel is a deweighted average value of a chroma value of the fifth pixel and a chroma value of another pixel in a same row as the fifth pixel; or a chroma value of the third pixel is a deweighted average value of a chroma value of the fifth pixel and a chroma value of the sixth pixel; and
a chroma value of the fourth pixel is the chroma value of the sixth pixel; or a chroma value of the fourth pixel is a deweighted average value of the chroma value of the sixth pixel and a chroma value of another pixel in a same row as the sixth pixel.

56. The apparatus according to claim 48, wherein the processing module is specifically configured to: obtain a chroma component of the enhancement layer reconstructed block; and splice a chroma component of the base layer reconstructed block with the chroma component of the enhancement layer reconstructed block to obtain the target reconstructed block, wherein a seventh pixel in a first chroma component of the target reconstructed block is obtained based on an eighth pixel in the first chroma component of the base layer reconstructed block, and a sampling format of the base layer reconstructed block is YUV4:2:0.

57. The apparatus according to claim 48, wherein the processing module is specifically configured to: obtain a chroma component of the enhancement layer reconstructed block; splice a chroma component of the base layer reconstructed block with the chroma component of the enhancement layer reconstructed block to obtain a second reconstructed block, wherein a sampling format of the second reconstructed block is YUV4:2:2, and a sampling format of the base layer reconstructed block is YUV4:2:0; and upsample a chroma component of the second reconstructed block to obtain the target reconstructed block, wherein a ninth pixel and a tenth pixel in a first chroma component of the target reconstructed block are obtained based on an eleventh pixel and a twelfth pixel in a first chroma component of the first reconstructed block.

58. The apparatus according to claim 48, wherein a sampling format of the base layer reconstructed block is YUV4:2:2, and the enhancement layer picture block is either a UV22 reconstructed block or a UV11 reconstructed block.

59. The apparatus according to any one of claims 48 to 58, wherein a pixel comprised in a second chroma component of the enhancement layer picture block does not overlap a pixel comprised in a second chroma component of the base layer picture block.

60. The apparatus according to claim 59, wherein the first chroma component is a component U, and the second chroma component is a component V; or the first chroma component is a component V, and the second chroma component is a component U.

61. An encoder, comprising:
one or more processors; and
a non-transitory computer-readable storage medium coupled to the processor and storing a program executed by the processor, wherein when the program is executed by the processor, the encoder is enabled to perform the method according to any one of claims 1 to 17.

62. A decoder, comprising:
one or more processors; and
a non-transitory computer-readable storage medium coupled to the processor and storing a program executed by the processor, wherein when the program is executed by the processor, the decoder is enabled to perform the method according to any one of claims 18 to 30.

63. A non-transitory computer-readable storage medium, comprising program code, wherein the program code is executed by a computer device, to perform the method according to any one of claims 1 to 30.

64. A non-transitory storage medium, comprising a bitstream coded by using the method according to any one of claims 1 to 30.
